(19) Europäisches Patentamt
European Patent Office
Office européen des brevets

(11) **EP 4 422 109 A1**

(12) **EUROPEAN PATENT APPLICATION**

(43) Date of publication:
**28.08.2024   Bulletin 2024/35**

(21) Application number: **24155867.5**

(22) Date of filing: **05.02.2024**

(51) International Patent Classification (IPC):
**H04L 5/00** (2006.01)      **H04W 52/36** (2009.01)

(52) Cooperative Patent Classification (CPC):
**H04L 5/0048; H04L 5/0092; H04W 52/365**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **10.02.2023   US 202363444571 P**
**02.02.2024   US 202418430650**

(71) Applicant: **Acer Incorporated**
**New Taipei City 221 (TW)**

(72) Inventors:
• **LO, Li-Chung**
**c/o Acer Incorporated, New Taipei City 221, Taiwan**
**( R.O.C.) (TW)**
• **LEE, Chien-Min**
**c/o Acer Incorporated, New Taipei City 221, Taiwan**
**( R.O.C.) (TW)**
• **CHEN, Jen-Hsien**
**c/o Acer Incorporated, New Taipei City 221, Taiwan**
**( R.O.C.) (TW)**

(74) Representative: **Haseltine Lake Kempner LLP**
**One Portwall Square**
**Portwall Lane**
**Bristol BS1 6BH (GB)**

(54) **UPLINK TRANSMISSION AND UPLINK RECEPTION WITH MULTIPLE PANELS RELATED METHODS AND USER EQUIPMENT**

(57)      Uplink, named UL, transmission and UL reception with multiple panels (panel#1, panel#2) related methods and user equipment, named UE (UE, UE1, UE2, 4400), are provided. The method includes: receiving a sound reference signal, named SRS, configuration; receiving a configuration for UL; receiving a downlink control information, named DCI; and transmitting one or more UL transmissions according to the DCI. The SRS configuration includes a first SRS resource set, a second SRS resource set, and a usage of the first and second SRS resource sets which is for one of codebook scheme and non-codebook scheme. The configuration for UL indicates a multi-panel transmission scheme. The DCI indicates that a first transmission configuration indicator, named TCI, state is associated with the first SRS resource set and a second TCI state is associated with the second SRS resource set for the multi-panel transmission scheme. The UL transmission includes one or more power headroom reports, named PHRs.

| Receiving a sound reference signal configuration | S710 |
| Receiving a configuration for UL | S720 |
| Receiving a downlink control information | S730 |
| Transmitting UL transmission according to the DCI | S740 |

**FIG. 7**

**Description**

TECHNICAL FIELD

The present disclosure generally relates to uplink (UL) transmission and ULreception with multiple panels related methods and user equipment (UE).

BACKGROUND

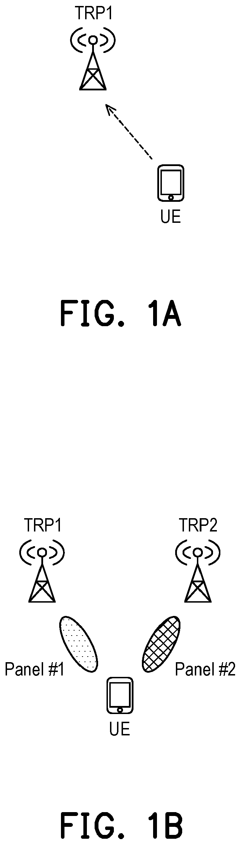

FIG. 1A is a schematic diagram that illustrates a configured power per-cell uplink (UL) power. Referring to FIG. 1A, one UL beam of user equipment (UE) may be configured with a maximum per-cell UL power (e.g., $P_{CMAX}$, c) at a time, so that the UL transmission would be performed with configured limited maximum power.

FIG. 1B is a schematic diagram that illustrates a multi-panel transmission scheme. Referring to FIG. 1B, it should be noticed that, in a multi-TRP operation, for example, with transmission and reception points TRP1 and TRP2, UL transmissions via multiple panels, e.g., Panel#1 and Panel#2 simultaneously may be configured with their respective maximum panel-specific power, e.g., $P_{CMAX, C1}$ and $P_{CMAX, C2}$.

SUMMARY

Accordingly, the present disclosure is directed to uplink (UL) transmission and ULreception with multiple panel-related methods and user equipment (UE).

According to one or more exemplary embodiments of the disclosure, a UL transmission with multiple panels related method is adapted for a UE. The method includes: receiving a sound reference signal (SRS) configuration; receiving a configuration for UL; receiving a downlink control information (DCI); and transmitting one or more UL transmissions according to the DCI. The SRS configuration includes a first SRS resource set, a second SRS resource set, and a usage of the first SRS resource set and the second SRS resource set, and the usage of the first SRS resource set and the second SRS resource set is for one of codebook scheme and non-codebook scheme. The configuration for UL indicates a multi-panel transmission scheme. The DCI indicates that a first transmission configuration indicator (TCI) state is associated with the first SRS resource set and a second TCI state is associated with the second SRS resource set for the multi-panel transmission scheme. The one or more UL transmissions include one or more power headroom reports (PHRs).

According to one or more exemplary embodiments of the disclosure, a UE includes a transceiver, a memory, and a processor. The transceiver is used for transmitting or receiving signals. The memory is used for storing a program code. The processor is coupled to the transceiver and the memory. The processor is configured for executing the program to: receive, through the transceiver, an SRS configuration; receive, through the transceiver, a configuration for UL; receive, through the transceiver, a DCI; and transmit, through the transceiver, one or more UL transmissions according to the DCI. The SRS configuration includes a first SRS resource set, a second SRS resource set, and a usage of the first SRS resource set and the second SRS resource set, and the usage of the first SRS resource set and the second SRS resource set is for one of codebook scheme and non-codebook scheme. The configuration for UL indicates a multi-panel transmission scheme. The DCI indicates that a first TCI state is associated with the first SRS resource set and a second TCI state is associated with the second SRS resource set for the multi-panel transmission scheme. The one or more UL transmissions include one or more PHRs.

According to one or more exemplary embodiments of the disclosure, a ULreception with multiple panels related method is adapted for a network device. The method includes: transmitting an SRS configuration; transmitting a configuration for UL; transmitting a DCI; and receiving one or more UL transmissions according to the DCI. The SRS configuration includes a first SRS resource set, a second SRS resource set, and a usage of the first SRS resource set and the second SRS resource set, and the usage of the first SRS resource set and the second SRS resource set is for one of codebook scheme and non-codebook scheme. The configuration for UL indicates a multi-panel transmission scheme. The DCI indicates that a first TCI state is associated with the first SRS resource set and a second TCI state is associated with the second SRS resource set for the multi-panel transmission scheme. The one or more UL transmissions include one or more PHRs.

To make the aforementioned more comprehensible, several embodiments accompanied with drawings are described in detail as follows.

BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.

FIG. 1A is a schematic diagram that illustrates a configured power per-cell uplink (UL) power.

FIG. 1B is a schematic diagram that illustrates a multi-panel transmission scheme.

FIG. 2A is a schematic diagram that illustrates the physical uplink shared channel (PUSCH) in multiple downlink control information (M-DCI) based on multiple transmission and reception point (TRP) operation.

FIG. 2B is a schematic diagram that illustrates resource collision.

FIG. 2C is a schematic diagram that illustrates PUSCH in single downlink control information (S-DCI) based on multiple TRP operation.

FIG. 2D is a schematic diagram that illustrates resource collision.

FIG. 3A is a schematic diagram that illustrates the spatial division multiplexing (SDM) scheme.

FIG. 3B is a schematic diagram that illustrates a single frequency network (SFN) scheme.

FIG. 4A is a schematic diagram that illustrates a multi-panel transmission scheme with multiple TRP operation.

FIG. 4B is a schematic diagram that illustrates panel-specific power allocation.

FIG. 5A is a schematic diagram that illustrates a multi-panel transmission scheme with high-priority UL transmission.

FIG. 5B is a schematic diagram that illustrates panel-specific power allocation.

FIG. 6 is a schematic diagram that illustrates a radio communication network architecture according to an exemplary embodiment of the present disclosure.

FIG. 7 is a flow chart that illustrates a UL transmission with multiple panels related method according to an exemplary embodiment of the present disclosure.

FIG. 8A is a schematic diagram that illustrates a fixed power splitting according to an exemplary embodiment of the present disclosure.

FIG. 8B is a schematic diagram that illustrates a configurable power splitting according to an exemplary embodiment of the present disclosure.

FIG. 8C is a schematic diagram that illustrates partial power sharing according to an exemplary embodiment of the present disclosure.

FIG. 9A is a schematic diagram that illustrates a multi-panel transmission scheme with multi-TRP operation according to an exemplary embodiment of the present disclosure.

FIG. 9B is a schematic diagram that illustrates flexible power allocation by existing DCI according to an exemplary embodiment of the present disclosure.

FIG. 10 is a schematic diagram that illustrates flexible power allocation by a new DCI field according to an exemplary embodiment of the present disclosure.

FIG. 11A is a schematic diagram that illustrates a multi-panel transmission scheme with multi-TRP operation according to an exemplary embodiment of the present disclosure.

FIG. 11B is a schematic diagram that illustrates the time relationship of power allocation according to an exemplary embodiment of the present disclosure.

FIG. 12A is a schematic diagram that illustrates a multi-panel transmission scheme with multi-TRP operation according to an exemplary embodiment of the present disclosure.

FIG. 12B is a schematic diagram that illustrates the time relationship of power allocation according to an exemplary embodiment of the present disclosure.

FIG. 13A is a schematic diagram that illustrates power-boosting according to an exemplary embodiment of the present disclosure.

FIG. 13B is a schematic diagram that illustrates codepoints for power-boosting according to an exemplary embodiment of the present disclosure.

FIG. 14 is a schematic diagram that illustrates codepoints based on priority according to an exemplary embodiment of the present disclosure.

FIG. 15A is a schematic diagram that illustrates UL transmission without power-boosting according to an exemplary embodiment of the present disclosure.

FIG. 15B is a schematic diagram that illustrates the time relationship of power allocation according to an exemplary embodiment of the present disclosure.

FIG. 16A is a schematic diagram that illustrates UL transmission with power-boosting according to an exemplary embodiment of the present disclosure.

FIG. 16B is a schematic diagram that illustrates the time relationship of power allocation according to an exemplary embodiment of the present disclosure.

FIG. 17A is a schematic diagram that illustrates UL transmission without power-boosting according to an exemplary embodiment of the present disclosure.

FIG. 17B is a schematic diagram that illustrates the time relationship of power allocation according to an exemplary embodiment of the present disclosure.

FIG. 18A is a schematic diagram that illustrates UL transmission with power-boosting according to an exemplary embodiment of the present disclosure.

FIG. 18B is a schematic diagram that illustrates the time relationship of power allocation according to an exemplary embodiment of the present disclosure.

FIG. 19A is a schematic diagram that illustrates multi-TRP operation according to an exemplary embodiment of the present disclosure.

FIG. 19B is a schematic diagram that illustrates single-TRP operation due to one TRP off according to an exemplary embodiment of the present disclosure.

FIG. 20A is a schematic diagram that illustrates a multi-panel transmission scheme with multi-TRP operation according to an exemplary embodiment of the present disclosure.

FIG. 20B is a schematic diagram that illustrates flexible power allocation by search space set (SSS) group switching according to an exemplary embodiment of the present disclosure.

FIG. 21A is a schematic diagram that illustrates power allocation for one group according to an exemplary embodiment of the present disclosure.

FIG. 21B is a schematic diagram that illustrates power allocation for another group according to an exemplary embodiment of the present disclosure.

FIG. 22A is a schematic diagram that illustrates a physical downlink control channel (PDCCH) monitoring adaption indication according to an exemplary embodiment of the present disclosure.

FIG. 22B is a schematic diagram that illustrates the time relationship of PDCCH monitoring according to an exemplary embodiment of the present disclosure.

FIG. 23A is a schematic diagram that illustrates an indicated DCI associated with the first control resource set (CORSET) pool index according to an exemplary embodiment of the present disclosure.

FIG. 23B is a schematic diagram that illustrates an indicated DCI associated with the second CORSET pool index according to an exemplary embodiment of the present disclosure.

FIG. 24A is a schematic diagram that illustrates single-TRP operation due to one TRP off according to an exemplary embodiment of the present disclosure.

FIG. 24B is a schematic diagram that illustrates the time relationship of power allocation according to an exemplary embodiment of the present disclosure.

FIG. 24C is a schematic diagram that illustrates the triggering of the power headroom report according to an exemplary embodiment of the present disclosure.

FIG. 25A is a schematic diagram that illustrates a multi-panel transmission scheme with multi-TRP operation according to an exemplary embodiment of the present disclosure.

FIG. 25B is a schematic diagram that illustrates a configuration of medium access control (MAC) control element (CE) according to an exemplary embodiment of the present disclosure.

FIG. 26A is a schematic diagram that illustrates the triggering of the power headroom report according to an exemplary embodiment of the present disclosure.

FIG. 26B is a schematic diagram that illustrates a configuration of MAC CE according to an exemplary embodiment of the present disclosure.

FIG. 27A is a schematic diagram that illustrates a multi-panel transmission scheme with multi-TRP operation according to an exemplary embodiment of the present disclosure.

FIG. 27B is a schematic diagram that illustrates a configuration of MAC CE according to an exemplary embodiment of the present disclosure.

FIG. 28A is a schematic diagram that illustrates the triggering of the power headroom report according to an exemplary embodiment of the present disclosure.

FIG. 28B is a schematic diagram that illustrates a configuration of MAC CE according to an exemplary embodiment of the present disclosure.

FIG. 29A is a schematic diagram that illustrates power allocation with multiple pairs according to an exemplary embodiment of the present disclosure.

FIG. 29B is a schematic diagram that illustrates flexible power allocation by a configured periodic time pattern according to an exemplary embodiment of the present disclosure.

FIG. 30A is a schematic diagram that illustrates flexible power allocation for a time pattern according to an exemplary embodiment of the present disclosure.

FIG. 30B is a schematic diagram that illustrates candidate pair lists according to an exemplary embodiment of the present disclosure.

FIG. 30C is a schematic diagram that illustrates a configuration of MAC CE for time patterns according to an exemplary embodiment of the present disclosure.

FIG. 31A is a schematic diagram that illustrates flexible power allocation with a flexible time pattern according to an exemplary embodiment of the present disclosure.

FIG. 31B is a schematic diagram that illustrates candidate pair lists according to an exemplary embodiment of the present disclosure.

FIG. 32A is a schematic diagram that illustrates a configuration of MAC CE for periodic time patterns according to an exemplary embodiment of the present disclosure.

FIG. 32B is a schematic diagram that illustrates a configuration of MAC CE for candidate pair lists according to an exemplary embodiment of the present disclosure.

FIG. 33 is a schematic diagram that illustrates the mapping table of codepoint and time patterns according to an exemplary embodiment of the present disclosure.

FIG. 34A is a schematic diagram that illustrates a multi-panel transmission scheme with multi-TRP operation and priority order according to an exemplary embodiment of the present disclosure.

FIG. 34B is a schematic diagram that illustrates the issue of power allocation according to an exemplary embodiment of the present disclosure.

FIG. 35 is a schematic diagram that illustrates the channel priority order of power allocation according to an exemplary embodiment of the present disclosure.

FIG. 36A is a schematic diagram that illustrates a multi-panel transmission scheme with multi-TRP operation and priority order according to an exemplary embodiment of the present disclosure.

FIG. 36B is a schematic diagram that illustrates power reduction according to an exemplary embodiment of the present disclosure.

FIG. 37A is a schematic diagram that illustrates power adjustment according to an exemplary embodiment of the present disclosure.

FIG. 37B is a schematic diagram that illustrates the power reduction of low-priority UL transmission according to an exemplary embodiment of the present disclosure.

FIG. 38A is a schematic diagram that illustrates power adjustment according to an exemplary embodiment of the present disclosure.

FIG. 38B is a schematic diagram that illustrates equal power reduction according to an exemplary embodiment of the present disclosure.

FIG. 39A is a schematic diagram that illustrates power adjustment according to an exemplary embodiment of the present disclosure.

FIG. 39B is a schematic diagram that illustrates weighted equal power reduction according to an exemplary embodiment of the present disclosure.

FIG. 40 is a flow chart that illustrates power allocation according to an exemplary embodiment of the present disclosure.

FIG. 41 is a schematic diagram that illustrates equal power reduction according to an exemplary embodiment of the present disclosure.

FIG. 42 is a flow chart that illustrates the priority order of allocated power according to an exemplary embodiment of the present disclosure.

FIG. 43 is a flow chart that illustrates an UL reception with multiple panels related method according to an exemplary embodiment of the present disclosure.

FIG. 44 is a block diagram that illustrates a communication device according to an exemplary embodiment of the present disclosure.

DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

The abbreviations in the present disclosure are defined as follows and unless otherwise specified, the acronyms have the following meanings:

| Abbreviation | Full name |
| --- | --- |
| ACK | Acknowledgment |
| CRC | Cyclic Redundancy Check |
| CS | Configured Scheduling |
| CSI | Channel State Information |
| CSI-RS | Channel State Information reference signal |
| CORESET | Control Resource Set |
| CPE | Customer Premises Equipment |

(continued)

| Abbreviation | Full name |
|---|---|
| DCI | Downlink Control Information |
| DG | Dynamic Grant |
| DM-RS | Demodulation Reference Signal |
| DL | Downlink |
| eMBB | enhanced Mobile Broadband |
| FWA | Fixed Wireless Access Network |
| gNodeB(gNB) | next Generation Node B |
| HARQ | Hybrid Automatic Repeat request |
| ID | Identity |
| MAC | Medium Access Control |
| MAC CE | MAC Control Element |
| MCS | Modulation Coding Scheme |
| mDCI(M-DCI) | multiple DCI |
| MIMO | Multiple Input Multiple Output |
| mTRP(M-TRP) | multiple TRP |
| NR | New Radio |
| NW | Network |
| OLPC | Open-Loop Power Control |
| PDCCH | Physical Downlink Control Channel |
| PDSCH | Physical Downlink Shared Channel |
| PUCCH | Physical Uplink Control Channel |
| PRACH | Physical Random Access Channel |
| PUSCH | Physical Uplink Shared channel |
| QCL | Quasi Co-Located |
| RNTI | Radio Network Temporary Identifier |
| RRC | Radio Resource Control |
| RS | Reference Signal |
| Rx beam | Receiving Beam |
| SDM | Spatial Division Multiplexing |
| SFN | Single Frequency Network |
| SRS | Sound(ing) Reference Signal |
| STxMP | Simultaneous Multi-Panel |
| SS | Search Space |
| SSB | Synchronization Signal Block |
| SSS | Search Space Set |
| SSSG | SSS group |
| SPS | Semi-Persistent Scheduling |
| sTRP(S-TRP) | single TRP |
| TCI | Transmission Configuration Indicator |
| TPC | Transmission Power Control |
| TRP | Transmission Reception Point |
| Tx beam | Transmission Beam |
| UE | User Equipment |
| UL | Uplink |
| WID | Working Item Description |
| SINR | Signal to Interference Noise Ratio |

Some related technologies are introduced first.

RS in this disclosure may be DL RS and/or UL RS.

A DL RS configuration in this disclosure may be:

a DM-RS group;
a DM-RS group index;
a DM-RS resource;
a DM-RS resource index;
a DM-RS port index;
a DM-RS port;
a CSI-RS resource set index;
a CSI-RS resource set;
a CSI-RS resource index;
a CSI-RS resource;
a CSI-RS port index;
a CSI-RS port;
an SSB resource set index;
an SSB resource set;
an SSB resource index;
an SSB resource;
an SSB port index;
an SSB port;

..., but not limited herein.

A UL RS configuration in the disclosure may be:

a DM-RS group;
a DM-RS group index;
a DM-RS resource;
a DM-RS resource index;
a DM-RS port index;
a DM-RS port;
a RACH group;
a RACH group index;
a RACH resource;
a RACH resource index;
a SRS resource set index;
a SRS resource set;
a SRS resource index;
a SRS resource;
a SRS port index;
a SRS port;

..., but not limited herein.

A CSI-RS in this disclosure may be:

a CSI-RS resource set index;
a CSI-RS resource set;
a CSI-RS resource index;
a CSI-RS resource;
a CSI-RS port index;
a CSI-RS port;

... but not limited herein.

An SSB in this disclosure may be:

an SSB resource set index;
an SSB resource set;
an SSB resource index;
an SSB resource;
an SSB port index;
an SSB port;

... but not limited herein.

A SRS in this disclosure may be:

a SRS resource set index;
a SRS resource set;
a SRS resource index;
a SRS resource;
a SRS port index;
a SRS port;

..., but not limited herein.

A beam in this disclosure may be represented by:

an antenna;
an antenna port;
an antenna element;
a group of antenna;
a group of antenna port;
a group of antenna element;
a spatial domain filter;
a reference signal resource;
a QCL assumption;

..., but not limited herein.

For example, a first beam may be represented as a first antenna port or a first group of antenna ports, or a first spatial domain filter.

For example, a first beam direction may be represented as a QCL assumption or a spatial domain filter.

The relation among $\alpha 1$, $\alpha 2$, and $\alpha$ in this disclosure may be:

$$\alpha 1 + \alpha 2 = 1;$$

$$\alpha 1 = \alpha;$$

$$\alpha 2 = 1 - \alpha;$$

$$\alpha 2 = \alpha;$$

$$\alpha 1 = 1 - \alpha;$$

$$\alpha 1 + \alpha 2 > 1;$$

$$0 \leq \alpha \leq 1;$$

$$0 \leq \alpha 1 \leq 1;$$

$$0 \leq \alpha 2 \leq 1;$$

..., but not limited herein.

A spatial domain filter in configuration in this disclosure may be:

a spatial Rx filter;
a spatial Tx filter;

..., but not limited herein.

A spatial Rx filter in configuration in this disclosure may be

a Rx beam;
a spatial Rx parameter;
a spatial domain receive filter;
a panel;

..., but not limited herein.

A spatial Tx filter in configuration in this disclosure may be

a Tx beam;
a spatial Tx parameter;
a spatial domain transmission filter;
a panel;

..., but not limited herein.

A TRP (e.g., transmission reception point) in this disclosure may be:

a value of CORESETPoolIndex;
a group;
a capability index;
a cell;
a serving cell;
a gNodeB (e.g., next Generation Node B);
a panel;
an unlicensed cell;
an unlicensed serving cell;
an unlicensed TRP;
a gNodeB;
an eNodeB (evolved NodeB);
an eNB;

..., but not limited herein.

CORESETpoolIndex in this disclosure may be Search Space Set Group (SSSG), Search Space Group (SSG), CORESET, CORESET group, but not limited herein.

Configured grant configuration in this disclosure may be:

configured grant;
configuredGrantConfigIndex;

..., but not limited herein.

A codepoint in this disclosure may be:

index;
value;
identity;

..., but not limited herein.

PUSCH antenna port in this disclosure may be:
DM-RS port of a PUSCH;
..., but not limited herein.

An index or an identity in this disclosure may be:

CORESETPoolIndex;

TRP ID;
Panel ID;

..., but not limited herein.

In this disclosure, UE may be configured with at least one of following for multiple TRP operation:

a set of CORESETPoolIndex;
a set of TRP;
a set of panel;

..., but not limited herein.

A L1 based beam updating in this disclosure may be:

unified beam updating;
common beam updating;
unified TCI framework;

..., but not limited herein.

A PUSCH in this disclosure may be (replaced by):

PDSCH;
DL assignment;
UL grant;
dynamic grant;
SPS scheduling;
Configured grant;

..., but not limited herein.

A value of CORESTPoolIndex in this disclosure may be a TCI state ID, QCL assumption, Joint/DL/UL TCI state, panel index, capability index, COREST group index, CORESET, PDCCH, search space set, search space set group, PDCCH, DCI, DCI format, ..., but not limited herein.

A cell in this disclosure may be a serving cell, a carrier or a CC (component carrier), a serving cell, MCG (master cell group), SCG (second cell group)..., but not limited herein.

"Configured" in this disclosure may be default/predefined/fixed/configured/activated/indicated, ..., but not limited herein.

RRC in this disclosure may be replaced by MAC CE, DCI, ..., but not limited herein.

Power in this disclosure may be maximum output power, EIRP (Effective Isotropic Radiated Power), Total Radiated Power, Radiated Power, Min peak EIRP, Max EIRP, Max Total Radiated Power, Spherical coverage, Configured transmitted power, P-max, maximum total transmit power, Power class, ..., but not limited herein.

UL transmission in this disclosure may be PUSCH, PUCCH, PRACH, SRS, RS.

A panel or a TRP in this disclosure may be (associated with) a joint/DL/UL TCI state, a TCI state group, a capacity index, a CORESET group, or a value of CORESETPoolIndex.

Communication device in this disclosure may be represented by UE, or gNodeB, but not limited herein.

Combinations of embodiments disclosed in this disclosure is not precluded.

All steps in the embodiment may not be performed in a step-by-step way.

Embodiments disclosed in this disclosure may apply for unlicensed band, licensed band, non-DRX mode, DRX mode, or power saving, but not limited herein.

A UL transmission power $P(q_{PL}, i, j)$ with index j in transmission occasion i for a cell C as:

$$P(q_{PL}, i, j) = \min \begin{cases} P_{CMAX,C} \\ P_0(j) + \alpha \cdot PL(q_{PL}) + 10log_{10}\{2^{\mu}M_{RB}(i)\} + \Delta_{TF}(i) + f(i) \end{cases} [dBm] \dots (1),$$

where $P_{CMAX,C}$ is a configured maximum allowed transmission power per cell, $P_0(j)$ is a target received power at gNB side, $\alpha$ is a fractional power control factor, $PL(q_{PL})$ is DL path loss estimate $PL(q_{PL})$ calculated by the UE using PL-RS resource index, e.g., $q_{PL}$, $f(i)$ is a transmission power control (TPC) command, $M_{RB}(i)$ is the number of allocated resource blocks, and $\Delta_{TF}(i)$ is MCS-related power adjustment (the more bits per resource element, the higher value of $\Delta_{TF}(i)$). The part "$P_0(j) + \alpha \cdot PL(q_{PL})$" is related to open-loop power control, and the part " $10log_{10}\{2^{\mu}M_{RB}(i)\} + \Delta_{TF}(i) + f(i)$" is related to closed-loop power control. Regarding $M_{RB}(i)$ and $\Delta_{TF}(i)$, the maximum number of information bits may be limited by $P_{CMAX,C}$ if other factors remain fixed.

A UL transmission power $P(q_{PL}, i, j, C, n)$ with index j in transmission occasion i for a cell C at panel n as:

$$P(q_{PL}, i, j, C, n) =$$

$$\min \begin{cases} P_{CMAX,Cn} \\ P_0(j) + \alpha \cdot PL(q_{PL}) + 10log_{10}\{2^{\mu}M_{RB}(i)\} + \Delta_{TF}(i) + f(i) \end{cases} [\text{dBm}] \dots (2),$$

where $P_{CMAX,Cn}$ may be configured/activated/indicated by RRC/MAC CE/DCI. $P_{CMAX,Cn}$ may be associated with at least one TCI state (e.g., TCI state ID n') and/or at least one RS (e.g., RS ID n"). If UE performs a UL transmission with spatial relation associated with a TCI state ID n' or a RS ID n", UE may transmit the UL transmission with $P_{CMAX,Cn}$.

In one embodiment, the first configured maximum output power corresponds to the first TCI state, and the second configured maximum output power corresponds to the second TCI state. For example, $P_{CMAX,C1}$ corresponds to the TCI state ID 1, and $P_{CMAX,C2}$ corresponds to the TCI state ID 2.

In one embodiment, the first UL transmission power corresponds to the first indicated TCI state, and the second UL transmission power corresponds to the second indicated TCI state. For example, $P_1$ corresponds to the TCI state ID 1, and $P_2$ corresponds to the TCI state ID 2.

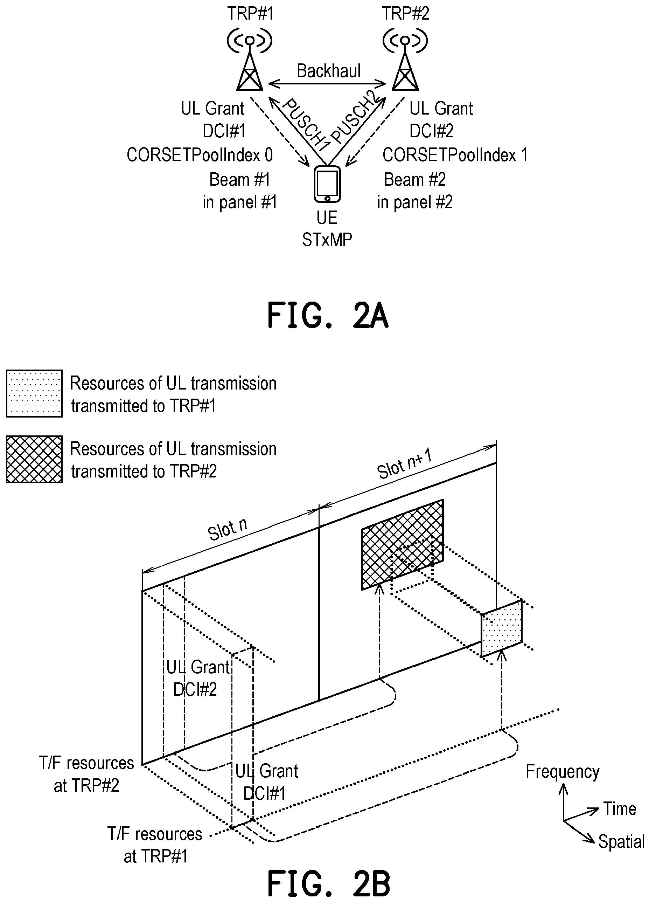

FIG. 2A is a schematic diagram that illustrates physical uplink shared channel (PUSCH) in multiple downlink control information (M-DCI) based multiple transmission and reception point (TRP) operation. Referring to FIG. 2A, in multi-TRP operation, each DCI from the corresponding TRP may grant the corresponding PUSCH, where each DCI may be associated with a value of CORSETPoolIndex. For example, UL grant DCI #1 from TRP#1 via beam #1 in panel #1 is associated with CORSETPoolIndex 0, and UL grant DCI #2 from TRP#2 via beam #2 in panel #2 is associated with CORSETPoolIndex 1.

FIG. 2B is a schematic diagram that illustrates resource collision. Referring to FIG. 2A and 2B, T/F resources for two TRPs are indicated by two DCIs, respectively. Time/frequency (T/F) resources of UL transmissions transmitted to TRP#1 and TRP#2 may be overlapped partially or be not overlapped.

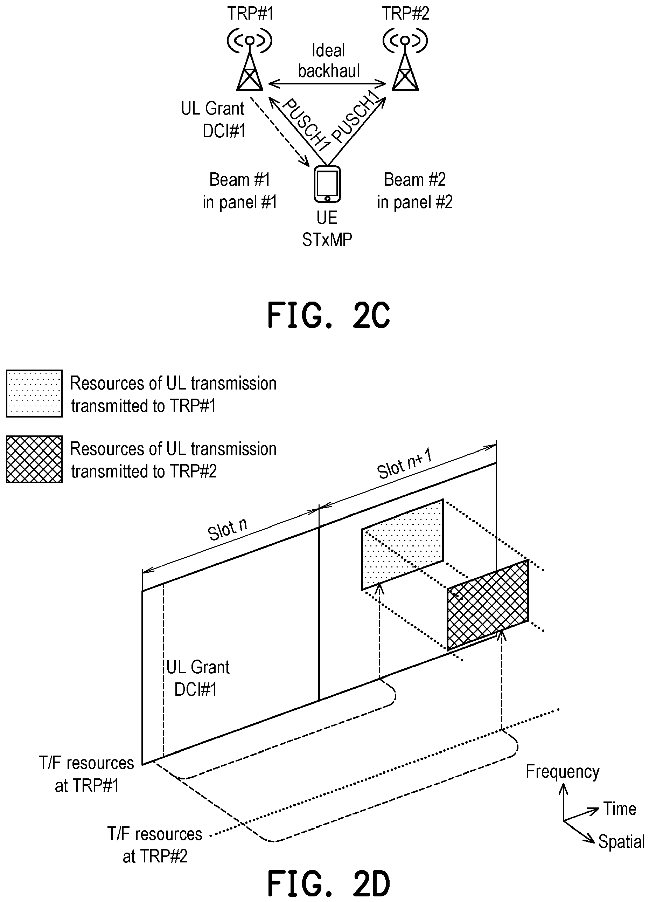

FIG. 2C is a schematic diagram that illustrates PUSCH in single downlink control information (S-DCI) based multiple TRP operation. Referring to FIG. 2C, a single DCI may grant PUSCH transmitted simultaneously to multiple TRPs from different UE panels. Taking FIG. 2C as an example, UL grant DCI#1 indicates PUSCH transmissions on beam #1 in panel #1 to TRP#1 and beam #2 in panel #2 to TRP#2, respectively.

FIG. 2D is a schematic diagram that illustrates resource collision. Referring to FIG. 2C and FIG. 2D, T/F resources of UL transmissions transmitted to TRP#1 and TRP#2 may be overlapped fully as shown in FIG. 2D. However, the spatial resources would be distinguished by different beams.

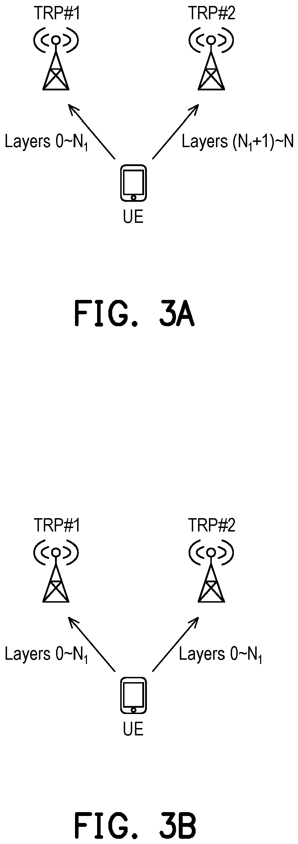

FIG. 3A is a schematic diagram that illustrates the spatial division multiplexing (SDM) scheme. Referring to FIG. 3A, in the SDM scheme, different layers/DMRS ports of one PUSCH may be separately precoded and transmitted from different UE panels simultaneously. Therefore, the spatial multiplexing gain would be enhanced.

For spatial diversity gain, PUSCH may be separate demodulation at each TRP, or joint demodulation at both TPRs. For example, FIG. 3B is a schematic diagram that illustrates a single frequency network (SFN) scheme. Referring to FIG. 3B, in the SFN-based transmission scheme, all of the same layers/DMRS ports of one PUSCH may be transmitted from two different UE panels simultaneously.

The multi-DCI based STxMP PUSCH and PUSCH transmissions may support fully/partially/non-overlapping in frequency domain and fully/partially overlapping in time domain, for example, as shown in FIG. 2B and FIG. 2D. There are some scenarios that would be met. Handle the PUSCH power adjustment when two PUSCHs are fully/partially overlapped in time domain. No symbol-level power adjustment within a PUSCH transmission occasion in the case of fully/partially overlapping in time domain.

For example, for STxMP, a first UL transmission (e.g., first PUSCH) and/or a second UL transmission (e.g., second PUSCH) in e.g., multi-DCI based system:

the first UL transmission (e.g., firstPUSCH) and the second UL transmission (e.g., second PUSCH) may be transmitted simultaneously in a same CC/BWP;
two independent PUSCHs associated with different TRPs may be transmitted by a UE simultaneously in same active BWP;
the total number of layers of these two PUSCHs may be up to 4;
the number of layers of each of these two PUSCHs may be up to 2;
UE may be configured with two SRS resource sets for codebook based UL transmission or non-codebook based UL transmission:

wherein each SRS resource set may be associated with a value of coresetPoolIndex,

the first SRS resource set may be associated with coresetPoolIndex value 0 and the other SRS resource set may be associated with coresetPoolIndex value 1,
the PUSCH may be associated with SRS resource set with the same value of coresetPoolIndex,
the first SRS resource set, e.g., the set with lower set ID, and
the second SRS resource set, e.g., the set with non lower set ID;

where UE may be configured/indicated with the maximal number of SRS resources in each set for codebook based UL transmission or non-codebook based UL transmission;
where UE may be configured/indicated with the maximal number of SRS ports in each set for codebook based UL transmission or non-codebook based UL transmission. The first UL transmission (e.g., first PUSCH) and/or the second UL transmission(e.g., second PUSCH) may be configured grant or dynamic grant indicated by DCI.

For the SRI/TPMI field in DCI:

for DG-PUSCH, the indicated SRI/TPMI field corresponds to the SRS resource set associated with same coreset-PoolIndex value of the CORESET where scheduling DCI format 0_1 or 0_2 may be received;
for Type 2 CG-PUSCH, the indicated SRI/TPMI field corresponds to the SRS resource set associated with same coresetPoolIndex value of the CORESET where activation DCI may be received;
for Type 1 CG-PUSCH, one SRS_resource_set_index value may be configured in RRC in ConfiguredGrantConfig and the srs-ResourceIndicator/precodingAndNumberOfLayers correspond to the SRS resource set.

UE may disable (e.g., not expect) that the first UL transmission is PUSCH (or PUCCH) and second UL transmission is PUCCH (or PUSCH), respectively.

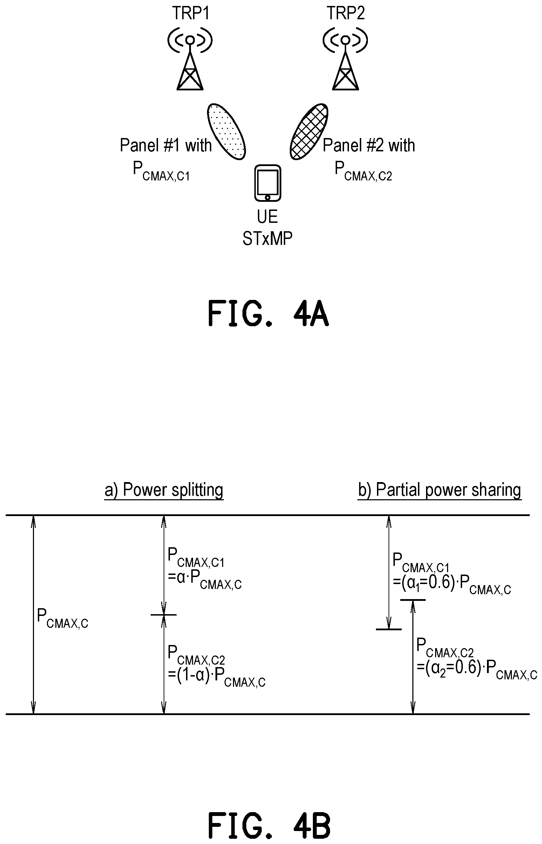

FIG. 4A is a schematic diagram that illustrates a multi-panel transmission scheme with multiple TRP operation. Referring to FIG. 4A, a UE may be configured with at least one value of maximum output power per cell, e.g.,

$P_{CMAX,C}$ : Total maximum output power e.g., per cell;
$P_{CMAX,C1}$: Maximum output power associated with e.g., panel#1;
$P_{CMAX,C2}$: Maximum output power associated with e.g., panel#2.

FIG. 4B is a schematic diagram that illustrates panel-specific power allocation. Referring to FIG. 4B, UE may be configured with at least one panel specific power allocation, e.g.,

Power splitting mode : $P_{CMAX,C1} + P_{CMAX,C2} = P_{CMAX,C}$, for example, $\alpha \cdot P_{CMAX,C} + (1- \alpha) \cdot P_{CMAX,C} = P_{CMAX,C}$;
Partial Power sharing mode : $P_{CMAX,C1} + P_{CMAX,C2} > P_{CMAX,C}$, for example, $0.6 \cdot P_{CMAX,C} + 0.6 \cdot P_{CMAX,C} > P_{CMAX,C}$.

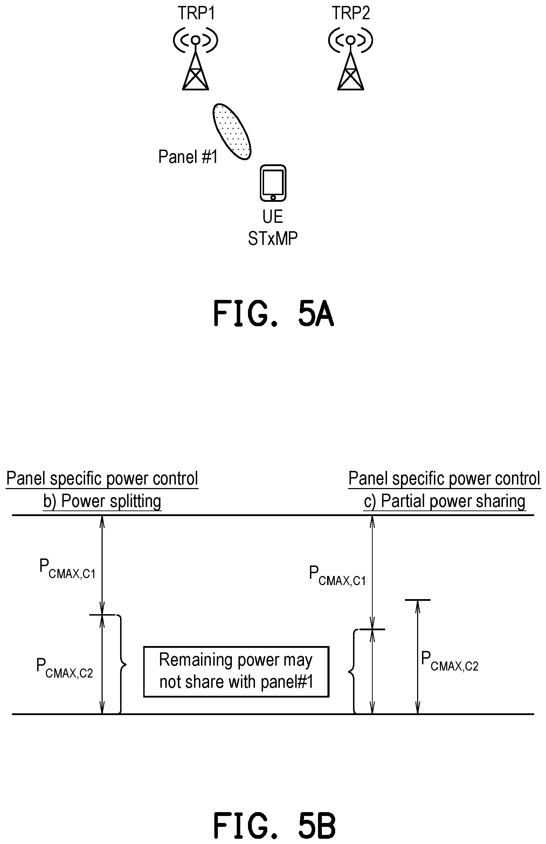

FIG. 5A is a schematic diagram that illustrates a multi-panel transmission scheme with high-priority UL transmission. Referring to FIG. 5A, if the setting of panel specific $P_{CMAX,Cn}$ (e.g., n=1, or 2) is same as per-cell $P_{CMAX,C}$, i.e., semi-static configuration, the following situations may be met:

reliability loss: e.g., limited SINR with high priority UL transmission to TRP1;
efficiency loss: e.g., restricted allocated resource block and MCS level with unbalance UL traffic loading.

FIG. 5B is a schematic diagram that illustrates panel-specific power allocation. Referring to FIG. 5B, in the power splitting scheme and the partial power power sharing scheme, the remaining power of transmission power may not share with panel#1.

How to support flexible allocation of UL transmission power for STxMP with following scenarios may be needed:

e.g., M-DCI (e.g., with ideal or non-ideal backhaul);
TRP on/off for e.g., NW energy saving.

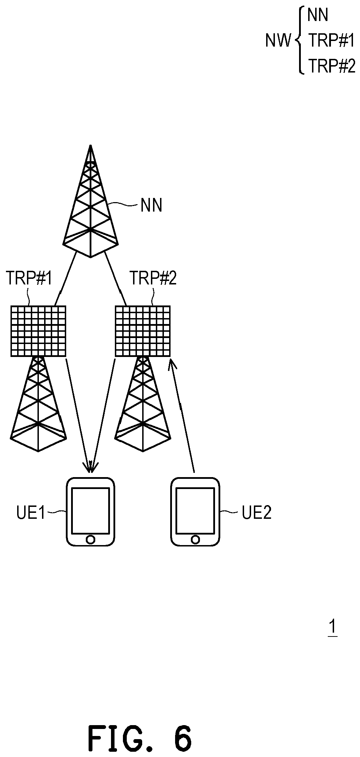

FIG. 6 is a schematic diagram that illustrates a radio communication network architecture according to an exemplary embodiment of the present disclosure. Referring to FIG. 6, a radio communication network architecture (e.g., a Long Term Evolution (LTE) system, an LTE-Advanced (LTE-A) system, an LTE-Advanced Pro system, or a 5G NR Radio Access Network (RAN)) typically includes at least one base station (BS) NW, at least one UE, such as UE1 and UE2, and one or more optional network elements that provide connection towards a network. The UE1 and UE2 communicate with the network (e.g., a Core Network (CN), an Evolved Packet Core (EPC) network, an Evolved Universal Terrestrial Radio Access Network (E-UTRAN), a 5G Core (5GC), or an internet), through a RAN established by one or more base stations.

It should be noted that, in the present disclosure, UE1 or UE2 may include, but is not limited to, a mobile station, a mobile terminal or device, or a user communication radio terminal. For example, UE1 or UE2 may be a portable radio equipment, which includes, but is not limited to, a mobile phone, a tablet, a wearable device, a sensor, a vehicle, or a Personal Digital Assistant (PDA) with wireless communication capability. The UE1 or UE2 is configured to receive and transmit signals over an air interface to one or more cells in a radio access network.

A base station NW may be configured to provide communication services according to at least one of the following Radio Access Technologies (RATs): Worldwide Interoperability for Microwave Access (WiMAX), Global System for Mobile communications (GSM, often referred to as 2G), GSM Enhanced Data rates for GSM Evolution (EDGE) Radio Access Network (GERAN), General Packet Radio Service (GPRS), Universal Mobile Telecommunication System (UMTS, often referred to as 3G) based on basic wideband-code division multiple access (W-CDMA), high-speed packet access (HSPA), LTE, LTE-A, eLTE (evolved LTE, e.g., LTE connected to 5GC), NR (often referred to as 5G), and/or LTE-A Pro. However, the scope of the present disclosure should not be limited to the above-mentioned protocols.

A base station NW may include, but is not limited to, a node B (NB) as in the UMTS, an evolved node B (eNB) as in the LTE or LTE-A, a radio network controller (RNC) as in the UMTS, a base station controller (BSC) as in the GSM/ GSM Enhanced Data rates for GSM Evolution (EDGE) Radio Access Network (GERAN), a next-generation eNB (ng-eNB) as in an Evolved Universal Terrestrial Radio Access (E-UTRA) BS in connection with the 5GC, a next-generation Node B (gNB) as in the 5G Access Network (5G-AN), and any other apparatus capable of controlling radio communication and managing radio resources within a cell. The BS NW may connect to serve one or more UEs through a radio interface to the network.

The base station (BS) NW (or called network device) may be operable to provide radio coverage to a specific geographical area using a plurality of cells included in the RAN. The BS NW may support the operations of the cells. Each cell may be operable to provide services to at least one UE within its radio coverage. Specifically, each cell (often referred to as a serving cell) may provide services to serve one or more UEs within its radio coverage (e.g., each cell schedules the Downlink (DL) and optionally Uplink (UL) resources to at least one UE within its radio coverage for DL and optionally UL packet transmission). The BS NW may communicate with one or more UEs in the radio communication system through the plurality of cells. It should be noted that for UL, a UE is a transmitter performing UL transmission, and a network (node) is a receiver performing UL reception. For DL, a UE is a receiver performing DL reception, and a network (node) is a transmitter performing DL transmission.

The base station NW may include a network node NN and one or more TRPs, such as TRP#1 and TRP#2.

A network node NN may be, but is not limited to, a node B (NB) as in the LTE, an evolved node B (eNB) as in the LTE-A, a radio network controller (RNC) as in the UMTS, a base station controller (BSC) as in the GSM/GERAN, a new radio evolved node B (NR eNB) as in the NR, a next generation node B (gNB) as in the NR, and any other apparatus capable of controlling radio communication and managing radio resources within one or more cells.

A TRP (e.g., TRP#1 or TRP#2), which may also be regarded as a remote radio head (RRH), maybe a transceiver under the protocols of 5G NR wireless communication system and/or the protocols of a 4G wireless communication system. A TRP may be communicatively connected to a network node NN. The network node NN may connect to serve one or more UEs through one or more TRPs in the radio communication system. For example, TRP#1 and TRP#2 serve UE1, and TRP#2 serves UE2, but is not limited thereto.

As discussed above, the frame structure for NR is to support flexible configurations for accommodating various next generation (e.g., 5G) communication requirements, such as Enhanced Mobile Broadband (eMBB), Massive Machine Type Communication (mMTC), Ultra-Reliable and Low-Latency Communication (URLLC), while fulfilling high reliability, high data rate and low latency requirements. The Orthogonal Frequency-Division Multiplexing (OFDM) technology as agreed in 3GPP may serve as a baseline for NR waveform. The scalable OFDM numerology, such as the adaptive sub-carrier spacing, the channel bandwidth, and the Cyclic Prefix (CP) may also be used. Additionally, two coding schemes are considered for NR: (1) Low-Density Parity-Check (LDPC) code and (2) Polar Code. The coding scheme adaption may be configured based on the channel conditions and/or the service applications.

It should be understood that the terms "system" and "network" used in the disclosure are often used interchangeably. The term "and/or" in the disclosure is only an association relationship describing the associated objects, which means that there can be three kinds of relationships, for example, A and/or B, which can mean three situations: A is present alone, A and B are present simultaneously, or B is present alone. In addition, the character "/" in the disclosure generally indicates that the associated objects are in an "or" relationship.

To facilitate understanding of the technical solutions of the embodiments of the disclosure, the technical concepts related to the embodiments of the disclosure are described below.

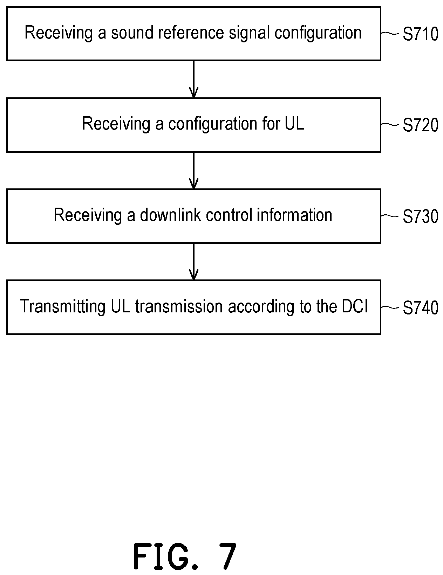

FIG. 7 is a flow chart that illustrates a UL transmission with multiple panels related method according to an exemplary embodiment of the present disclosure. Referring to FIG. 7, the method is adapted for a UE. The UE receives a sound reference signal (SRS) configuration (step S710). Specifically, the SRS configuration includes a first SRS resource set, a second SRS resource set, and usage of the first SRS resource set and the second SRS resource set, and the usage of the first SRS resource set and the second SRS resource set is for one of codebook scheme and non-codebook scheme. The UE may be provided two SRS resource sets in *srs-ResourceSetToAddModList* or *srs-Resource-SetToAddModListDCI-0-2.* For example, for STxMP, a first UL transmission (e.g., first PUSCH) and/or a second UL transmission (e.g., second PUSCH) is requested in e.g., multi-DCI based system, and UE may be configured with two SRS resource sets for codebook based UL transmission or non-codebook based UL transmission.

Each SRS resource set may be associated with a value of coresetPoolIndex. For example, the first SRS resource set may be associated with coresetPoolIndex value 0 and the other SRS resource set may be associated with coresetPoolIndex value 1. A PUSCH may be associated with SRS resource set with the same value of coresetPoolIndex. The first SRS resource set may be, for example, the set with lower set ID, and the second SRS resource set may be, for example, the set with non lower set ID. The usage of the resource set indicates the resource set is used for one of codebook based UL transmission and non-codebook based UL transmission. In one embodiment, the SRS configuration (e.g., for a serving cell) is received from a serving cell. For example, the serving cell is TRP#1 and/or TRP#2.

The UE receives a configuration for UL (step S720). Specifically, the configuration for UL indicates a multi-panel transmission scheme. In one embodiment, the multi-panel transmission scheme is indicated as/from one of the SFN (single frequency network) scheme as shown in FIG. 3B and the SDM (spatial division multiplexing) scheme as shown in FIG. 3A.

The UE receives a downlink control information (DCI) (step S730). Specifically, the DCI indicates that a first transmission configuration indicator (TCI) state is associated with the first SRS resource set and a second TCI state is associated with the second SRS resource set for the multi-panel transmission scheme. For example, UL Transmission associated with a first SRS resource set is indicated by a SRS resource set field in a DCI, and UL Transmission associated with a second SRS resource set is indicated by a SRS resource set field in the same or another DCI. In one embodiment, the first TCI state is configured as a joint TCI state for downlink (DL) or UL or configured as a TCI state for UL, and the second TCI state is configured as the joint TCI state for DL or UL or configured as the TCI state for UL. In one embodiment, spatial relation information of UL Transmission is associated with a first applied joint/DL/UL TCI stat, and/or spatial relation information of UL Transmission is associated with a second applied joint/DL/UL TCI state.

The UE transmits one or more UL transmissions according to the DCI (step S740). Specifically, the one or more UL transmissions includes one or more power headroom reports (PHRs). Power headroom indicates how much transmission power left for a UE to use in addition to the power being used by current transmission. PHR may be a type of MAC CE that report the headroom between the current UE Tx power (estimated power) and the nominal power. In one embodiment, the UE may determine a first UL transmission power and a second UL transmission power for at least one UL transmission.

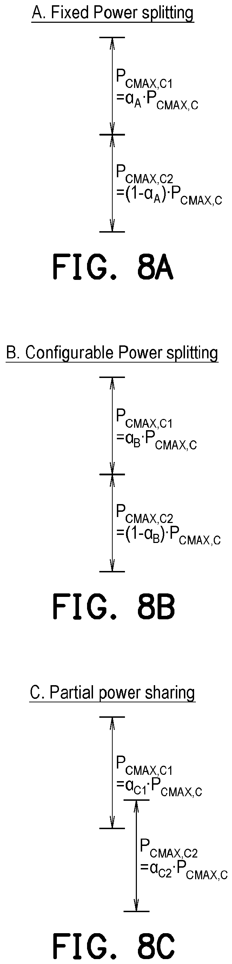

FIG. 8A is a schematic diagram that illustrates a fixed power splitting according to an exemplary embodiment of the present disclosure, FIG. 8B is a schematic diagram that illustrates a configurable power splitting according to an exemplary embodiment of the present disclosure, and FIG. 8C is a schematic diagram that illustrates partial power sharing according to an exemplary embodiment of the present disclosure. A communication device may transmit one or more capabilities regarding to the UL power allocation. For example, the capability may includes at least one of following:

fixed power splitting (e.g., between panels) for simultaneous UL transmission:
e.g., as show in FIG. 8A, $P_{CMAX,C1} + P_{CMAX,C2} = P_{CMAX,C}$, and $\alpha_A$ is a fixed value, e.g., 0.5;
configurable power splitting (e.g., between panels) for simultaneous UL transmission:
e.g., as shown in FIG. 8B, $P_{CMAX,C1} + P_{CMAX,C2} = P_{CMAX,C}$, and $\alpha_B$ is configurable by gNB, e.g., via RRC, MAC CE and/or DCI;
partial power sharing (e.g., between panels) for simultaneous UL transmission:
e.g., as shown in FIG. 8C, $P_{CMAX,C1} + P_{CMAX,C2} > P_{CMAX,C}$, and $\alpha_{C1}$ and $\alpha_{C2}$ are configurable by gNB, e.g., via RRC, MAC CE and/or DCI.

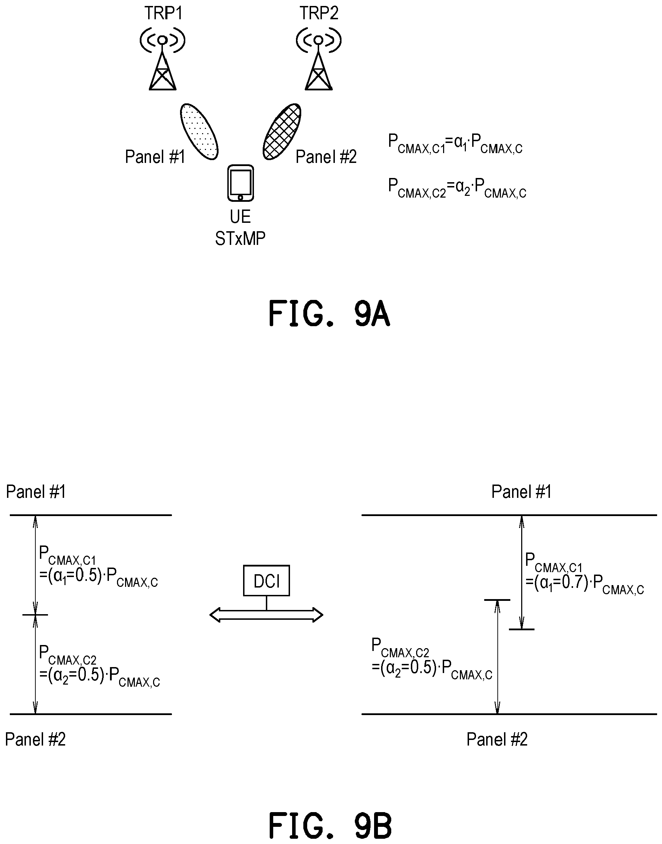

FIG. 9A is a schematic diagram that illustrates a multi-panel transmission scheme with multi-TRP operation according to an exemplary embodiment of the present disclosure. Referring to FIG. 9A, a UE may be configured with maximum output power $P_{CMAX,C1}$ associated with panel#1 and maximum output power $P_{CMAX,C2}$ associated with panel#2. $P_{CMAX,C1} = \alpha_1 \cdot P_{CMAX,C}$. $P_{CMAX,C2} = \alpha_2 \cdot P_{CMAX,C}$.

In one embodiment, the first configured maximum output power is equivalent to the second configured maximum output power. For example, $P_{CMAX,C1} = P_{CMAX,C2} = 0.5 \cdot P_{CMAX,C}$.

FIG. 9B is a schematic diagram that illustrates flexible power allocation by existing DCI according to an exemplary embodiment of the present disclosure. Referring to FIG. 9B, the maximum output powers may be configured as fixed power splitting scheme as shown in FIG. 8A or configurable power splitting scheme as shown in FIG. 8B, e.g., $\alpha_1 = 0.5$ and $\alpha_2 = 0.5$. The UE may receives power allocation related configuration in DCI. The configuration may indicate, e.g.,

$\alpha_1$=0.7 and $\alpha_2$=0.5, for partial power sharing scheme as shown in FIG. 8C.

In one embodiment, a UE may be configured with at least one pair of $\{\alpha_1, \alpha_2\}$ for e.g., panel specific maximum output power. Each pair of $\{\alpha_1, \alpha_2\}$ may be associated with at least one codepoint of a new field for flexible panel-specific maximum output power adjustment. The new field may be included in a DCI, e.g., for DL assignment or UL grant.

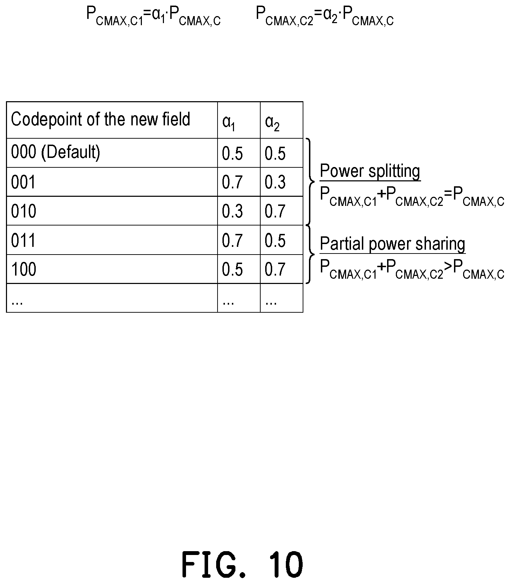

For example, FIG. 10 is a schematic diagram that illustrates flexible power allocation by a new DCI field according to an exemplary embodiment of the present disclosure. Referring to FIG. 10, it is assumed $P_{CMAX,C1} = \alpha_1 \cdot P_{CMAX,C}$, and $P_{CMAX,C2} = \alpha_2 \cdot P_{CMAX,C}$. Codepoint is 3-bit value. Codepoint "000" is $\alpha_1$=0.5 and $\alpha_2$=0.5, codepoint "001" is $\alpha_1$=0.7 and $\alpha_2$=0.3, codepoint "010" is $\alpha_1$=0.3 and $\alpha_2$=0.7, codepoint "011" is $\alpha_1$=0.7 and $\alpha_2$=0.5 , codepoint "100" is $\alpha_1$=0.5 and $\alpha_2$=0.7. Codepints "000", "001", and "010" are used for the power splitting schemes, and codepoints "011" and "100" are used for the partial power sharing scheme.

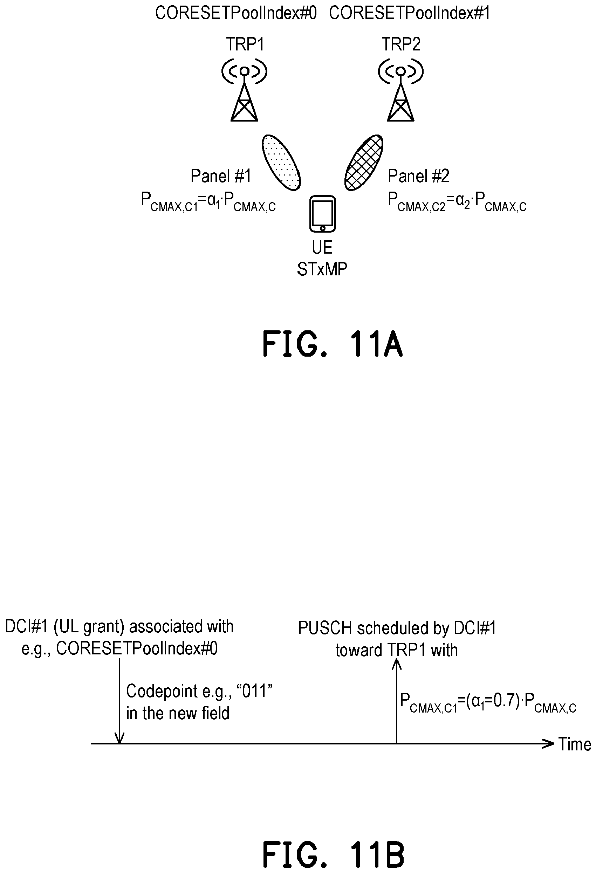

FIG. 11A is a schematic diagram that illustrates a multi-panel transmission scheme with multi-TRP operation according to an exemplary embodiment of the present disclosure. Referring to FIG. 11A, $P_{CMAX,Cn}$ or $\alpha_n$ (n=1, or 2) may be associated with a value of CORESTPoolIndex (e.g., 0, or 1), respectively. As shown in FIG. 11A, $P_{CMAX,C1}$ or $\alpha_1$ is associated with CORESETPoolIndex#0, and $P_{CMAX,C2}$ or $\alpha_2$ is associated with CORESETPoolIndex#2.

If a UE receives a codepoint of the new field scheduled by DCI format (e.g., 0_1, 0_2) associated with the value of CORESTPoolIndex, UE may perform PUSCH transmission with corresponding $P_{CMAX,Cn}$ or $\alpha_n$ indicated by the codepoint. For example, table (1) is a mapping table between codepoints in the new field, $\alpha_1$, and $\alpha_2$.

Table (1)

| Codepoint of the new field | $\alpha_1$ associated with CORESETPoolIndex#0 | $\alpha_2$ associated with CORESETPoolIndex# 1 |
|---|---|---|
| 000 (Default) | 0.5 | 0.5 |
| ... | ... | ... |
| 011 | 0.7 | 0.5 |
| ... | ... | ... |

FIG. 11B is a schematic diagram that illustrates the time relationship of power allocation according to an exemplary embodiment of the present disclosure. Referring to FIG. 11B, regarding DG PUSCH with one-shot adjustment, DCI#1 (UL grant) associated with e.g., CORESETPoolIndex#0 includes a new field with codepoint, e.g., "011". Then, one PUSCH is scheduled by DCI#1 toward TRP1 with $P_{CMAX,C1} = (\alpha_1=0.7) \cdot P_{CMAX,C}$.

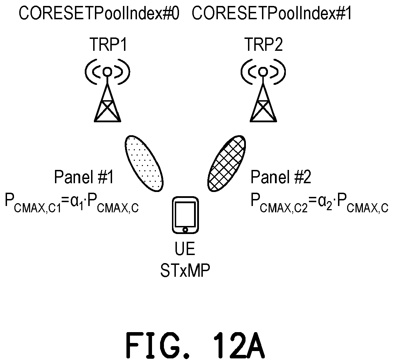

FIG. 12A is a schematic diagram that illustrates a multi-panel transmission scheme with multi-TRP operation according to an exemplary embodiment of the present disclosure. Referring to FIG. 12A, $P_{CMAX,Cn}$ or $\alpha_n$ (n=1, or 2) may be associated with a value of CORESTPoolIndex (e.g., 0, or 1), respectively. As shown in FIG. 12A, $P_{CMAX,C1}$ or $\alpha_1$ is associated with CORESETPoolIndex#0, and $P_{CMAX,C2}$ or $\alpha_2$ is associated with CORESETPoolIndex#2.

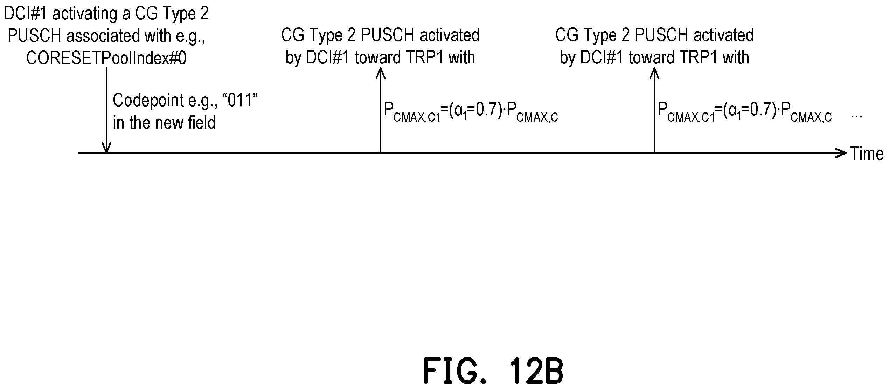

If UE receives a codepoint of the new field scheduled by DCI format (e.g., 0_1, 0_2) associated with the value of CORESTPoolIndex, UE may perform PUSCH transmission with corresponding $P_{CMAX,Cn}$ or $\alpha_n$ indicated by the codepoint. The DCI may activate a configured grant Type 2 PUSCH. The DCI of CRC may be scrambled by CS-RNTI. For example, FIG. 12B is a schematic diagram that illustrates the time relationship of power allocation according to an exemplary embodiment of the present disclosure. Referring to FIG. 12B, regarding CG PUSCH with semi-persistent adjustment, DCI#1 activating a CG type 2 PUSCH associated with e.g., CORESETPoolIndex#0 includes a new field with codepoint, e.g., "011". Then, multiple CGtype 2 PUSCHs are activated by DCI#1 toward TRP1 with $P_{CMAX,C1} = (\alpha_1=0.7) \cdot P_{CMAX,C}$.

In one embodiment, a UE may receive a field of indication for transmitting one or more UL transmissions, where a first codepoint of the field is associated with a first configured maximum output power, and a second codepoint of the field is associated with a second configured maximum output power. In one embodiment, the field of indication for transmitting one or more UL transmissions is a parameter set of power control.

In one embodiment, in response to the first codepoint being indicated, a UL transmission power of one or more UL transmissions are limited by the first configured maximum output power. In one embodiment, in response to the second codepoint being indicated, a UL transmission power of one or more UL transmissions are limited by the second configured maximum output power.

In one embodiment, a DCI (e.g., for UL grant) may include a field of open-loop power control (OLPC) parameter set indication. In one embodiment, the size of the field of open-loop power control (OLPC) parameter set indication may be up to 2 bits. For example, OLPC field is 2 bits and/or the DCI does not include SRS resource indicator (SRI) field.

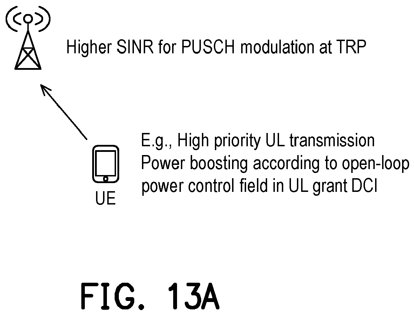

For example, FIG. 13A is a schematic diagram that illustrates power-boosting according to an exemplary embodiment of the present disclosure. Referring to FIG. 13A, there has higher SINR for PUSCH modulation at TRP. High priority UL transmission is needed, and power-boosting would be configured according to open-loop power control field in UL grant DCI.

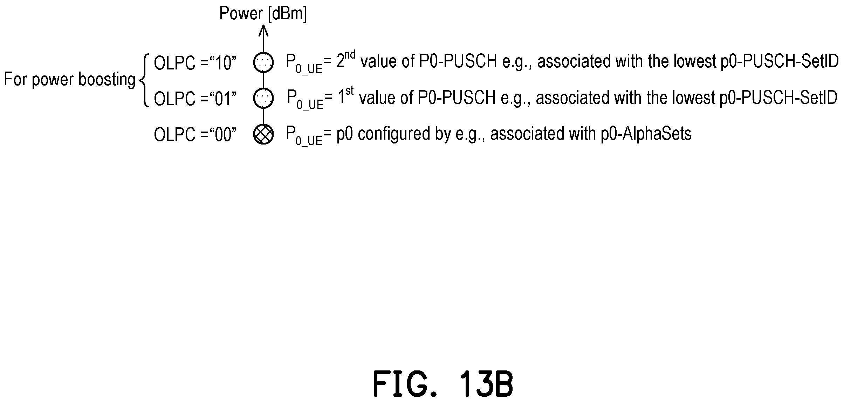

FIG. 13B is a schematic diagram that illustrates codepoints for power-boosting according to an exemplary embodiment of the present disclosure. Referring to FIG. 13B, in OLPC field, codepoint "10" represents $P_{0\_UE}$ = second value of PO-PUSCH, e.g., associated with the lowest p0-PUSCH-SetID, codepoint "01" represents $P_{0\_UE}$ = first value of PO-PUSCH, e.g., associated with the lowest p0-PUSCH-SetID, and codepoint "00" represents $P_{0\_UE}$ = p0 configured by p0-AlphaSets.

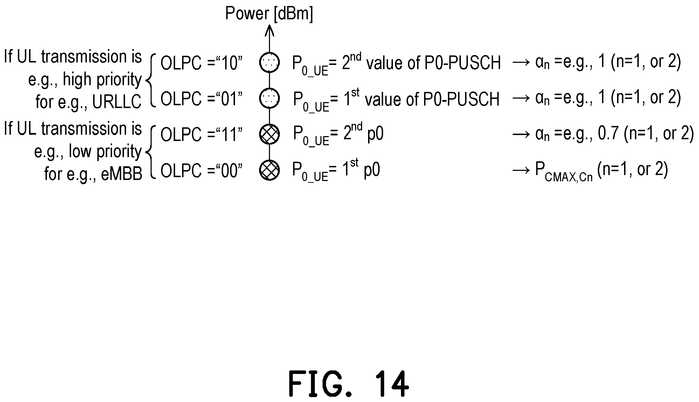

In one embodiment, $P_{CMAX,C1}$ and $P_{CMAX,C2}$ are adjusted according to e.g., the loading of UL Traffic by e.g., panel specific PHR. For example, FIG. 14 is a schematic diagram that illustrates codepoints based on priority according to an exemplary embodiment of the present disclosure. Referring to FIG. 14, TRP1 may have high UL traffic load and/or TRP2 may have low UL traffic load. If UL transmission is, e.g., high priority for, e.g., URLLC, in OLPC field, codepoint "10" is second value of PO-PUSCH, e.g., $\alpha_n$ = 1 (n=1, or 2), and codepoint "01" is first value of PO-PUSCH, e.g., $\alpha_n$ = 1 (n=1, or 2). If UL transmission is, e.g., low priority for, e.g., eMBB, in OLPC field, codepoint "11" is second value p0, e.g., $\alpha_n$ = 0.7 (n=1, or 2), and codepoint "00" is p0, e.g., $P_{CMAX,Cn}$ (n=1, or 2).

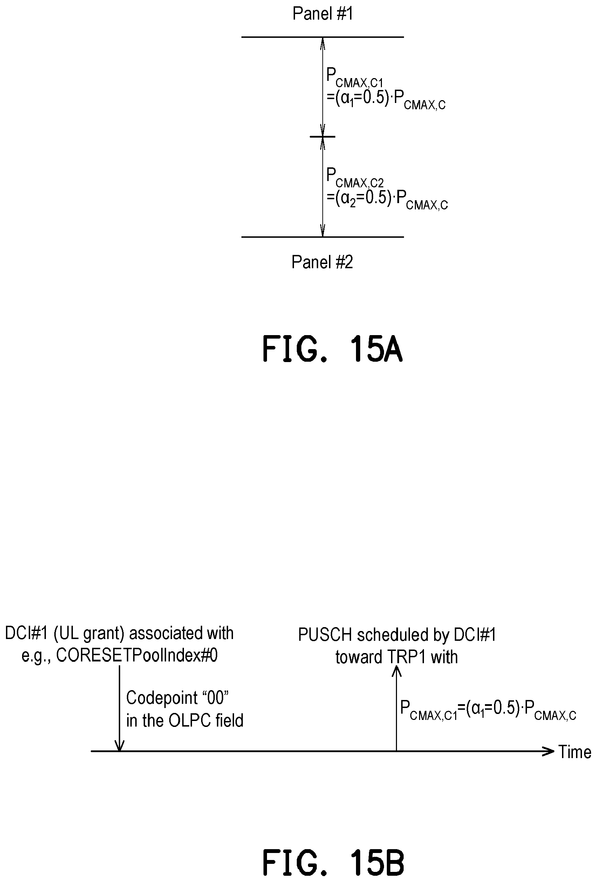

FIG. 15A is a schematic diagram that illustrates UL transmission without power-boosting according to an exemplary embodiment of the present disclosure. Referring to FIG. 15A, if UL transmission is configured without power-boosting, a UL transmission may be transmitted with a, e.g., default/configured per-TRP/Panel maximum power. For example, $\alpha_1$=0.5 and $\alpha_2$=0.5. FIG. 15B is a schematic diagram that illustrates the time relationship of power allocation according to an exemplary embodiment of the present disclosure. Referring to FIG. 15B, regarding high priority for, e.g., URLLC, DCI#1 (UL grant) associated with, e.g., CORESETPoolIndex#0 includes a OLPC field with codepoint, e.g., "00". Then, one PUSCH is scheduled by DCI#1 toward TRP1 with $P_{CMAX,C1} = (\alpha_1=0.5) \cdot P_{CMAX,C}$.

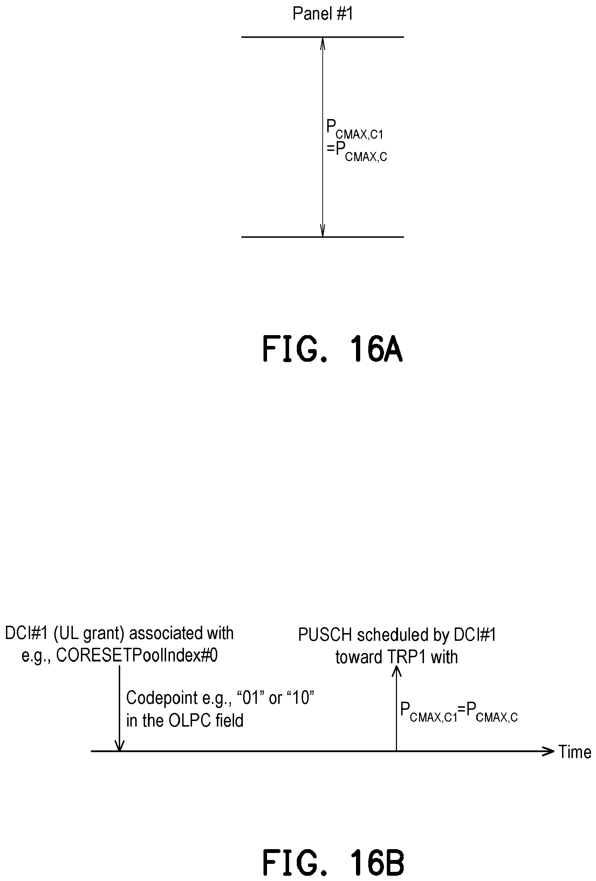

FIG. 16A is a schematic diagram that illustrates UL transmission with power-boosting according to an exemplary embodiment of the present disclosure. Referring to 16A, if UL transmission is configured with power-boosting, a UL transmission may be transmitted with a per-cell maximum power. For example, $\alpha_1$=1 and $\alpha_2$=0. FIG. 16B is a schematic diagram that illustrates the time relationship of power allocation according to an exemplary embodiment of the present disclosure. Referring to FIG. 16B, regarding high priority for, e.g., URLLC, DCI#1 (UL grant) associated with, e.g., CORESETPoolIndex#0 includes a OLPC field with codepoint, e.g., "01" or "10". Then, one PUSCH is scheduled by DCI#1 toward TRP1 with $P_{CMAX,C1} = (\alpha_1=1) \cdot P_{CMAX,C}$.

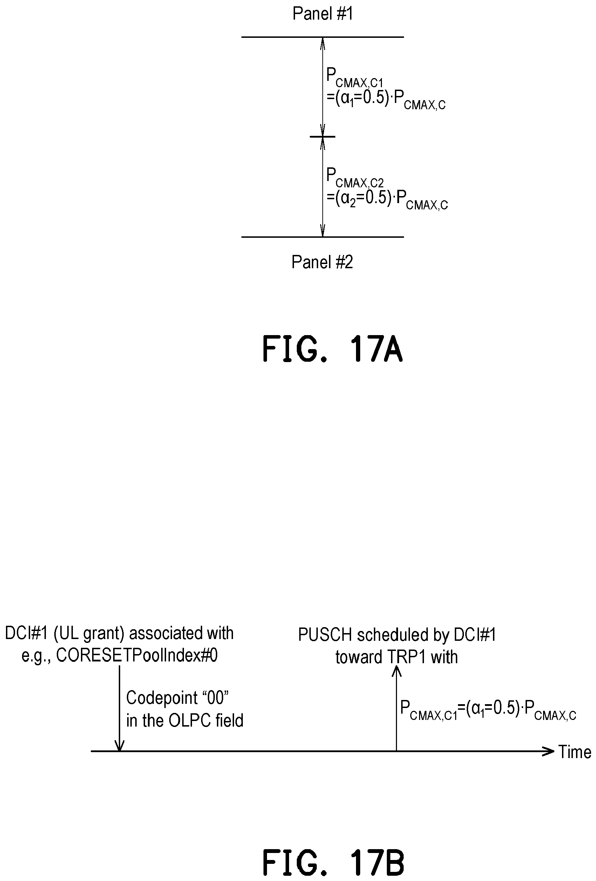

FIG. 17A is a schematic diagram that illustrates UL transmission without power-boosting according to an exemplary embodiment of the present disclosure. Referring to FIG. 17A, if UL transmission is configured without power-boosting, a UL transmission may be transmitted with a, e.g., default/configured per-TRP/Panel maximum power. For example, $\alpha_1$=0.5 and $\alpha_2$=0.5. FIG. 17B is a schematic diagram that illustrates the time relationship of power allocation according to an exemplary embodiment of the present disclosure. Referring to FIG. 17B, regarding low priority for, e.g., eMBB, DCI#1 (UL grant) associated with, e.g., CORESETPoolIndex#0 includes a OLPC field with codepoint, e.g., "00". Then, one PUSCH is scheduled by DCI#1 toward TRP1 with $P_{CMAX,C1} = (\alpha_1=0.5) \cdot P_{CMAX,C}$.

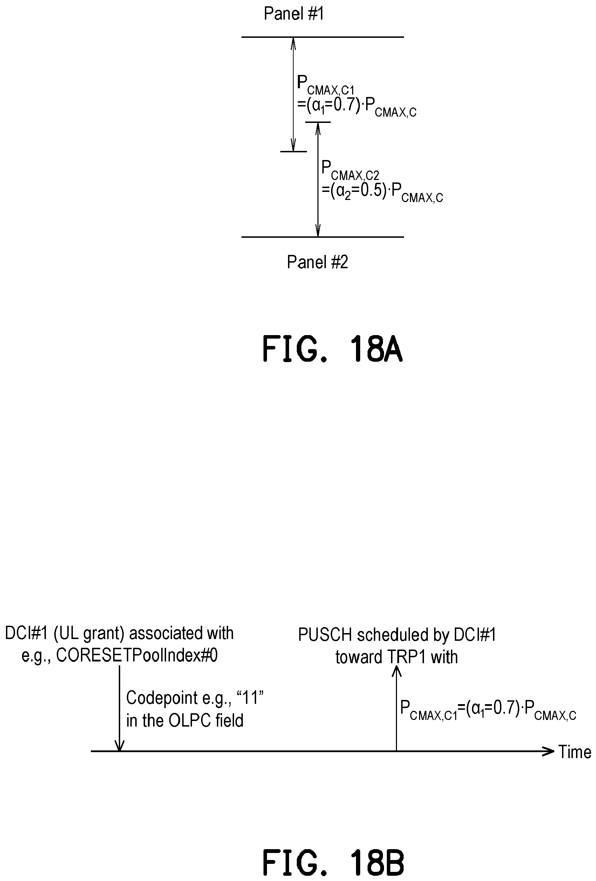

FIG. 18A is a schematic diagram that illustrates UL transmission with power-boosting according to an exemplary embodiment of the present disclosure. Referring to FIG. 18A, if UL transmission is configured with power-boosting, a UL transmission may be transmitted with a per-cell maximum power. For example, $\alpha_1$=0.7 and $\alpha_2$=0.5. FIG. 18B is a schematic diagram that illustrates the time relationship of power allocation according to an exemplary embodiment of the present disclosure. Referring to FIG. 18B, regarding low priority for, e.g., eMBB, DCI#1 (UL grant) associated with, e.g., CORESETPoolIndex#0 includes a OLPC field with codepoint, e.g., "11". Then, one PUSCH is scheduled by DCI#1 toward TRP1 with $P_{CMAX,C1} = (\alpha_1=0.7) \cdot P_{CMAX,C}$.

In one embodiment, the $P_{CMAX,Cn}$ (n=1, or 2) may be associated with a value of CORESTPoolIndex (e.g., 0, or 1) and/or a SRS resource set (e.g., 0, or 1), respectively.

In one embodiment, if UE receives a codepoint "01" or " 10" in the OLPC field in a DCI associated with the value of CORESTPoolIndex and/or the SRS resource set for PUSCH transmission, and/or PUSCH transmission indicated as high priority, and/or if UE receives a 1st codepoint (e.g., "1") in the priority index field in a DCI associated with the value of CORESTPoolIndex and/or the SRS resource set for PUSCH transmission, for example, a UE may perform PUSCH transmission with corresponding $P_{CMAX,Cn} = P_{CMAX,C}$ (or $P_{CMAX,Cn'}$).

In one embodiment, if UE receives a codepoint "11" in the OLPC field in a DCI associated with the value of CORESTPoolIndex and/or the SRS resource set for PUSCH transmission, and/or PUSCH transmission indicated as high priority, and/or if UE receives a 1st codepoint (e.g., "1") in the priority index field in a DCI associated with the value of CORESTPoolIndex and/or the SRS resource set for PUSCH transmission, for example, UE may perform PUSCH transmission with corresponding $P_{CMAX,Cn} = P_{CMAX,Cn''}$.

In one embodiment, if UE receives a codepoint "00" in the OLPC field in a DCI associated with the value of CORESTPoolIndex and/or the SRS resource set for PUSCH transmission, and/or PUSCH transmission indicated as low priority, and/or if UE receives a 2nd codepoint (e.g., "0") in the priority index field in a DCI associated with the value of CORESTPoolIndex and/or the SRS resource set for PUSCH transmission, for example, UE may perform PUSCH transmission with corresponding $P_{CMAX,Cn}$. The $P_{CMAX,C}$ / $P_{CMAX,Cn}$ / $P_{CMAX,Cn''}$ may be a default/predefined/fixed/configured/activated/indicated value.

In one embodiment, a UE may be provided two SRS resource sets in *srs-ResourceSetToAddModList* or *srs-ResourceSetToAddModListDCI-0-2*. In one embodiment, a UE may be provided *p0-PUSCH-SetList* & *p0-PUSCH-SetList2 in PUSCH-PowerControl.* The OLPC field may be associated with a SRS resource set or a value of CORESETPoolIndex. For example, table (2) and table (3) are mapping tables of p0-PUSCH-SetList and OLPC field.

Table (2)

| p0-PUSCH-SetList | | Associated with the first SRS resource set |
|---|---|---|
| p0-PUSCH-SetId-r16 | p0-List-r16 | SRI field (if included in DCI) |
| 0 | 1st P0-PUSCH, 2nd P0-PUSCH | 0 |
| 1 | 1st P0-PUSCH, 2nd P0-PUSCH | 1 |
| ... | 1st P0-PUSCH, 2nd P0-PUSCH | ... |
| maxNrofSRI-PUSCH-Mappings-1 | 1st P0-PUSCH, 2nd P0-PUSCH | maxNrofSRI-PUSCH-Mappings-1 |

Table (3)

| p0-PUSCH-SetList2 | | Associated with the second SRS resource set |
|---|---|---|
| p0-PUSCH-SetId-r16 | p0-List-r16 | SRI field (if included in DCI) |
| 0 | 1st P0-PUSCH, 2nd P0-PUSCH | 0 |
| 1 | 1st P0-PUSCH, 2nd P0-PUSCH | 1 |
| ... | 1st P0-PUSCH, 2nd P0-PUSCH | ... |
| maxNrofSRI-PUSCH-Mappings-1 | 1st P0-PUSCH, 2nd P0-PUSCH | maxNrofSRI-PUSCH-Mappings-1 |

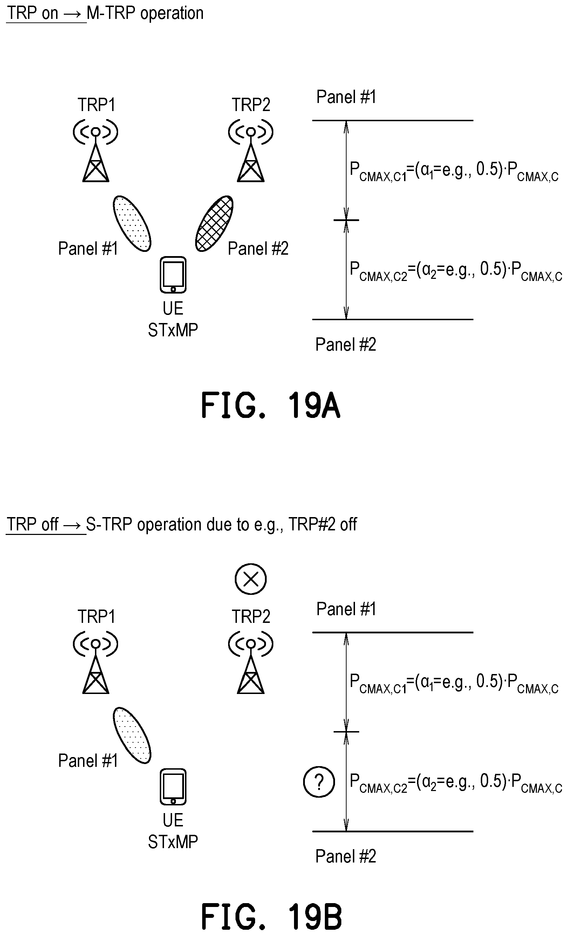

FIG. 19A is a schematic diagram that illustrates multi-TRP operation according to an exemplary embodiment of the present disclosure. Referring to FIG. 19A, a multi-TRP operation is performed due to, e.g., TRP2 on. FIG. 19B is a schematic diagram that illustrates single-TRP operation due to one TRP off according to an exemplary embodiment of the present disclosure. Referring to FIG. 19B, a single-TRP operation is performed due to, e.g., TRP2 off. $P_{CMAX,C2}$ may not be needed.

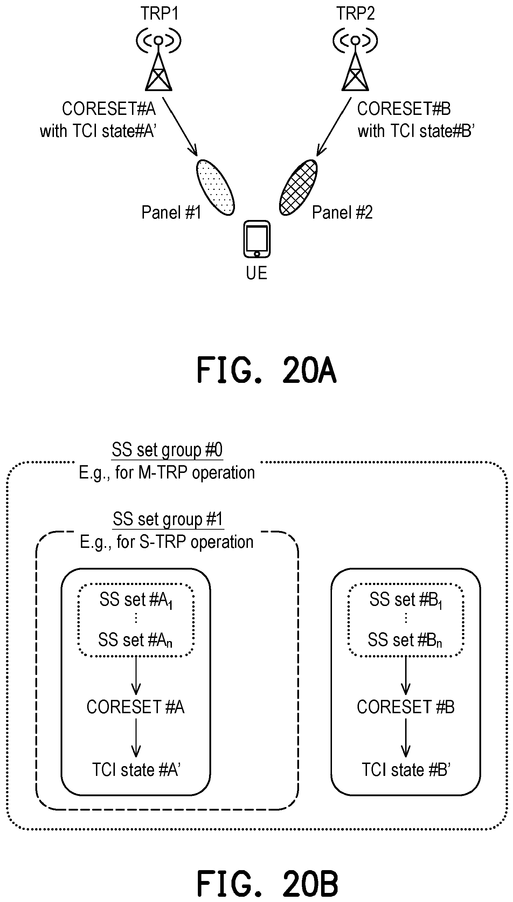

FIG. 20A is a schematic diagram that illustrates a multi-panel transmission scheme with multi-TRP operation according to an exemplary embodiment of the present disclosure. Referring to FIG. 20A, it is assumed that CORESET#A is associated with TCI state#A' and CORESET#B is associated with TCI state#B'. In one embodiment, a UE may be configured/provided with a 1st SSSG and/or a 2nd SSSG. In one embodiment, a search space set in the 1st SSSG may be associated with at least one CORESET, where each CORESET may be activated/indicated with one TCI state.

In one embodiment, a search space set in the 2nd SSSG may be associated with at least one CORESET. In case 1, a UE may be configured at least one SS set pair in the 2nd SSSG. Each SS set may be associated with corresponding a CORESET, and each CORESET may be activated with one TCI state. In case 2, each CORESET may be activated/indicated with at least one TCI state.

For example, FIG. 20B is a schematic diagram that illustrates flexible power allocation by search space set (SSS) group switching according to an exemplary embodiment of the present disclosure. Referring to FIG. 20B, SS set group#0, e.g., is configured for M-TRP operation, and SS set group#1, e.g., is configured for S-TRP operation. SS set group#0 includes SS set#$A_1$ to SS set#$A_n$ (n is an integer) and SS set#$B_1$ to SS set#$B_n$. SS set group#0 includes SS set#$A_1$ to SS set#$A_n$. SS set#$A_1$ to SS set#$A_n$ is associated with CORESET#A is and TCI state#A', and SS set#$B_1$ to SS set#$B_n$ is associated with CORESET#B is and TCI state#B'.

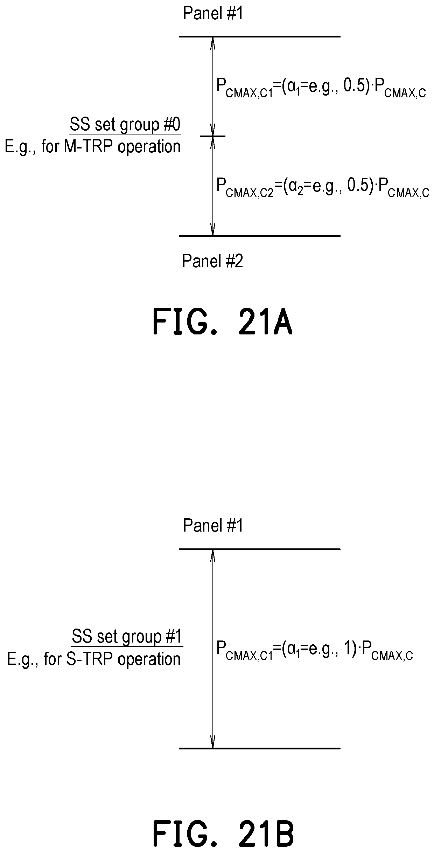

In one embodiment, a DCI may include a field for SSSG switching for UE to monitor corresponding SSSG. For example, FIG. 21A is a schematic diagram that illustrates power allocation for one group according to an exemplary embodiment of the present disclosure. Referring to FIG. 21A, a 1st codepoint (e.g., "0") of the field for SSSG switching may indicate UE to monitor corresponding SSSG#0. FIG. 21B is a schematic diagram that illustrates power allocation for another group according to an exemplary embodiment of the present disclosure. Referring to FIG. 21B, a 2nd codepoint (e.g., "1") of the field for SSSG switching may indicate UE to monitor corresponding SSSG#1. In FIG. 21A, the 1st SSSG may be associated/configured with a 1st pair of {$\alpha_1$ =e.g., 0.5, $\alpha_2$ =e.g., 0.5}. In FIG. 21B, the 2nd SSSG may be associated/configured with a 2nd pair of {$\alpha_1$ =e.g., 1, $\alpha_2$ =e.g., 0}.

In one embodiment, if UE receives a UL grant DCI of PDCCH monitored from the 1st SS set group (or a 2nd SS set group), UE may perform PUSCH scheduled by the UL grant DCI with corresponding the 1st pair of {$\alpha_1$ =e.g., 0.5, $\alpha_2$ =e.g., 0.5 as shown in FIG. 21A} (or the 2nd pair of {$\alpha_1$ =e.g., 1, $\alpha_2$ =e.g., 0 as shown in FIG. 21B}.

In one embodiment, a UE may be configured with at least one p-MAX set, where each p-MAX set may be associated/configured with a $P_{CMAX,Cn}$ and/or a SSSG ID, e.g., p-MAX {$P_{CMAX,C}$, SSSG ID}.

In one embodiment, a UE may be provided a set of durations by *PDCCHSkippingDurationList* for PDCCH. A DCI format 0_1 and a DCI format 0_2 that schedule PUSCH transmission, and a DCI format 1_1 and a DCI format 1_2 that schedule PDSCH receptions may include a PDCCH monitoring adaptation field of 1 bit or of 2 bits. The codepoint of PDCCH monitoring adaptation field may indicate: '0'or "00": no skipping in PDCCH monitoring; other than '0'or "00": skipping PDCCH monitoring for a duration provided by the values in the set of durations by *PDCCHSkippingDurationList.*

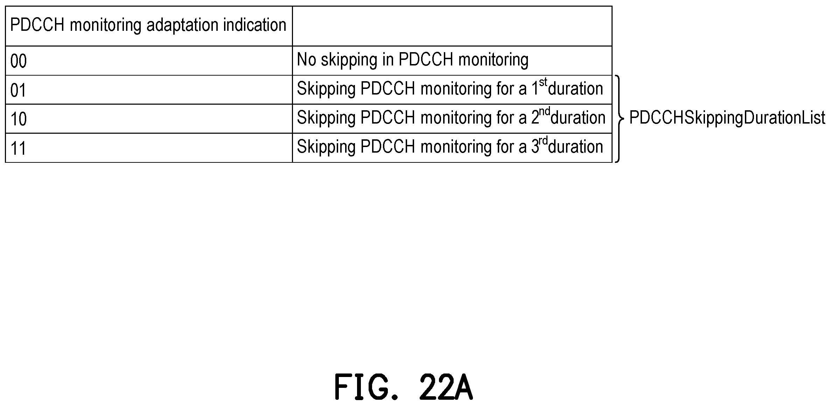

For example, FIG. 22A is a schematic diagram that illustrates a physical downlink control channel (PDCCH) monitoring adaption indication according to an exemplary embodiment of the present disclosure. Referring to FIG. 22A, a mapping table between codepoint and PDCCH monitoring adaptation indication is: codepoint "00" represents no skipping in PDCCH monitoring; codepoint "01" represents skipping PSCCH monitoring for a first duration; codepoint "10" represents skipping PSCCH monitoring for a second duration; and codepoint "11" represents skipping PSCCH monitoring for a third duration. The first, second, and third durations may be three durations with different time lengths.

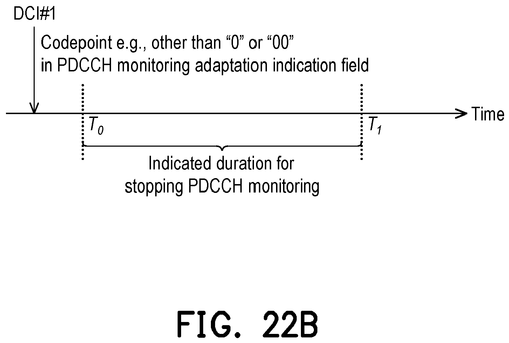

For example, FIG. 22B is a schematic diagram that illustrates the time relationship of PDCCH monitoring according to an exemplary embodiment of the present disclosure. Referring to FIG. 22B, codepoint, e.g., other than "0" or "00", is configured in PDCCH monitoring adaptation indication field as shown in FIG. 22A of DCI#1. The indicated duration from timepoint $T_0$ to timepoint $T_1$ is used for stopping/skipping PDCCH monitoring.

In one embodiment, a UE may be configured/provided with at least one PDCCHSkippingDurationList (e.g., a 1st PDCCHSkippingDurationList and/or a 2nd PDCCHSkippingDurationList), where the 1st PDCCHSkippingDurationList may associated/configured with a 1st value of CORESEPoolIndex, and/or the 2nd PDCCHSkippingDurationList may associated/configured with a 2nd value of CORESEPoolIndex.

In one embodiment, if a UE receives a DCI associated with a value of CORESETPoolIndex, UE may perform PDCCH skipping. The skipped PDCCH may be associated with the value of CORESETPoolIndex. The duration indicated by PDCCH monitoring adaptation indication field in the DCI associated with the value of CORESETPoolIndex (e.g., CORESETPoolIndex#0) may be associated with corresponding PDCCHSkippingDurationList (e.g., 1st PDCCHSkippingDurationList).

For example, table (4) is a mapping table of codepoints and PDCCH monitoring adaptation indication:

Table (4)

| PDCCH monitoring adaptation indication | If the DCI associated with CORESETPoolIndex#0 | If the DCI associated with CORESETPoolIndex# 1 |
|---|---|---|
| 00 | No skipping in PDCCH monitoring | No skipping in PDCCH monitoring |
| 01 | Skipping PDCCH monitoring for a 1st duration configured in PDCCHSkippingDurationList# 1 | Skipping PDCCH monitoring for a 1st duration configured in PDCCHSkippingDurationList#2 |
| 10 | Skipping PDCCH monitoring for a 2nd duration configured in PDCCHSkippingDurationList# 1 | Skipping PDCCH monitoring for a 2nd duration configured in PDCCHSkippingDurationList#2 |
| 11 | Skipping PDCCH monitoring for a 3rd duration configured in PDCCHSkippingDurationList# 1 | Skipping PDCCH monitoring for a 3rd duration configured in PDCCHSkippingDurationList#2 |

In one embodiment, a UE may be configured with at least one PDCCH Skipping Duration (e.g., a 1st PDCCH-SkippingDurationList and/or a 2nd PDCCHSkippingDurationList), where the 1st PDCCHSkippingDurationList may be associated/configured with a 1st pair of {$\alpha_1$ =e.g., 0, $\alpha_2$ =e.g., 1}, and/or the 2nd PDCCHSkippingDurationList may be associated/configured with a 2nd pair of {$\alpha_1$ =e.g., 1, $\alpha_2$ =e.g., 0}. In one embodiment, when UE performs PDCCH skipping associated with the 1st PDCCHSkippingDurationList (or the 2nd PDCCHSkippingDurationList), UE may perform UL transmission with the 1st pair of { $\alpha_1$ =e.g., 0, $\alpha_2$ =e.g., 1} (or the 2nd pair of {$\alpha_1$ =e.g., 0, $\alpha_2$ =e.g., 1}) and may trigger a M-TRP PHR.

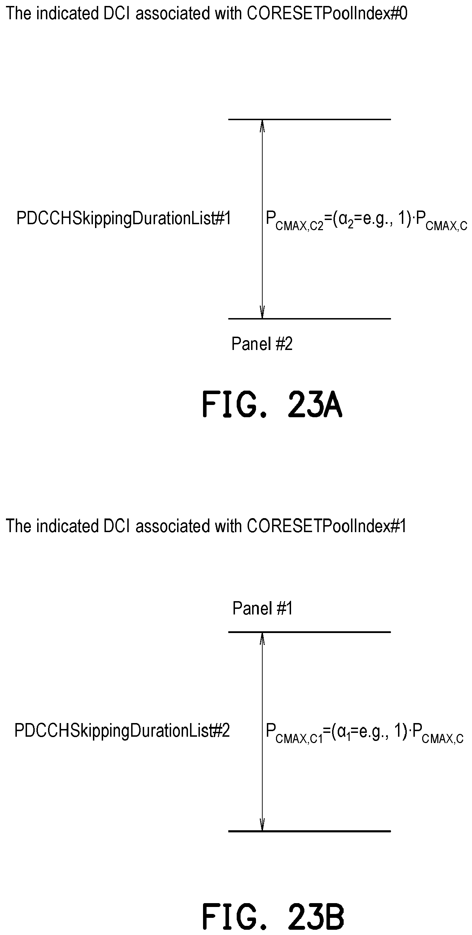

For example, FIG. 23A is a schematic diagram that illustrates an indicated DCI associated with the first control resource set (CORSET) pool index according to an exemplary embodiment of the present disclosure. Referring to FIG. 23A, PDCCHSkippingDurationList#1 is associated with $\alpha_1$ =e.g., 0 and $\alpha_2$ =e.g., 1.

For example, FIG. 23B is a schematic diagram that illustrates an indicated DCI associated with the second CORSET pool index according to an exemplary embodiment of the present disclosure. Referring to FIG. 23B, PDCCHSkippingDurationList#2 is associated with $\alpha_1$ =e.g., 1 and $\alpha_2$ =e.g., 0.

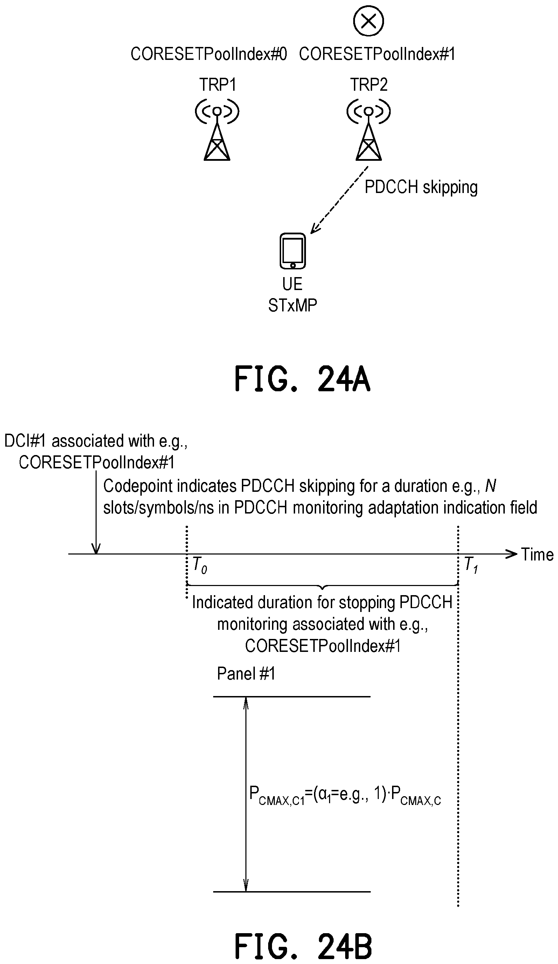

In one embodiment, when a UE performs PDCCH skipping associated with the 1st PDCCHSkippingDurationList (or the 2nd PDCCHSkippingDurationList), UE may perform UL transmission with the 1st pair of {$\alpha_1$ =e.g., 0, $\alpha_2$ =e.g., 1} (or the 2nd pair of {$\alpha_1$ =e.g., 0, $\alpha_2$ =e.g., 1}) and may trigger a M-TRP PHR. For example, FIG. 24A is a schematic diagram that illustrates single-TRP operation due to one TRP off according to an exemplary embodiment of the present disclosure, and FIG. 24B is a schematic diagram that illustrates the time relationship of power allocation according to an exemplary embodiment of the present disclosure. Referring to FIG. 24A and FIG. 24B, a DCI is associated with, e.g., CORESETPoolIndex#1, and codepoint PDCCH skipping for a duration, e.g., N slots/symbols/ns (N is an integer) in PDCCH monitoring adaptation indication field. The indicated duration timepoint $T_0$ to timepoint $T_1$ is used for stopping/skipping PDCCH monitoring associated with, e.g., CORESETPoolIndex#1.

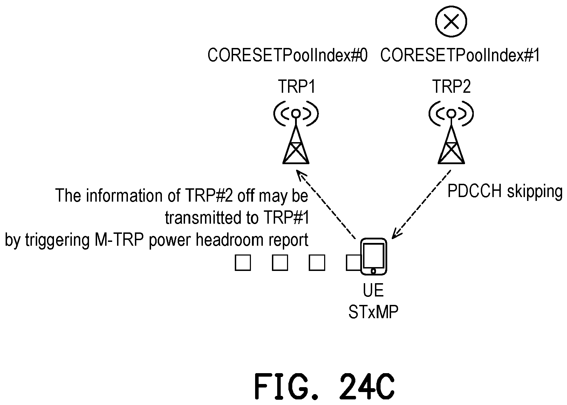

In one embodiment, when a UE performs PDCCH skipping associated with the 1st PDCCHSkippingDurationList (or the 2nd PDCCHSkippingDurationList) , UE may perform UL transmission with the 1st pair of {$\alpha_1$ =e.g., 0, $\alpha_2$ =e.g., 1} (or the 2nd pair of {$\alpha_1$ =e.g., 0, $\alpha_2$ =e.g., 1}) and may trigger a M-TRP PHR. For example, FIG. 24C is a schematic diagram that illustrates the triggering of the power headroom report according to an exemplary embodiment of the present disclosure. Referring to FIG. 24C, a S-TRP operation is performed due to e.g., TRP#2 off. The information of TRP#2 off may be transmitted to TRP#1 by triggering M-TRP power headroom report.

In one embodiment, one or more PHRs include at least one of a first type 1 PHR and a second type 1 PHR. A UE may receive a configuration of a mode of the first type 1 PHR and the second type 1 PHR. The UE may provide at least one of the first type 1 PHR and the second type 1 PHR including at least one of: providing the first type 1 PHR and a first configured maximum output power; and providing the second type 1 PHR and a second configured maximum output power.

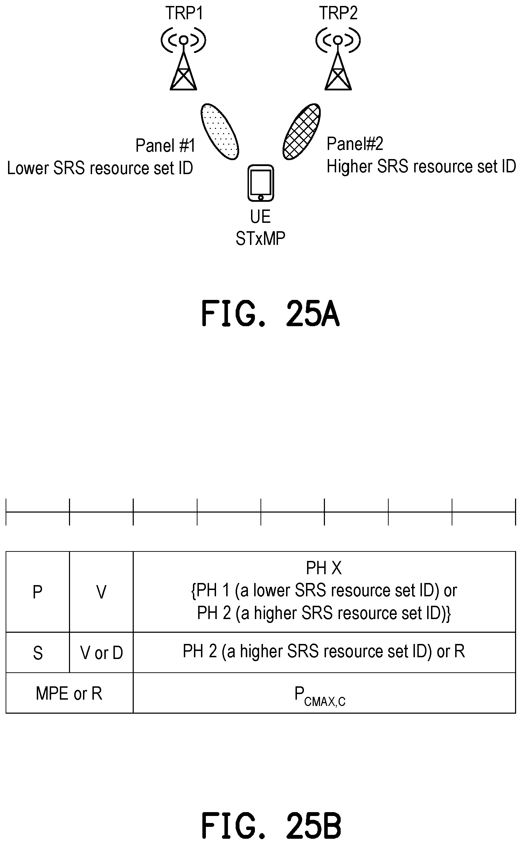

FIG. 25A is a schematic diagram that illustrates a multi-panel transmission scheme with multi-TRP operation according to an exemplary embodiment of the present disclosure, and FIG. 25B is a schematic diagram that illustrates a configuration of medium access control (MAC) control element (CE) according to an exemplary embodiment of the present disclosure. Referring to FIG. 25A and FIG. 25B, it is assumed that panel#1 is assocaiated with lower SRS resource set ID and PH 1, and panel#2 is associated with a higher SRS resource set and PH 2. In one embodiment, regarding triggering a multiple TRP power headroom report (PHR), S field may indicate that the M-TRP PHR may be associated with one TRP or both TRPs: if the S field is set to "0", both PH 1 (e.g., the first type 1 PHR) and PH 2 (e.g., the second type 1 PHR) may be reported, and PH 1 may be reported in the PH X field; if the S field is set to "1", PH 1 or PH 2 may be reported in the PH X field.

In one embodiment, regarding triggering a multiple TRP power headroom report (PHR), D field may indicate which one TRP to be reported if the S field indicates the reporting may be associated with one TRP: if the D field is set to "0", PH 1 may be reported in the PH X field and/or R bits in PH 2 field may be present instead; if the D field is set to "1", PH 2 may be reported in the PH X field and/or R bits in PH 2 may be present instead; if the S field is set to "0", V bit may be present instead. In one embodiment, R field is a reserved bit which may be set to 0.

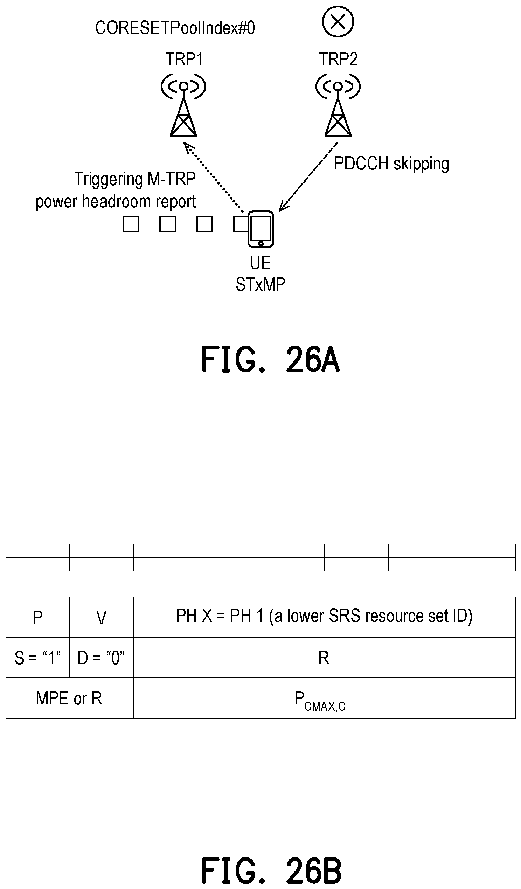

FIG. 26A is a schematic diagram that illustrates the triggering of the power headroom report according to an exemplary embodiment of the present disclosure, and FIG. 26B is a schematic diagram that illustrates a configuration of MAC CE according to an exemplary embodiment of the present disclosure. Referring to FIG. 26A and FIG. 26B, a S-TRP operation is performed due to, e.g., TRP2 off. In one embodiment, regarding triggering a multiple TRP power headroom report (PHR), S field may indicates that the M-TRP PHR may be associated with one TRP or both TRPs: if the S field is set to "0", both PH 1 and PH 2 may be reported, and PH 1 may be reported in the PH X field; if the S field is set to "1", PH 1 or PH 2 may be reported in the PH X field.

In one embodiment, regarding triggering a multiple TRP power headroom report (PHR), D field may indicates which one TRP to be reported if the S field indicates the reporting may be associated with one TRP: if the D field is set to "0", PH 1 may be reported in the PH X field and/or R bits in PH 2 field may be present instead; if the D field is set to "1", PH 2 may be reported in the PH X field and/or R bits in PH 2 field may be present instead; if the S field is set to "0", V bit may be present instead. In one embodiment, R field is a reserved bit which may be set to 0.

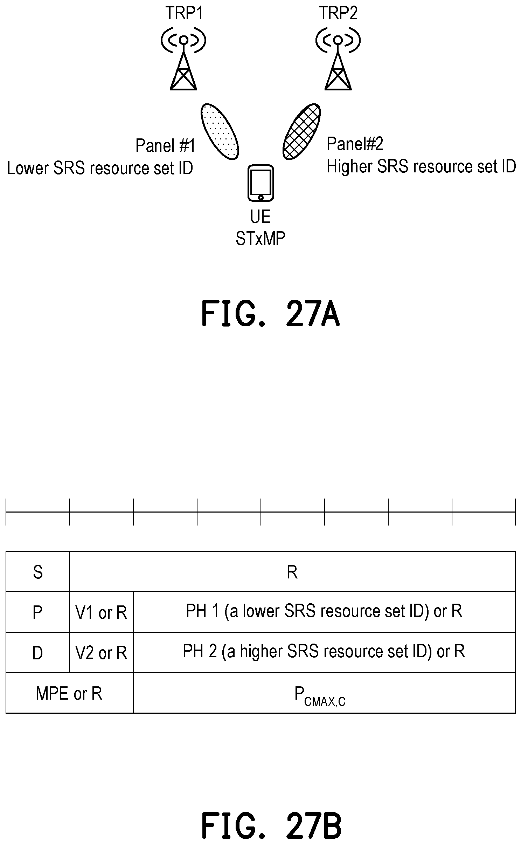

FIG. 27A is a schematic diagram that illustrates a multi-panel transmission scheme with multi-TRP operation according to an exemplary embodiment of the present disclosure, and FIG. 27B is a schematic diagram that illustrates a configuration of MAC CE according to an exemplary embodiment of the present disclosure. Referring to FIG. 27A and FIG. 27B, it is assumed that panel#1 is associated with a lower SRS resource set ID and PH 1, and panel#2 is associated with a higher SRS resource set and PH 2. In one embodiment, regarding triggering a multiple TRP power headroom report (PHR), S field may indicates the M-TRP PHR may be associated with one TRP or both TRPs: if the S field is set to "0", both PH 1 & PH 2 may be reported; if the S field is set to "1", PH 1 or PH 2 may be reported.

In one embodiment, regarding triggering a multiple TRP power headroom report (PHR), D field may indicate which one TRP is to be reported if the S field indicates the reporting may be associated with one TRP: if the D field is set to "0", PH 1 may be reported and/or R bits in V2 field and PH 2 field may be present instead; if the D field is set to "1", PH 2 may be reported and/or R bits in V1 field and PH 1 field may be present instead. In one embodiment, R field is a reserved bit which may be set to 0.

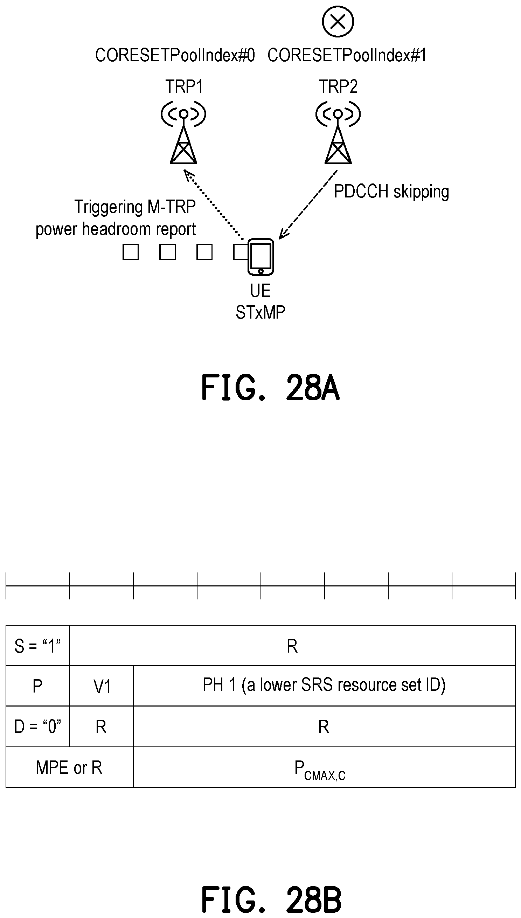

FIG. 28A is a schematic diagram that illustrates the triggering of the power headroom report according to an exemplary embodiment of the present disclosure, and FIG. 28B is a schematic diagram that illustrates a configuration of MAC CE according to an exemplary embodiment of the present disclosure. Referring to FIG. 28A and FIG. 28B, a S-TRP operation is performed due to, e.g., TRP2 off. In one embodiment, regarding triggering a multiple TRP power headroom report (PHR), S field may indicates the M-TRP PHR may be associated with one TRP or both TRPs: if the S field is set to "0", both PH 1 and PH 2 may be reported; if the S field is set to "1", PH 1 or PH 2 may be reported.

In one embodiment, regarding triggering a multiple TRP power headroom report (PHR), D field may indicate which one TRP to be reported if the S field indicates the reporting may be associated with one TRP: if the D field is set to "0", PH 1 may be reported and/or R bits in V2 field and PH 2 field may be present instead; if the D field is set to "1", PH 2 may be reported and/or R bits in V1 field and PH 1 field may be present instead. In one embodiment, R field is a reserved bit which may be set to 0.

In one embodiment, conditions for triggering the multiple TRP (PHR) may be:

first condition: when UE starts PDCCH skipping (e.g., corresponding to a value of CORESETpoolindex), in this case, UE may report PH 1 or PH 2 according to the value of CORESETpoolindex;
second condition: when UE starts PDCCH monitoring (e.g., according to a value of CORESETpoolindex), in this case, UE may report both PH 1 and PH 2.

In one embodiment, a UE may provide the first type 1 PHR and the first configured maximum output power associated with the first TCI state for an actual UL transmission using a spatial domain filter corresponding only to the first TCI state, and provide the second type 1 PHR and the second configured maximum output power associated with the second TCI state for a reference UL transmission using a spatial domain filter corresponding only to the second TCI state.

In one embodiment, a UE may provide the first type 1 PHR and the first configured maximum output power associated with the second TCI state for an actual UL transmission using a spatial domain filter corresponding only to the second TCI state, and provide the second type 1 PHR and the second configured maximum output power associated with the second TCI state for a reference UL transmission using a spatial domain filter corresponding only to the first TCI state.

In one embodiment, for an actual UL transmission using a first spatial domain filter corresponding to the first TCI state and using a second spatial domain filter corresponding to the second TCI state, a UE may provide the first type 1 PHR and the first configured maximum output power associated with the first TCI state, and provide the second type 1 PHR and the second configured maximum output power associated with the second TCI state.

In one embodiment, for a reference UL transmission using a first spatial domain filter corresponding to the first TCI state and using a second spatial domain filter corresponding to the second TCI state, a UE may provide the first type 1 PHR and the first configured maximum output power associated with the first TCI state, and provide the second type 1 PHR and the second configured maximum output power associated with the second TCI state.

In one embodiment, a UE may provide the first type 1 PHR and the first configured maximum output power associated with the first TCI state for an actual UL transmission using a spatial domain filter corresponding only to the first TCI state.

In one embodiment, a UE may provide the second type 1 PHR and the second configured maximum output power associated with the second TCI state for an actual UL transmission using a spatial domain filter corresponding only to the second TCI state.

In one embodiment, Power Headroom i (PH i): this field may indicate the power headroom level, where PH 1 may be associated with the *SRS ResourceSet* with a lower *srs-ResourceSetId* and PH 2 may be associated with the *SRS ResourceSet* with a higher *srs-ResourceSetId.*

In one embodiment, P:

if mpe-Reporting-FR2 is configured and the Serving Cell operates on FR2, the MAC entity may set this field to 0 if the applied P-MPR value to meet MPE requirements is less than P-MPR_00 and to 1 otherwise;
if mpe-Reporting-FR2 is not configured or the Serving Cell operates on FR1, this field may indicate whether power backoff is applied due to power management;
the MAC entity may set the P field to 1 if the corresponding $P_{CMAX,f,c}$ field would have had a different value if no power backoff due to power management had been applied.

In one embodiment, V: this field may indicate if the PH value for the corresponding TRP is based on a real transmission or a reference format. For Type 1 PH, the V field set to 0 may indicate real transmission on PUSCH and the V field set to 1 may indicate that a PUSCH reference format is used.

In one embodiment, $P_{CMAX,f,c}$: this field may indicate the $P_{CMAX,f,c}$ used for calculation of the preceding PH field.

In one embodiment, MPE:

if mpe-Reporting-FR2 is configured, and the Serving Cell operates on FR2, and if the P field is set to 1, this field may indicate the applied power backoff to meet MPE requirements;

if mpe-Reporting-FR2 is not configured, or if the Serving Cell operates on FR1, or if the P field is set to 0, R bits may be present instead.

In one embodiment, a UE may be configured/activated/indicated with at least one periodic pattern by RRC/MAC CE/ DCI. In one embodiment, a UE may be configured/activated/indicated with N slots for a periodic time pattern by RRC/MAC CE/ DCI. Each periodic pattern may comprise at least one slot (or frame/symbol/ns). Each slot(or frame/symbol/ns) in the periodic pattern may associated with a pair of $\{\alpha_1, \alpha_2\}$.

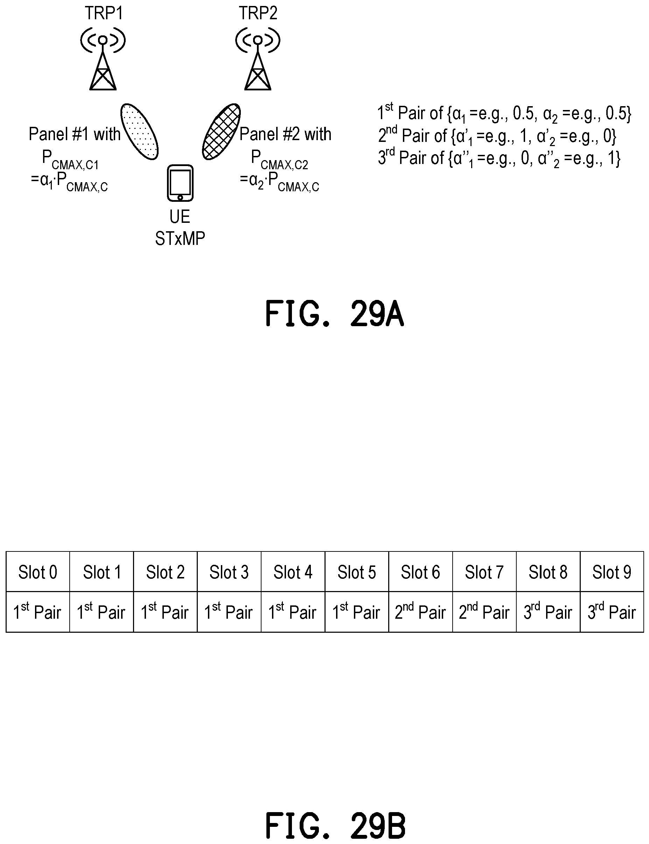

For example, FIG. 29A is a schematic diagram that illustrates power allocation with multiple pairs according to an exemplary embodiment of the present disclosure. Referring to FIG. 29A, panel#1 is associated with $\alpha_1 \cdot P_{CMAX,C}$, and panel#2 is associated with $\alpha_2 \cdot P_{CMAX,C}$. The first pair of $\{\alpha_1, \alpha_2\}$ is $\alpha_1 = 0.5$ and $\alpha_2 = 0.5$, the second pair of $\{\alpha_1, \alpha_2\}$ is $\alpha'_1 = 1$ and $\alpha'_2 = 0$, and the third pair of $\{\alpha_1, \alpha_2\}$ is $\alpha''_1 = 0$ and $\alpha''_2 = 1$.

FIG. 29B is a schematic diagram that illustrates flexible power allocation by a configured periodic time pattern according to an exemplary embodiment of the present disclosure. Referring to FIG. 29B, a periodic pattern includes 10 slots. Slot 0 is associated with the first pair, Slot 1 is associated with the first pair, Slot 2 is associated with the first pair, Slot 3 is associated with the first pair, Slot 4 is associated with the first pair, Slot 5 is associated with the first pair, Slot 6 is associated with the second pair, Slot 7 is associated with the second pair, Slot 8 is associated with the third pair, Slot 9 is associated with the third pair.

In one embodiment, a UE may be configured/activated/indicated with at least one periodic pattern by RRC/MAC CE/DCI. In one embodiement, a UE may be configured/activated/indicated with N slots for a periodic time pattern by RRC/MAC CE/ DCI. Each periodic pattern may comprise at least one slot (or frame/symbol/ns). Each slot(or frame/symbol/ns) in the periodic pattern may associated with at least one candidate $\{\alpha_1, \alpha_2\}$ pair list.

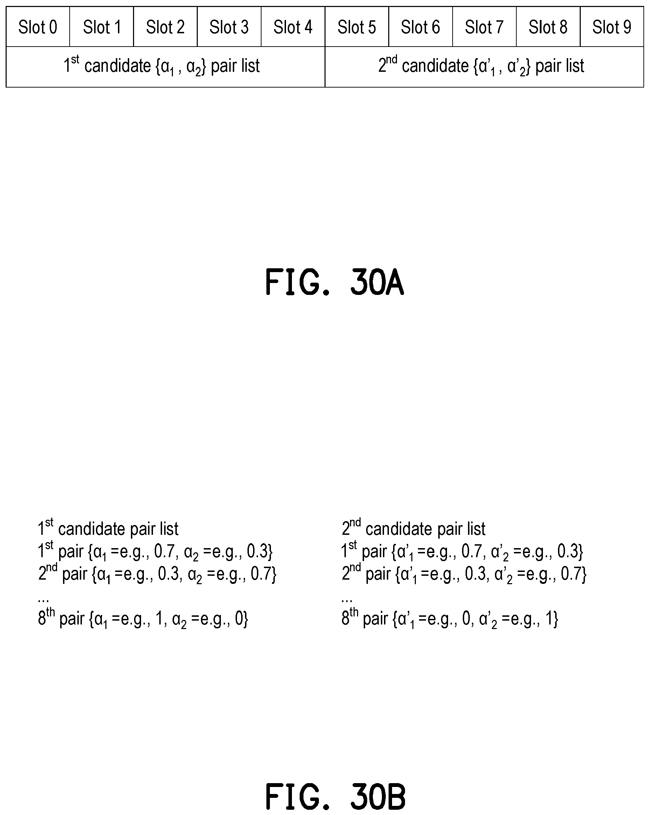

For example, FIG. 30A is a schematic diagram that illustrates flexible power allocation for a time pattern according to an exemplary embodiment of the present disclosure. Referring to FIG. 30A, a periodic pattern includes 10 slots. Slot 0 to Slot 4 are associated with the first candidate pair list, and Slot 5 to Slot 9 are associated with the second candidate pair list.

FIG. 30B is a schematic diagram that illustrates candidate pair lists according to an exemplary embodiment of the present disclosure. Referring to FIG. 30B, a UE may be configured activated/indicated with at least one candidate $\{\alpha_1, \alpha_2\}$ pair list by RRC/MAC CE/DCI. For example, the first candidate pair list includes eighth pairs, for example, the first pair is $\alpha_1 = 0.7$ and $\alpha_2 = 0.3$, and the second candidate pair list includes eighth pairs, for example, the first pair is $\alpha_1' = 0.7$ and $\alpha_2' = 0.3$. It should be noticed that the number of pairs and the parameter in each pair in one candidate pair list may be different from another list.

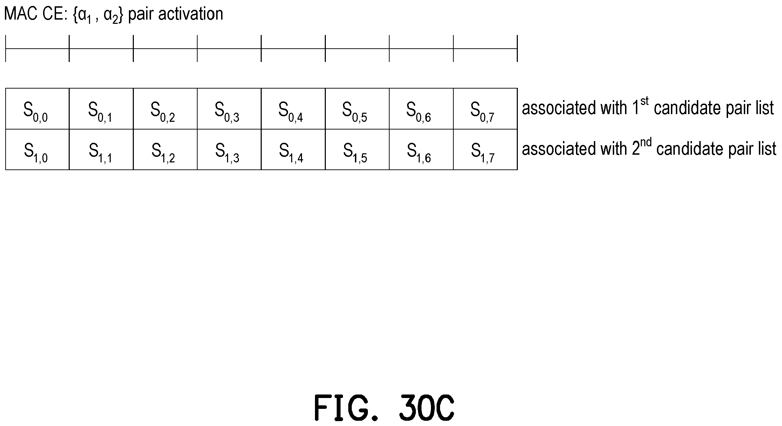

In one embodiment, a UE may be configured/activated/indicated at least one $\{\alpha_1, \alpha_2\}$ pair in the periodic pattern from at least one candidate $\{\alpha_1, \alpha_2\}$ pair list through RRC/MAC CE/DCI. For example, FIG. 30C is a schematic diagram that illustrates a configuration of MAC CE for time patterns according to an exemplary embodiment of the present disclosure. Referring to FIG. 30C, $S_{j,k}$ is a field that indicates whether to apply the (k+1)-th $\{\alpha_1, \alpha_2\}$ pair from the (j+1)-th candidate pair list in the periodic pattern. If this field is set to "1", the corresponding $\{\alpha_1, \alpha_2\}$ pair may be applied. If this field is set to "0", the corresponding $\{\alpha_1, \alpha_2\}$ pair may be not applied.

In one embodiment, a UE may be configured/activated/indicated with at least one periodic pattern by RRC/MAC CE/DCI. In one embodiment, a UE may be configured/activated/indicated with N slots for a periodic time pattern by RRC/MAC CE/ DCI. Each periodic pattern may comprise at least one slot (or frame/symbol/ns). Each slot(or frame/symbol/ns) in the periodic pattern may associated with at least one candidate $\{\alpha_1, \alpha_2\}$ pair list.

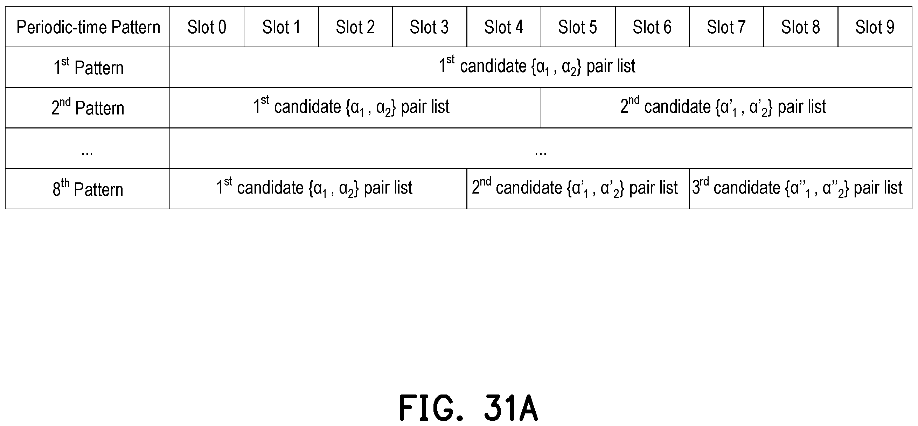

For example, FIG. 31A is a schematic diagram that illustrates flexible power allocation with a flexible time pattern according to an exemplary embodiment of the present disclosure. Referring to FIG. 31A, each periodic pattern includes 10 slots. The first pattern is the first candidate pair list for Slot 0 to Slot 9. The second pattern is the first candidate pair list for Slot 0 to Slot 4 and the second candidate pair list for Slot 5 to Slot 9. The eighth pattern is the first candidate pair list for Slot 0 to Slot 3, the second candidate pair list for Slot 4 to Slot 6, and the third candidate pair list for Slot 7 to Slot 9.

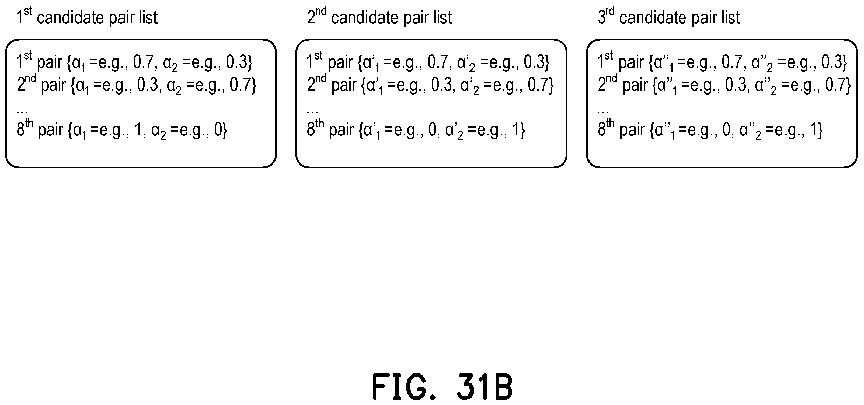

FIG. 31B is a schematic diagram that illustrates candidate pair lists according to an exemplary embodiment of the present disclosure. Referring to FIG. 31B, a UE may be configured activated/indicated with at least one candidate $\{\alpha_1, \alpha_2\}$ pair list by RRC/MAC CE/DCI. For example, the first candidate pair list includes eighth pairs, for example, the first pair is $\alpha_1 = 0.7$ and $\alpha_2 = 0.3$, the second candidate pair list includes eighth pairs, for example, the first pair is $\alpha_1' = 0.7$ and $\alpha_2' = 0.3$, and the third candidate pair list includes eighth pairs, for example, the first pair is $\alpha_1'' = 0.7$ and $\alpha_2'' = 0.3$. It should be noticed that the number of pairs and the parameter in each pair in one candidate pair list may be different from another list.

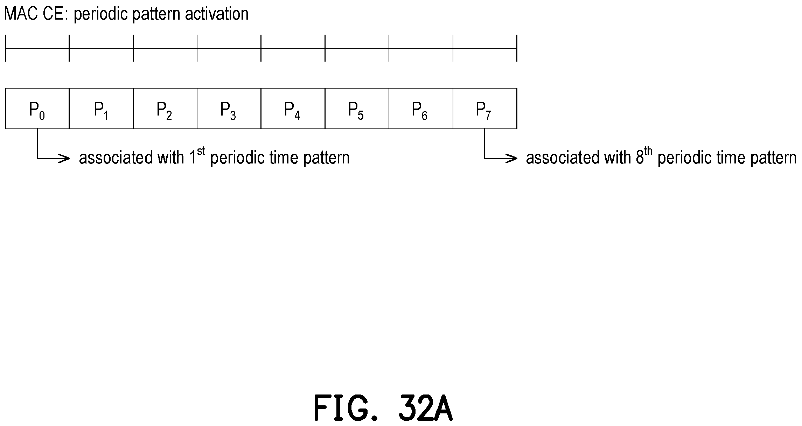

In one embodiment, a UE may be configured/activated/indicated at least one periodic time pattern through RRC/MAC CE/DCI. For example, FIG. 32A is a schematic diagram that illustrates a configuration of MAC CE for periodic time patterns according to an exemplary embodiment of the present disclosure. Referring to FIG. 32A, $P_m$ is a field that indicates whether to apply the (m+1)-th periodic time pattern. If this field is set to "1", the corresponding periodic pattern may be applied. If this field is set to "0", the corresponding periodic pattern may be not applied.

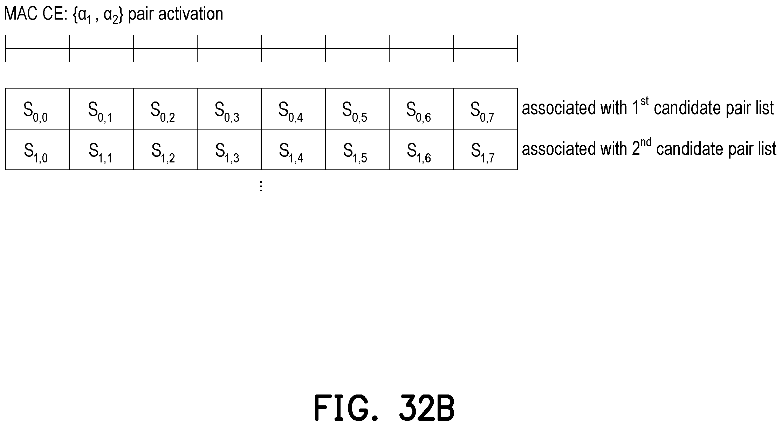

In one embodiment, a UE may be configured/activated/indicated at least one $\{\alpha_1 , \alpha_2\}$ pair in the periodic pattern from at least one candidate $\{\alpha_1 , \alpha_2\}$ pair list through RRC/MAC CE/DCI. For example, FIG. 32B is a schematic diagram that illustrates a configuration of MAC CE for candidate pair lists according to an exemplary embodiment of the present disclosure. Referring to FIG. 32B, $S_{j,k}$ is a field that indicates whether to apply the (k+1)-th $\{\alpha_1, \alpha_2\}$ pair from the (j+1)-th candidate pair list in the periodic pattern. If this field is set to "1", the corresponding $\{\alpha_1 , \alpha_2\}$ pair may be applied. If this field is set to "0", the corresponding $\{\alpha_1, \alpha_2\}$ pair may be not applied.

In one embodiment, a UE may be configured/activated/indicated with at least one pair of $\{\alpha_1 , \alpha_2\}$ by RRC/MAC CE/ DCI. In one embodiment, a UE may be configured/activated/indicated with N slots for a periodic time pattern by RRC/MAC CE/ DCI. In one embodiment, a UE may be configured/activated/indicated a ratio/percentage of allocated slots of the pair of $\{\alpha_1, \alpha_2\}$ by RRC/MAC CE/ DCI.

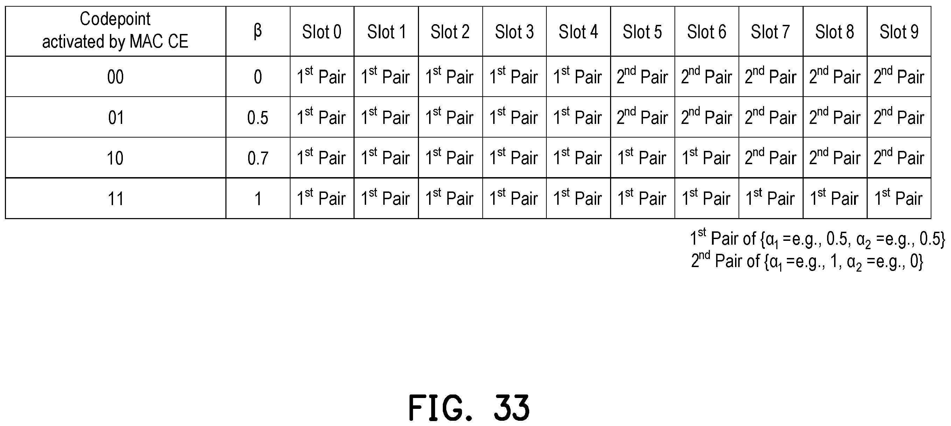

For example, FIG. 33 is a schematic diagram that illustrates the mapping table of codepoint and time patterns according to an exemplary embodiment of the present disclosure. Referring to FIG. 33, $\beta$ is the ratio of allocated slots of e.g., 1st pair of $\{\alpha_1, \alpha_2\}$ within the periodic time pattern. $(1-\beta)$ is the ratio of allocated slots of e.g., 2nd pair of $\{\alpha_1 , \alpha_2\}$ within the periodic time pattern. "00" represents $\beta = 0$, and Slot 0 to Slot 9 are associated with the second pair; "01" represents $\beta = 0.5$, Slot 0 to Slot 4 are associated with the first pair and Slot 5 to Slot 9 are associated with the second pair; "10" represents $\beta = 0.7$ and Slot 0 to Slot 6 are associated with the first pair and Slot 7 to Slot 9 are associated with the second pair; and "11" represents $\beta = 1$ and Slot 0 to Slot 9 are associated with the first pair.

In one embodiment, in response to a total transmission power of the UE exceeding a third configured maximum output power, a UE may allocate power to the at least one UL transmission in which a total transmission power for the at least one UL transmission is smaller than or equal to the third configured maximum output power.

In one embodiment, the total transmission power of the UE is associated with the first UL transmission power and the second UL transmission power.

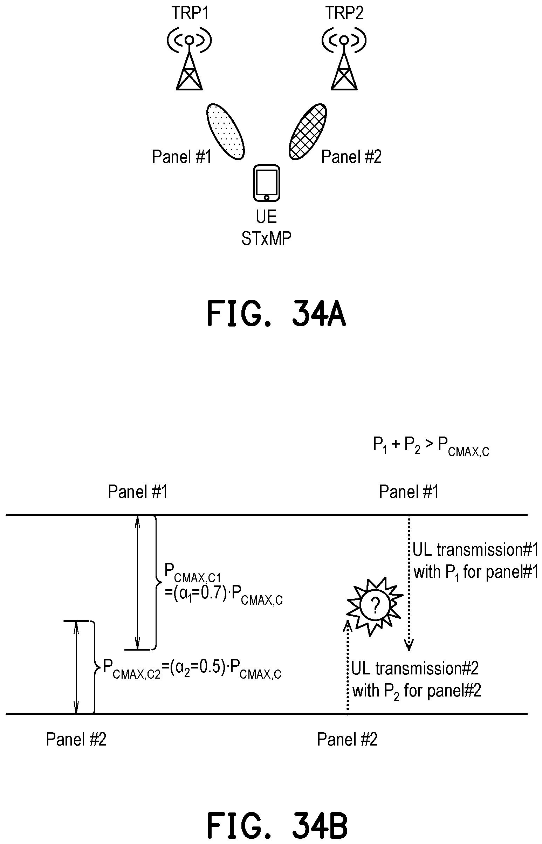

For example, FIG. 34A is a schematic diagram that illustrates a multi-panel transmission scheme with multi-TRP operation and priority order according to an exemplary embodiment of the present disclosure, and FIG. 34B is a schematic diagram that illustrates the issue of power allocation according to an exemplary embodiment of the present disclosure. Referring to FIG. 34A and FIG. 34B, if the total UE transmit power (e.g., the sum of UL transmission#1 with transmission power $P_1$ for panel#1, i.e., the first UL transmission power, and UL transmission#2 with transmission power $P_2$ for panel#2, i.e., the second UL transmission power,) is larger than configured $P_{CMAX,C}$, i.e., the third configured maximum output power, a UE may drop/reduce at least one UL transmissions according to at least one priority order. For example, the transmission power $P_2$ for panel#2 may be dropped or reduced.

In one embodiment, the at least one UL transmission includes multiple UL transmissions. A UE may allocate power to the plurality of UL transmissions according to a priority order in descending order. In one embodiment, the UE may prioritize one of UL transmissions with higher priority index in the priority order. In one embodiment, for two UL transmission with with same priority index in the priority order, the UE may allocate the power according to whether the two of the plurality of UL transmissions comprises at least one of hybrid automatic repeat request (HARQ)-acknowledgment (ACK) information and channel state information (CSI).

In one embodiment, the channel priority order may be predefined/fixed/configured in the following descending order so that the total UE transmit power for transmissions on a cell may be smaller than or equal to $P_{CMAX,C}$ in every symbol of transmission occasion i:

PUSCH transmissions with higher priority index;
for PUSCH transmissions with same priority index:

PUSCH transmission with HARQ-ACK information;
PUSCH transmission with CSI;
PUSCH transmission without HARQ-ACK information or CSI.

In one embodiment, in response to two UL transmissions having different priorities, a UE may drop one of the two UL transmissions with a lower priority-in the priority order.

In one embodiment, in response to two UL transmissions having different priorities, a UE may perform power reduction on one of two UL transmissions with a lower priority in the priority order.

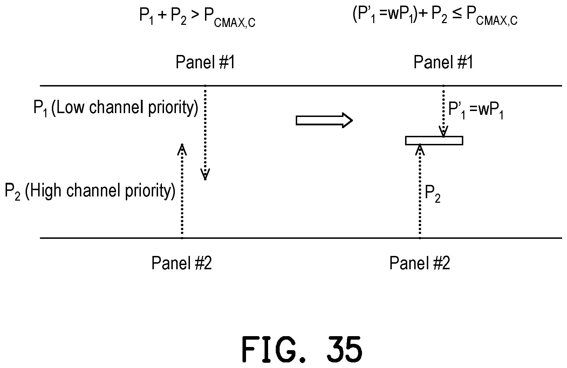

For example, FIG. 35 is a schematic diagram that illustrates the channel priority order of power allocation according to an exemplary embodiment of the present disclosure. Referring to FIG. 35, if two UL transmissions have different channel priority order and/or $P_1+P_2>P_{CMAX,C}$, the UE may drop UL transmission of the lower priority according to channel priority order, or the UE may perform power reduction of low priority UL transmission according to channel priority order, so that $P_1+P_2 \leq P_{CMAX,C}$. For example, $P'_1$ with lower priority is $wP_1$ where w is larger than 0 and less than 1. However, $P_2$ with high priority remain the same.

In one embodiment, the channel priority order may be predefined/fixed/configured in the following descending order:

PRACH transmission;
PUCCH or PUSCH transmissions with higher priority index;
for PUCCH or PUSCH transmissions with same priority index:

PUCCH transmission with HARQ-ACK information, and/or SR, and/or LRR, or PUSCH transmission with HARQ-ACK information;
PUCCH transmission with CSI or PUSCH transmission with CSI;
PUSCH transmission without HARQ-ACK information or CSI and, for Type-2 random access procedure, PUSCH transmission on the PCell;

SRS transmission:

Aperiodic SRS having;
Semi-persistent;
Periodic SRS.

In one embodiment, if two UL transmissions have different channel priority order and/or $P_1+P_2>P_{CMAX,C}$:

a UE may drop UL transmission of the lower priority according to channel priority order;
a UE may perform power reduction of low priority UL transmission according to channel priority order, so that $P_1+P_2 \leq P_{CMAX,C}$.

In one embodiment, if two UL transmissions have same channel priority order and/or $P_1+P_2>P_{CMAX,C}$, a UE may drop one of the UL transmissions according to TRP/panel priority order. In one embodiment, the TRP/panel priority order may be predefined/fixed/configured in the following descending order:

UL Transmission scheduled by a DCI associated with a first value of CORESETPoolIndex (e.g., CORESETPoolIndex #0);
UL Transmission scheduled by a DCI associated with a seconde value of CORESETPoolIndex (e.g., CORESETPoolIndex #1). The first value of CORESETPoolIndex and/or the second value of CORESETPoolIndex may be predefined/fixed/configured.

In one embodiment, two UL transmissions have same channel priority order and/or $P_1+P_2>P_{CMAX,C}$:

a UE may drop UL transmission of the lower priority according to TRP/panel priority order;
a UE may perform power reduction of low priority UL transmission according to TRP/panel priority order, so that $P_1+P_2 \leq P_{CMAX,C}$.

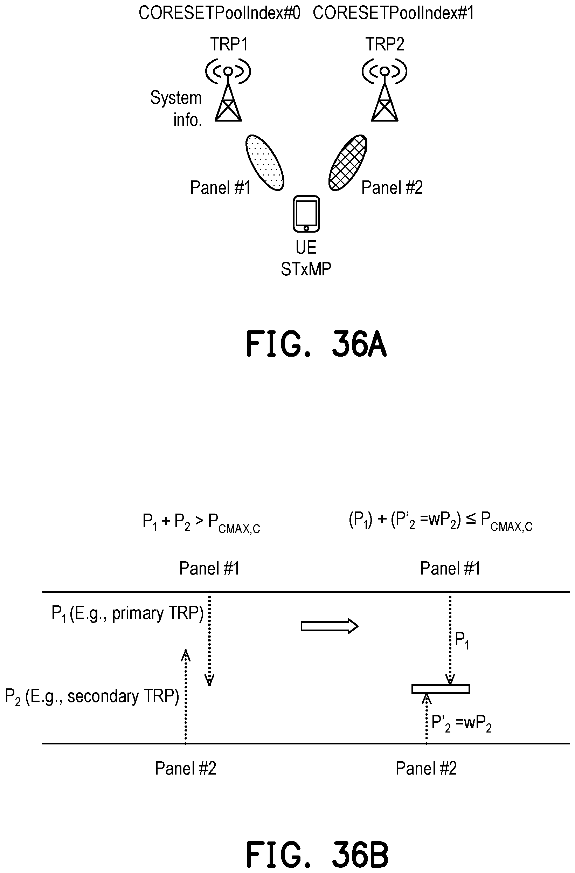

For example, FIG. 36A is a schematic diagram that illustrates a multi-panel transmission scheme with multi-TRP operation and priority order according to an exemplary embodiment of the present disclosure, and FIG. 36B is a schematic diagram that illustrates power reduction according to an exemplary embodiment of the present disclosure. Referring to FIG. 36A and FIG. 36B, $P_1$ is configured for primary/master TRP, e.g., TRP1 used for transmition system information, and $P_2$ is configured for secondary TRP, e.g., TRP2. Then, $P'_2$ with lower priority is $wP_2$ where w is larger than 0 and less than 1. However, $P_1$ with high priority remains the same.

In one embodiment, if two UL transmissions have same channel priority order and/or $P_1+P_2>P_{CMAX,C}$, a UE may drop one of the UL transmissions according to TRP/panel priority order.

In one embodiment, the TRP/panel priority order may be predefined/fixed/configured in the following descending order:

UL Transmission associated with a first SRS resource set indicated by a SRS resource set field in a DCI;

UL Transmission associated with a second SRS resource set indicated by a SRS resource set field in a DCI. The first SRS resource set and/or the second SRS resource set may be predefined/fixed/configured.

In one embodiment, the TRP/panel priority order may be predefined/fixed/configured in the following descending order:

spatial relation information of UL Transmission associated with a first applied joint/DL/UL TCI state;
spatial relation information of UL Transmission associated with a second applied joint/DL/UL TCI state. The first applied joint/DL/UL TCI state and/or the second applied joint/DL/UL TCI state may be predefined/fixed/configured.

In one embodiment, if two UL transmissions have same channel priority order and/or $P_1+P_2>P_{CMAX,C}$:

a UE may drop UL transmission of the lower priority according to TRP/panel priority order;
a UE may perform power reduction of low priority UL transmission according to TRP/panel priority order, so that $P_1+P_2 \leq P_{CMAX,C}$.

In one embodiment, if two UL transmissions have same channel priority order and/or $P_1+P_2>P_{CMAX,C}$, a UE may drop one of the UL transmissions according to partition priority order.

In one embodiment, the channel priority order may be predefined/fixed/configured in the following descending order:

UL Transmission with default maximum panel specific output power e.g., $P_{CMAX,Cn}$, $\alpha_n$ (n=1, or 2);
UL Transmission with indicated (or non-default/ non-configued) maximum panel specific output power e.g., $P_{CMAX,Cn}$, $\alpha_n$ (n=1, or 2).

In one embodiment, if two UL transmissions have same channel priority order and/or $P_1+P_2>P_{CMAX,C}$:

UE may drop UL transmission of the lower priority according to partition priority order;
UE may perform power reduction of low priority UL transmission according to partition priority order, so, that $(P'_1=wP_1) +P_2 \leq P_{CMAX,C}$.

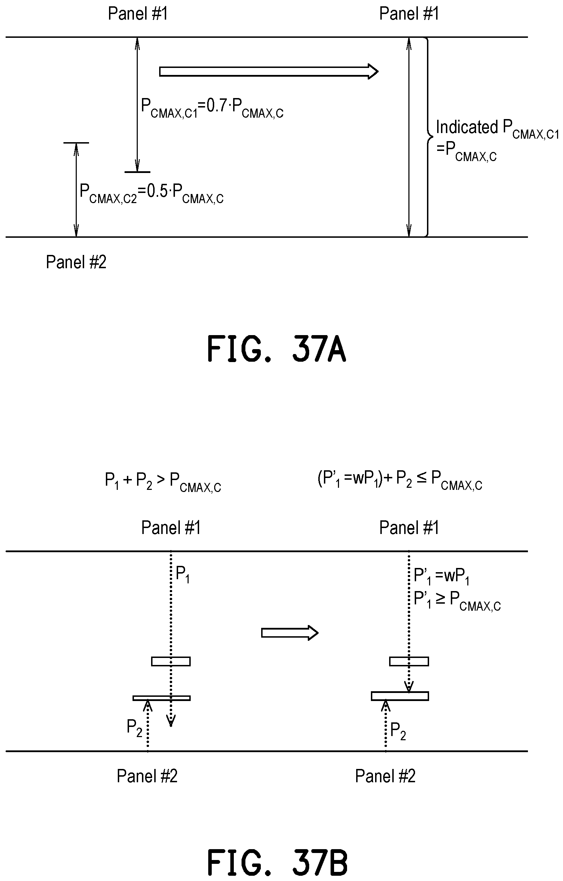

For example, FIG. 37A is a schematic diagram that illustrates power adjustment according to an exemplary embodiment of the present disclosure. Referring to FIG. 37A, $P_{CMAX,C1}+P_{CMAX,C2}=(\alpha_1=0.7)\cdot P_{CMAX,C} +(\alpha_2=0.5)\cdot P_{CMAX,C} >P_{CMAX,C}$. The UE may be configured with the indicated $P_{CMAX,C1} =$(e.g., $P_{CMAX,C}$) associated with panel#1.

Then, FIG. 37B is a schematic diagram that illustrates power reduction of low priority UL transmission according to an exemplary embodiment of the present disclosure. Referring to FIG. 37B, if $P_1+P_2>P_{CMAX,C}$, a UE may reduce $P_1$ by providing a weight w which is larger than 0 and less than 1 when $P'_1 \geq$ indicated $P_{CMAX,C1}$, so that $(P'_1=wP_1) +P_2 \leq P_{CMAX,C}$. That is, $P_1$ is reduced based on itself.

In one embodiment, a UE may allocate power to two UL transmissions according to an equal power reduction, where the equal power reduction reduces both the first UL transmission power and the second UL transmission power for the two UL transmissions. In one mbodiment, multiple UL transmissions are with same priority index.

In one embodiment, if two UL transmissions have same channel priority order and/or $P_1+P_2>P_{CMAX,C}$:

UE may drop UL transmission of the lower priority according to partition priority order;
UE may perform power reduction of low priority UL transmission according to partition priority order, so, that $(P'_1=wP_1) +P_2 \leq P_{CMAX,C}$;
if $P'_1 \leq$ Default/configured $P_{CMAX,C1}$, UE may perform equal power reduction, so that $(P'_1= w' (P_{CMAX,C1}) )+ (P'_2= w'P_2) \leq P_{CMAX,C}$.

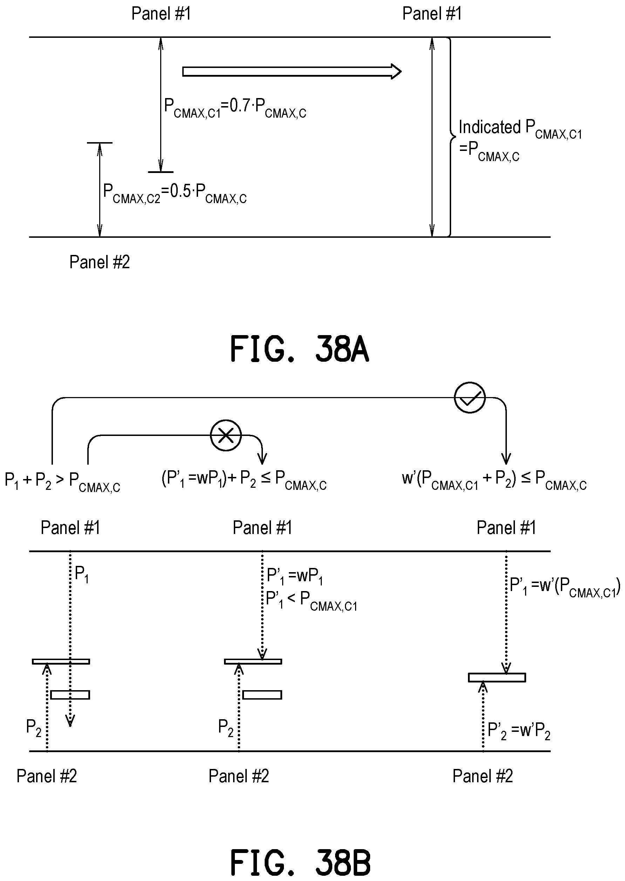

For example, FIG. 38A is a schematic diagram that illustrates power adjustment according to an exemplary embodiment of the present disclosure. Referring to FIG. 38A, $P_1+P_2=(\alpha_1=0.7)\cdot P_{CMAX,C} +(\alpha_2=0.5)\cdot P_{CMAX,C} >P_{CMAX,C}$. The UE may be configured with the indicated $P_{CMAX,C1} =$(e.g., $P_{CMAX,C}$) associated with panel#1.

Then, FIG. 38B is a schematic diagram that illustrates equal power reduction according to an exemplary embodiment of the present disclosure. Referring to FIG. 38B, if $P_1+P_2>P_{CMAX,C}$, a UE may not reduce $P_1$ by providing a weight w which is larger than 0 and less than 1, but may reduce $P_{CMAX,C1}$ and $P_2$ by providing a weight w' which is larger than 0 and less than 1, so that $w' (P_{CMAX,C1}+ P_2) \leq P_{CMAX,C}$. That is, $P_1$ is reduced based on $P_{CMAX,C1}$, and $P_2$ is reduced based on itself.

In one embodiment, if two UL transmissions have same channel priority order and/or $P_1+P_2>P_{CMAX,C}$, and/or if both UL Transmissions are indicated (or non-default/non-configured) maximum panel specific output power, and/or if both UL Transmissions are with $P_n > P_{CMAX,Cn}$ (e.g., n=1, or 2):

a UE may adjust power to $P_n$, so that $(P'_1 = P_{CMAX,C1}) + (P'_2 = P_{CMAX,C2}) \leq P_{CMAX,C}$; or

a UE may adjust power to $P_n$, $(P'_1 = wP_1) + (P'_2 = wP_2) \leq P_{CMAX,C}$.

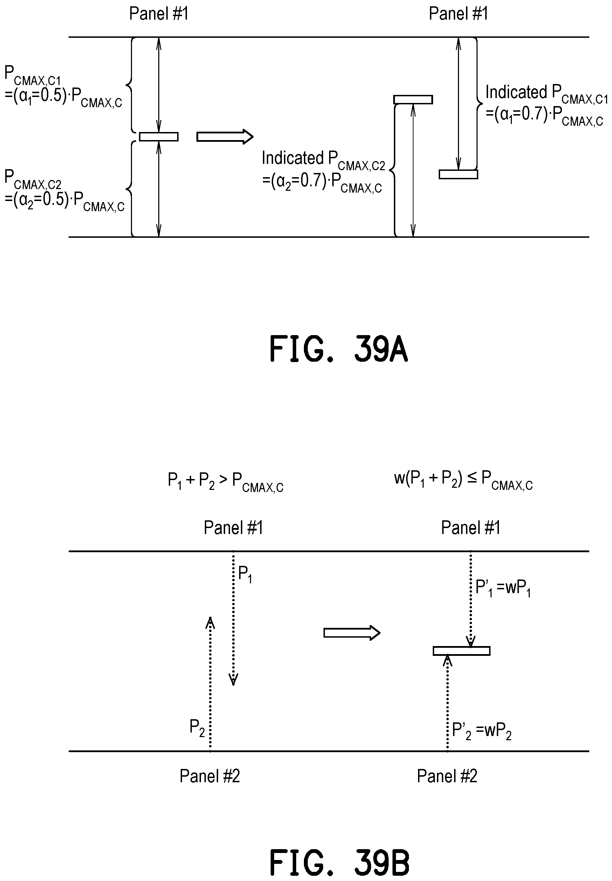

For example, FIG. 39A is a schematic diagram that illustrates power adjustment according to an exemplary embodiment of the present disclosure. Referring to FIG. 39A, $P_{CMAX,C1} + P_{CMAX,C2} = (\alpha_1 = 0.5) \cdot P_{CMAX,C} + (\alpha_2 = 0.5) \cdot P_{CMAX,C} = P_{CMAX,C}$. the UE may be configured with indicated $P_{CMAX,C1}$ and $P_{CMAX,C2}$, so that $P_{CMAX,C1} + P_{CMAX,C2} = (\alpha_1 = 0.7) \cdot P_{CMAX,C} + (\alpha_2 = 0.5) \cdot P_{CMAX,C} > P_{CMAX,C}$.

Then, FIG. 39B is a schematic diagram that illustrates weighted equal power reduction according to an exemplary embodiment of the present disclosure. Referring to FIG. 39B, if $P_1 + P_2 > P_{CMAX,C}$, a UE may reduce $P_1$ and $P_2$ by providing a weight w which is larger than 0 and less than 1, so that $w (P_1 + P_2) \leq P_{CMAX,C}$. That is, $P_1$ is reduced based on itself, and $P_2$ is reduced based on itself.

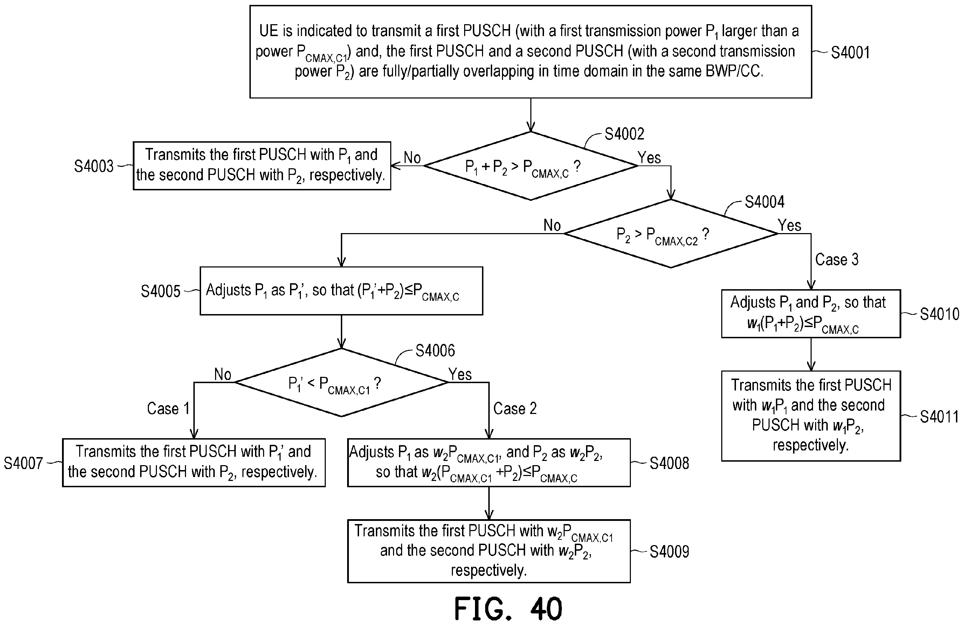

FIG. 40 is a flow chart that illustrates power allocation according to an exemplary embodiment of the present disclosure. Referring to FIG. 40, a UE may be indicated to transmit a first PUSCH (with a first transmission power $P_1$ larger than a maximum panel-specific power $P_{CMAX}$, ci) and, the first PUSCH and a second PUSCH (with a second transmission power $P_2$) are fully/partially overlapping in time domain in the same BWP/CC (step S4001). The UE may determine whether $P_1 + P_2 > P_{CMAX,C}$ (step S4002). In the case that $P_1 + P_2 \leq P_{CMAX,C}$, the UE may transmit the first PUSCH with $P_1$ and the second PUSCH with $P_2$, respectively (step S4003).

In the case that $P_1 + P_2 > P_{CMAX,C}$, the UE may further determine whether $P_2 < P_{CMAX,C2}$ (step S4004). In the case that $P_2 < P_{CMAX,C2}$, the UE may adjust $P_1$ as $P_1'$, so that $(P_1' + P_2) \leq P_{CMAX,C}$ (step S4005). Then, the UE may determine whether $P_1' < P_{CMAX,C1}$ (step S4006). In the case that, $P_1' \leq P_{CMAX,C1}$, the UE may transmit the first PUSCH with $P_1'$ and the second PUSCH with $P_2$, respectively (step S4007), for example, as shown in FIG. 37A and FIG. 37B.

In the case, $P_1' < P_{CMAX,C1}$, the UE may adjust $P_1$ as $w_2 P_{CMAX,C1}$, and $P_2$ as $w_2 P_2$, so that $w_2(P_{CMAX,C1} + P_2) \leq P_{CMAX,C}$ (step S4008), and transmit the first PUSCH with $w_2 P_{CMAX,C1}$ and the second PUSCH with $w_2 P_2$, respectively (step S4009), for example, as shown in FIG. 38A and FIG. 38B.

In a case that $P_2 < P_{CMAX,C2}$, the UE may adjust $P_1$ and $P_2$, so that $w_1(P_1 + P_2) \leq P_{CMAX,C}$ (step S4010), and transmit the first PUSCH with $w_1 P_1$ and the second PUSCH with $w_1 P_2$, respectively (step S4011), for example, as shown in FIG. 39A and FIG. 39B.

In one embodiment, if two UL transmissions have same channel priority order and/or $P_1 + P_2 > P_{CMAX,C}$, a UE may perform equal power reduction, so, that $(P'_1 = wP_1) + (P'_2 = wP_2) \leq P_{CMAX,C}$.

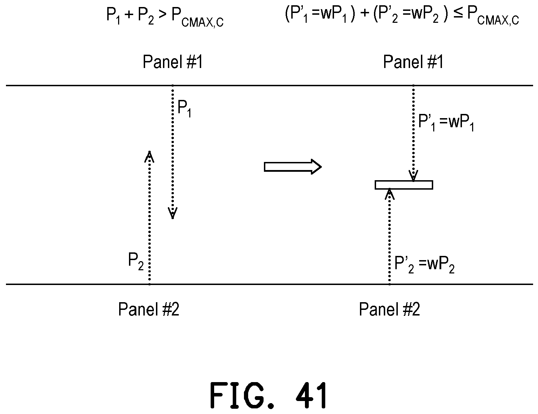

For example, FIG. 41 is a schematic diagram that illustrates equal power reduction according to an exemplary embodiment of the present disclosure. Referring to FIG. 41, if $P_1 + P_2 > P_{CMAX,C}$, a UE may reduce $P_1$ and $P_2$ by providing the same weight w which is larger than 0 and less than 1, so that $w (P_1 + P_2) \leq P_{CMAX,C}$. That is, $P_1$ is reduced based on itself, and $P_2$ is reduced based on itself.

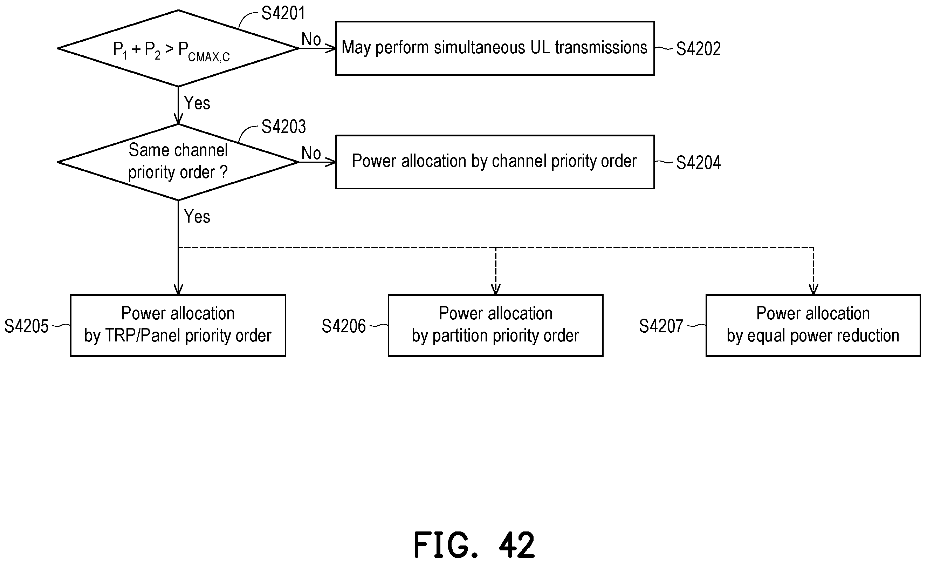

FIG. 42 is a flow chart that illustrates the priority order of allocated power according to an exemplary embodiment of the present disclosure. Referring to FIG. 42, a UE may determine whether $P_1 + P_2 > P_{CMAX,C}$ (step S4201). In the case that $P_1 + P_2 \leq P_{CMAX,C}$, the UE may perform simultaneous UL transmissions with $P_1$ and $P_2$, respectively (step S4202).

In the case that $P_1 + P_2 > P_{CMAX,C}$, the UE may further determine whether the UL tansmisisons have the same channel priority order (step S4203). In the case that, the UL tansmisisons have different channel priority orders, the UE may perform power allocatiuon by the channel priority orders (step S4204). For example, the UE drop the UL tansmision with lower channel priority order or reduce the tranmision power associated with the UL tansmision with lower channel priority order.

In the case that the UL tansmisisons have the same channel priority order, the UE may perform power allocation by TRP/Panel priority order (step S4205), for example, as shown in FIG. 36B, or the UE may perform power allocation by partition priority order (step S4206), for example, as shown in FIG. 37A to FIG. 39B, or the UE may perform power allocation by equal power reduction (step S4207), for example, as shown in FIG. 41.

In one embodiment, a UE may report at least one capability, where at least one capability may include at least one of following:

indicating whether the UE supports panel/TRP specific maximum output power;
if support, UE may perform Flexible Power Allocation and/or Priority Order of Allocated Power on STxMP;
if not support, UE may perform Priority Order of Allocated Power on STxMP;
indicating whether the UE supports Flexible Power Allocation by DCI;
indicating whether the UE supports Flexible Power Allocation by MAC CE;
indicating whether the UE supports Flexible Power Allocation by RRC.

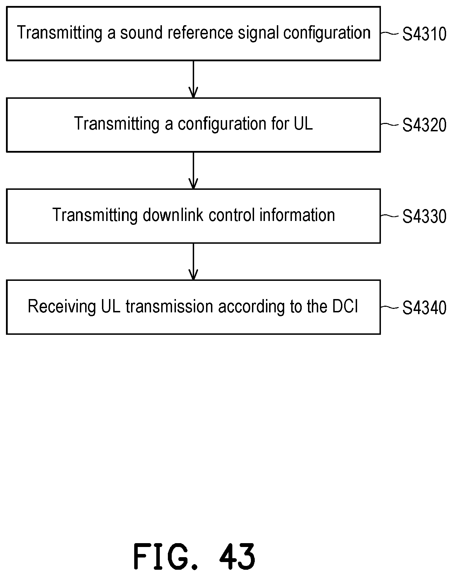

FIG. 43 is a flow chart that illustrates an UL reception with multiple panels related method according to an exemplary embodiment of the present disclosure. Referring to FIG. 43, the method is adapted for a network device. The network device transmits a sound reference signal (SRS) configuration (step S4310). The SRS configuration comprises a first SRS resource set, a second SRS resource set, and a usage of the first SRS resource set and the second SRS resource set, and the usage of the first SRS resource set and the second SRS resource set is for one of codebook scheme and non-codebook scheme.

The network device transmits a configuration for uplink (UL) (step S4320). The configuration for UL indicates a multi-panel transmission scheme.

The network device transmits a downlink control information (DCI) (step S4330). The DCI indicates that a first transmission configuration indicator (TCI) state is associated with the first SRS resource set and a second TCI state is associated with the second SRS resource set for the multi-panel transmission scheme.

The network device receives one or more UL transmissions according to the DCI (step S4340). The UL transmission includes one or more power headroom reports (PHRs).

In one embodiment, the first TCI state is configured as a joint TCI state for downlink (DL) or UL or configured as a TCI state for UL, and the second TCI state is configured as the joint TCI state for DL or UL or configured as the TCI state for UL.

In one embodiment, the multi-panel transmission scheme is one of single frequency network (SFN) scheme and spatial division multiplexing (SDM) scheme.

In one embodiment, the PHR includes at least one of a first type 1 PHR and a second type 1 PHR. A network device may transmit a configuration of a mode of the first type 1 PHR and the second type 1 PHR, and receive at least one of the first type 1 PHR and the second type 1 PHR. The network device may further receive the first type 1 PHR and a first configured maximum output power, and receive the second type 1 PHR and a second configured maximum output power.

In one embodiment, the first configured maximum output power is equivalent to the second configured maximum output power.

In one embodiment, the first configured maximum output power corresponds to the first TCI state, and the second configured maximum output power corresponds to the second TCI state.

In one embodiment, a network device may receive the first type 1 PHR and the first configured maximum output power associated with the first TCI state for an actual UL transmission using a spatial domain filter corresponding only to the first TCI state, and receive the second type 1 PHR and the second configured maximum output power associated with the second TCI state for a reference UL transmission using a spatial domain filter corresponding only to the second TCI state.

In one embodiment, a network device may receive the first type 1 PHR and the first configured maximum output power associated with the second TCI state for an actual UL transmission using a spatial domain filter corresponding only to the second TCI state, and receive the second type 1 PHR and the second configured maximum output power associated with the second TCI state for a reference UL transmission using a spatial domain filter corresponding only to the first TCI state.

In one embodiment, for an actual UL transmission using a first spatial domain filter corresponding to the first TCI state and using a second spatial domain filter corresponding to the second TCI state, a network device may receive the first type 1 PHR and the first configured maximum output power associated with the first TCI state, and receive the second type 1 PHR and the second configured maximum output power associated with the second TCI state.

In one embodiment, for a reference UL transmission using a first spatial domain filter corresponding to the first TCI state and using a second spatial domain filter corresponding to the second TCI state, a network device may receive the first type 1 PHR and the first configured maximum output power associated with the first TCI state, and receive the second type 1 PHR and the second configured maximum output power associated with the second TCI state.

In one embodiment, a network device may receive the first type 1 PHR and the first configured maximum output power associated with the first TCI state for an actual UL transmission using a spatial domain filter corresponding only to the first TCI state.

In one embodiment, a network device may receive the second type 1 PHR and the second configured maximum output power associated with the second TCI state for an actual UL transmission using a spatial domain filter corresponding only to the second TCI state.

In one embodiment, a network device may transmit a field of indication for transmitting the at least one UL transmission, wherein a first codepoint of the field is associated with a first configured maximum output power, and a second codepoint of the field is associated with a second configured maximum output power.

In one embodiment, the field is a parameter set of power control.

In one embodiment, in response to indicating the first codepoint, a UL transmission power of one or more UL transmissions are limited by the first configured maximum output power. In one embodiment, in response to indicating the second codepoint, a UL transmission power of one or more UL transmissions are limited by the second configured maximum output power.

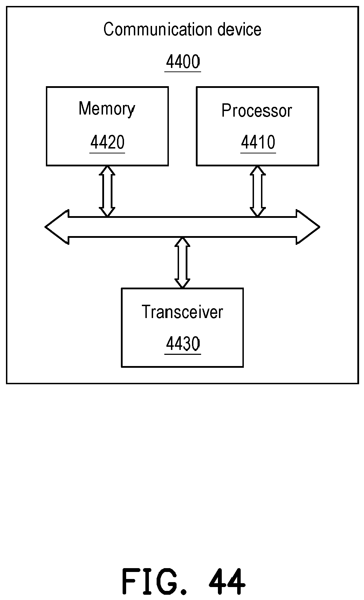

FIG. 44 is a block diagram that illustrates a communication device 4400 according to an exemplary embodiment of the present disclosure. Referring to FIG. 44, the communication device 4400 may be a UE or a network device. The communication device 4400 may include, but is not limited thereto a processor 4410. The processor 4410 (e.g., having processing circuitry) may include an intelligent hardware device, e.g., a Central Processing Unit (CPU), a microcontroller, an ASIC, etc. The processor 4410 can call and run a computer program from memory to implement the method in the embodiment of the disclosure.

Since the program code stored in the communication device 4400 adopts all the technical solutions of all the foregoing embodiments when being executed by the processor 4410, it at least has all the advantageous effects brought by all the technical solutions of all the foregoing embodiments, and no further description is incorporated herein.

Optionally, as shown in FIG. 44, the communication device 4400 may further include a memory 4420. The memory 4420 may include computer-storage media in the form of volatile and/or non-volatile memory. The memory 4420 may be removable, non-removable, or a combination thereof. Exemplary memory includes solid-state memory, hard drives, optical-disc drives, etc. The processor 4410 may call and run a computer program from the memory 4420 to implement the method in the embodiment of the disclosure.

The memory 4420 may be a separate device independent of the processor 4410, or may be integrated in the processor 4410.

Optionally, as shown in FIG. 44, the communication device 4400 may further include a transceiver 4430, and the processor 4410 may control the transceiver 4430 to communicate with other devices. The transceiver 4430 having a transmitter (e.g., transmitting/transmission circuitry) and a receiver (e.g., receiving/reception circuitry) may be configured to transmit and/or receive time and/or frequency resource partitioning information. In some implementations, the transceiver 4430 may be configured to transmit in different types of subframes and slots including, but not limited to, usable, non-usable and flexibly usable subframes and slot formats. The transceiver 4430 may be configured to receive data and control channels.

Specifically, the transceiver 4430 may send information or data to other devices, or receive information or data sent by other devices.

Specifically, the transceiver 4430 may include a transmitter and a receiver. The transceiver 4430 may further include an antenna, and the number of antennas may be one or more.

Optionally, the communication device 4400 may specifically be a network device in an embodiment of the disclosure, and the communication device 4400 may implement the corresponding process implemented by the network device in various methods of the embodiment of the disclosure. For the conciseness, related descriptions are omitted.

Optionally, the communication device 4400 may specifically be a mobile terminal, a terminal device, or a UE in an embodiment of the disclosure, and the communication device 4400 may implement the corresponding process implemented by the mobile terminal, the terminal device, or the UE in various methods in the embodiment of the disclosure. For conciseness, related description is omitted.

In summary, in the UL transmission and UL reception with multiple panels related methods and UE of the embodiments of the disclosure, power allocation for multi-panel transmission is introduced. Therefore, the reliability and efficiency of UL transmission may be improved, and the embodiment could be applicable to STxMP for UL transmission.

**Claims**

1. An uplink, named UL, transmission with multiple panels (panel#1, panel#2) related method, adapted for a user equipment, named UE (UE, UE1, UE2, 4400), comprising:

   receiving a sound reference signal, named SRS, configuration, wherein the SRS configuration comprises a first SRS resource set, a second SRS resource set, and a usage of the first SRS resource set and the second SRS resource set, and the usage of the first SRS resource set and the second SRS resource set is for one of codebook scheme and non-codebook scheme;
   receiving a configuration for UL, wherein the configuration for UL indicates a multi-panel transmission scheme;
   receiving a downlink control information, named DCI, wherein the DCI indicates that a first transmission configuration indicator, named TCI, state is associated with the first SRS resource set and a second TCI state is associated with the second SRS resource set for the multi-panel transmission scheme; and
   transmitting at least one UL transmission according to the DCI, wherein the at least one UL transmission comprises at least one power headroom report, PHR.

2. The UL transmission with multiple panels (panel#1, panel#2) related method according to claim 1, wherein the first TCI state is configured as a joint TCI state for downlink, named DL, or UL or configured as a TCI state for UL, and the second TCI state is configured as the joint TCI state for DL or UL or configured as the TCI state for UL.

3. The UL transmission with multiple panels (panel#1, panel#2) related method according to claim 1, wherein the multi-panel transmission scheme is one of single frequency network, named SFN, scheme and spatial division multiplexing, named SDM, scheme.

4. The UL transmission with multiple panels (panel#1, panel#2) related method according to claim 1, wherein the at least one PHR comprises at least one of a first type 1 PHR and a second type 1 PHR, and the method further comprises:

   receiving a configuration of a mode of the first type 1 PHR and the second type 1 PHR; and
   providing at least one of the first type 1 PHR and the second type 1 PHR, comprising at least one of:

   providing the first type 1 PHR and a first configured maximum output power ($P_{CMAX,C1}$); and
   providing the second type 1 PHR and a second configured maximum output power ($P_{CMAX,C2}$).

5. The UL transmission with multiple panels (panel#1, panel#2) related method according to claim 4, wherein the first configured maximum output power ($P_{CMAX,C1}$) is equivalent to the second configured maximum output power ($P_{CMAX,C2}$).

6. The UL transmission with multiple panels (panel#1, panel#2) related method according to claim 4, wherein

   the first configured maximum output power ($P_{CMAX,C1}$) corresponds to the first TCI state, and
   the second configured maximum output power ($P_{CMAX,C2}$) corresponds to the second TCI state.

7. The UL transmission with multiple panels (panel#1, panel#2) related method according to claim 4, further comprising: providing the first type 1 PHR and the first configured maximum output power ($P_{CMAX,C1}$) associated with the first TCI state for an actual UL transmission using a spatial domain filter corresponding only to the first TCI state, and providing the second type 1 PHR and the second configured maximum output power ($P_{CMAX,C2}$) associated with the second TCI state for a reference UL transmission using a spatial domain filter corresponding only to the second TCI state.

8. The UL transmission with multiple panels (panel#1, panel#2) related method according to claim 4, further comprising:

   providing the first type 1 PHR and the first configured maximum output power ($P_{CMAX,C1}$) associated with the second TCI state for an actual UL transmission using a spatial domain filter corresponding only to the second TCI state, and
   providing the second type 1 PHR and the second configured maximum output power ($P_{CMAX,C2}$) associated with the second TCI state for a reference UL transmission using a spatial domain filter corresponding only to the first TCI state.

9. The UL transmission with multiple panels (panel#1, panel#2) related method according to claim 4, wherein for an actual UL transmission using a first spatial domain filter corresponding to the first TCI state and using a second spatial domain filter corresponding to the second TCI state, the method further comprises:

   providing the first type 1 PHR and the first configured maximum output power ($P_{CMAX,C1}$) associated with the first TCI state; and
   providing the second type 1 PHR and the second configured maximum output power ($P_{CMAX,C2}$) associated with the second TCI state.

10. The UL transmission with multiple panels (panel#1, panel#2) related method according to claim 4, wherein for a reference UL transmission using a first spatial domain filter corresponding to the first TCI state and using a second spatial domain filter corresponding to the second TCI state, the method further comprises:

   providing the first type 1 PHR and the first configured maximum output power ($P_{CMAX,C1}$) associated with the first TCI state; and
   providing the second type 1 PHR and the second configured maximum output power ($P_{CMAX,C2}$) associated with the second TCI state.

**11.** The UL transmission with multiple panels (panel#1, panel#2) related method according to claim 4, further comprising: providing the first type 1 PHR and the first configured maximum output power ($P_{CMAX,C1}$) associated with the first TCI state for an actual UL transmission using a spatial domain filter corresponding only to the first TCI state.

**12.** The UL transmission with multiple panels (panel#1, panel#2) related method according to claim 4, further comprising: providing the second type 1 PHR and the second configured maximum output power ($P_{CMAX,C2}$) associated with the second TCI state for an actual UL transmission using a spatial domain filter corresponding only to the second TCI state.

**13.** The UL transmission with multiple panels (panel#1, panel#2) related method according to any one of claims 1-12, further comprising: determining a first UL transmission power (P1) and a second UL transmission power (P2) for the at least one UL transmission.

**14.** The UL transmission with multiple panels (panel#1, panel#2) related method according to claim 13, wherein the first UL transmission power (P1) corresponds to a first indicated TCI state, and the second UL transmission power (P2) corresponds to a second indicated TCI state.

**15.** The UL transmission with multiple panels (panel#1, panel#2) related method according to claim 13, further comprising: in response to a total transmission power of the UE (UE, UE1, UE2, 4400) exceeding a third configured maximum output power ($P_{CMAX,C}$), allocating power to the at least one UL transmission in which a total transmission power for the at least one UL transmission is smaller than or equal to the third configured maximum output power ($P_{CMAX,C}$).

**16.** The UL transmission with multiple panels (panel#1, panel#2) related method according to claim 15, wherein the total transmission power of the UE (UE, UE1, UE2, 4400) is associated with the first UL transmission power (P1) and the second UL transmission power (P2).

**17.** The UL transmission with multiple panels (panel#1, panel#2) related method according to claim 16, the at least one UL transmission comprises a plurality of UL transmissions, the method further comprises: allocating power to the plurality of UL transmissions according to a priority order in descending order, comprising:

prioritizing one of the plurality of UL transmissions with higher priority index in the priority order;
for two of the plurality of UL transmissions with same priority index in the priority order,
allocating the power according to whether the two of the plurality of UL transmissions comprises at least one of hybrid automatic repeat request, named HARQ, - acknowledgment, named ACK, information and channel state information, named CSI.

**18.** The UL transmission with multiple panels (panel#1, panel#2) related method according to claim 17, further comprising:

in response to the two of the plurality of UL transmissions having different priority, dropping one of the two of the plurality of UL transmissions with a lower priority in the priority order, or
in response to the two of the plurality of UL transmissions having different priority, performing power reduction on the one of the two of the plurality of UL transmissions with the lower priority in the priority order.

**19.** The UL transmission with multiple panels (panel#1, panel#2) related method according to claim 17, further comprising: allocating power to the two of the plurality of UL transmissions according to an equal power reduction, wherein the equal power reduction reduces both the first UL transmission power (P1) and the second UL transmission power (P2) for the two of the plurality of UL transmissions.

**20.** The UL transmission with multiple panels (panel#1, panel#2) related method according to claim 19, wherein the plurality of UL transmissions are with same priority index.

**21.** The UL transmission with multiple panels (panel#1, panel#2) related method according to any one of claims 1-12, further comprising: receiving a field of indication for transmitting the at least one UL transmission, wherein a first codepoint of the field is associated with a first configured maximum output power ($P_{CMAX,C1}$), and a second codepoint of the field is associated with a second configured maximum output power ($P_{CMAX,C2}$).

22. The UL transmission with multiple panels (panel#1, panel#2) related method according to claim 21, wherein the field is a parameter set of power control.

23. The UL transmission with multiple panels (panel#1, panel#2) related method according to claim 21, wherein

in response to the first codepoint being indicated, a UL transmission power of the at least one UL transmission is limited by the first configured maximum output power ($P_{CMAX,C1}$); and
in response to the second codepoint being indicated, the UL transmission power of the at least one UL transmission is limited by the second configured maximum output power ($P_{CMAX,C2}$).

24. A user equipment, named UE (UE, UE1, UE2, 4400), comprising:

a memory (4420), used for storing a program code; and
a processor (4410), coupled to the memory (4420), and configured for executing the program code to perform the method of any of claims 1 to 23.

25. An UL reception with multiple panels (panel#1, panel#2) related method, adapted for a network device, the method comprising:

transmitting a sound reference signal, SRS, configuration, wherein the SRS configuration comprises a first SRS resource set, a second SRS resource set, and a usage of the first SRS resource set and the second SRS resource set, and the usage of the first SRS resource set and the second SRS resource set is for one of codebook scheme and non-codebook scheme;
transmitting a configuration for uplink, UL, wherein the configuration for UL indicates a multi-panel transmission scheme;
transmitting a downlink control information, DCI, wherein the DCI indicates that a first transmission configuration indicator, TCI, state is associated with the first SRS resource set and a second TCI state is associated with the second SRS resource set for the multi-panel transmission scheme; and
receiving at least one UL transmission according to the DCI, wherein the at least one UL transmission comprises at least one power headroom report, PHR.

26. The UL reception with multiple panels (panel#1, panel#2) related method according to claim 25, wherein the first TCI state is configured as a joint TCI state for downlink, DL, or UL or configured as a TCI state for UL, and the second TCI state is configured as the joint TCI state for DL or UL or configured as the TCI state for UL.

27. The UL reception with multiple panels (panel#1, panel#2) related method according to claim 25, wherein the multi-panel transmission scheme is one of single frequency network, SFN, scheme and spatial division multiplexing, SDM, scheme.

28. The UL reception with multiple panels (panel#1, panel#2) related method according to claim 25, wherein the at least one PHR comprises at least one of a first type 1 PHR and a second type 1 PHR, and the method further comprises:

transmitting a configuration of a mode of the first type 1 PHR and the second type 1 PHR; and
receiving at least one of the first type 1 PHR and the second type 1 PHR, comprising at least one of:

receiving the first type 1 PHR and a first configured maximum output power ($P_{CMAX,C1}$); and
receiving the second type 1 PHR and a second configured maximum output power ($P_{CMAX,C2}$).

29. The UL reception with multiple panels (panel#1, panel#2) related method according to claim 28, wherein the first configured maximum output power ($P_{CMAX,C1}$) is equivalent to the second configured maximum output power ($P_{CMAX,C2}$).

30. The UL reception with multiple panels (panel#1, panel#2) related method according to claim 28, wherein

the first configured maximum output power ($P_{CMAX,C1}$) corresponds to the first TCI state, and

the second configured maximum output power ($P_{CMAX,C2}$) corresponds to the second TCI state.

**31.** The UL reception with multiple panels (panel#1, panel#2) related method according to claim 28, further comprising:

receiving the first type 1 PHR and the first configured maximum output power ($P_{CMAX,C1}$) associated with the first TCI state for an actual UL transmission using a spatial domain filter corresponding only to the first TCI state; and

receiving the second type 1 PHR and the second configured maximum output power ($P_{CMAX,C2}$) associated with the second TCI state for a reference UL transmission using a spatial domain filter corresponding only to the second TCI state.

**32.** The UL reception with multiple panels (panel#1, panel#2) related method according to claim 28, further comprising:

receiving the first type 1 PHR and the first configured maximum output power ($P_{CMAX,C1}$) associated with the second TCI state for an actual UL transmission using a spatial domain filter corresponding only to the second TCI state; and

receiving the second type 1 PHR and the second configured maximum output power ($P_{CMAX,C2}$) associated with the second TCI state for a reference UL transmission using a spatial domain filter corresponding only to the first TCI state.

**33.** The UL reception with multiple panels related method according to claim 28, wherein
for an actual UL transmission using a first spatial domain filter corresponding to the first TCI state and using a second spatial domain filter corresponding to the second TCI state, the method further comprises:

receiving the first type 1 PHR and the first configured maximum output power ($P_{CMAX,C1}$) associated with the first TCI state; and

receiving the second type 1 PHR and the second configured maximum output power ($P_{CMAX,C2}$) associated with the second TCI state.

**34.** The UL reception with multiple panels (panel#1, panel#2) related method according to claim 28, wherein
for a reference UL transmission using a first spatial domain filter corresponding to the first TCI state and using a second spatial domain filter corresponding to the second TCI state, the method further comprises:

receiving the first type 1 PHR and the first configured maximum output power ($P_{CMAX,C1}$) associated with the first TCI state; and

receiving the second type 1 PHR and the second configured maximum output power associated with the second TCI state.

**35.** The UL reception with multiple panels (panel#1, panel#2) related method according to claim 28, further comprising:
receiving the first type 1 PHR and the first configured maximum output power ($P_{CMAX,C1}$) associated with the first TCI state for an actual UL transmission using a spatial domain filter corresponding only to the first TCI state.

**36.** The UL reception with multiple panels (panel#1, panel#2) related method according to claim 28, further comprising:
receiving the second type 1 PHR and the second configured maximum output power ($P_{CMAX,C2}$) associated with the second TCI state for an actual UL transmission using a spatial domain filter corresponding only to the second TCI state.

**37.** The UL reception with multiple panels (panel#1, panel#2) related method according to any one of claims 25-36, further comprising:
transmitting a field of indication for transmitting the at least one UL transmission, wherein a first codepoint of the field is associated with a first configured maximum output power, and a second codepoint of the field is associated with a second configured maximum output power ($P_{CMAX,C2}$).

**38.** The UL reception with multiple panels (panel#1, panel#2) related method according to claim 37, wherein the field is a parameter set of power control.

**39.** The UL reception with multiple panels (panel#1, panel#2) related method according to claim 37, wherein

in response to indicating the first codepoint, a UL transmission power of the at least one UL transmission is limited by the first configured maximum output power ($P_{CMAX,C1}$); and

in response to indicating the second codepoint, the UL transmission power of the at least one UL transmission is limited by the second configured maximum output power ($P_{CMAX,C2}$).

TRP1

**FIG. 1A**

TRP1 TRP2

Panel #1 Panel #2

UE

**FIG. 1B**

TRP#1                              TRP#2

Backhaul

UL Grant                          UL Grant
DCI#1                             DCI#2
CORSETPoolIndex 0                 CORSETPoolIndex 1
Beam #1                          Beam #2
in panel #1                       in panel #2

UE
STxMP

# FIG. 2A

Resources of UL transmission
transmitted to TRP#1

Resources of UL transmission
transmitted to TRP#2

Slot n+1

Slot n

UL Grant
DCI#2

T/F resources
at TRP#2

UL Grant
DCI#1

Frequency

Time

T/F resources
at TRP#1                                          Spatial

# FIG. 2B

TRP#1　　　　　　　　TRP#2

Ideal
backhaul

UL Grant
DCI#1
　　　　PUSCH1　PUSCH1

Beam #1　　　　　　　　　Beam #2
in panel #1　　　　　　　in panel #2

UE
STxMP

# FIG. 2C

Resources of UL transmission
transmitted to TRP#1

Resources of UL transmission
transmitted to TRP#2

Slot n+1

Slot n

UL Grant
DCI#1

T/F resources
at TRP#1

T/F resources
at TRP#2

Frequency

Time

Spatial

# FIG. 2D

TRP#1             TRP#2

Layers $0 \sim N_1$        Layers $(N_1+1) \sim N$

UE

# FIG. 3A

TRP#1             TRP#2

Layers $0 \sim N_1$        Layers $0 \sim N_1$

UE

# FIG. 3B

TRP1　　　　　TRP2

Panel #1 with
$P_{CMAX,C1}$

Panel #2 with
$P_{CMAX,C2}$

UE
STxMP

# FIG. 4A

a) Power splitting　　　　　b) Partial power sharing

$P_{CMAX,C}$

$P_{CMAX,C1}$
$=\alpha \cdot P_{CMAX,C}$

$P_{CMAX,C2}$
$=(1-\alpha) \cdot P_{CMAX,C}$

$P_{CMAX,C1}$
$=(\alpha_1=0.6) \cdot P_{CMAX,C}$

$P_{CMAX,C2}$
$=(\alpha_2=0.6) \cdot P_{CMAX,C}$

# FIG. 4B

FIG. 5A

FIG. 5B

$$NW \begin{cases} NN \\ TRP\#1 \\ TRP\#2 \end{cases}$$

NN

TRP#1      TRP#2

UE1          UE2

1

FIG. 6

Receiving a sound reference signal configuration — S710

Receiving a configuration for UL — S720

Receiving a downlink control information — S730

Transmitting UL transmission according to the DCI — S740

# FIG. 7

A. Fixed Power splitting

$P_{CMAX,C1}$
$=\alpha_A \cdot P_{CMAX,C}$

$P_{CMAX,C2}$
$=(1-\alpha_A) \cdot P_{CMAX,C}$

# FIG. 8A

B. Configurable Power splitting

$P_{CMAX,C1}$
$=\alpha_B \cdot P_{CMAX,C}$

$P_{CMAX,C2}$
$=(1-\alpha_B) \cdot P_{CMAX,C}$

# FIG. 8B

C. Partial power sharing

$P_{CMAX,C1}$
$=\alpha_{C1} \cdot P_{CMAX,C}$

$P_{CMAX,C2}$
$=\alpha_{C2} \cdot P_{CMAX,C}$

# FIG. 8C

TRP1

TRP2

Panel #1

Panel #2

UE
STxMP

$P_{CMAX,C1} = \alpha_1 \cdot P_{CMAX,C}$

$P_{CMAX,C2} = \alpha_2 \cdot P_{CMAX,C}$

# FIG. 9A

Panel #1

Panel #1

$P_{CMAX,C1}$
$= (\alpha_1 = 0.5) \cdot P_{CMAX,C}$

DCI

$P_{CMAX,C1}$
$= (\alpha_1 = 0.7) \cdot P_{CMAX,C}$

$P_{CMAX,C2}$
$= (\alpha_2 = 0.5) \cdot P_{CMAX,C}$

$P_{CMAX,C2}$
$= (\alpha_2 = 0.5) \cdot P_{CMAX,C}$

Panel #2

Panel #2

# FIG. 9B

$$P_{CMAX,C1}=\alpha_1 \cdot P_{CMAX,C} \qquad P_{CMAX,C2}=\alpha_2 \cdot P_{CMAX,C}$$

| Codepoint of the new field | $\alpha_1$ | $\alpha_2$ |
|---|---|---|
| 000 (Default) | 0.5 | 0.5 |
| 001 | 0.7 | 0.3 |
| 010 | 0.3 | 0.7 |
| 011 | 0.7 | 0.5 |
| 100 | 0.5 | 0.7 |
| ... | ... | ... |

Power splitting
$$P_{CMAX,C1}+P_{CMAX,C2}=P_{CMAX,C}$$

Partial power sharing
$$P_{CMAX,C1}+P_{CMAX,C2}>P_{CMAX,C}$$

# FIG. 10

CORESETPoolIndex#0   CORESETPoolIndex#1

TRP1                        TRP2

Panel #1                                        Panel #2

$P_{CMAX,C1} = \alpha_1 \cdot P_{CMAX,C}$          $P_{CMAX,C2} = \alpha_2 \cdot P_{CMAX,C}$

UE
STxMP

# FIG. 11A

DCI#1 (UL grant) associated with          PUSCH scheduled by DCI#1
e.g., CORESETPoolIndex#0                        toward TRP1 with

Codepoint e.g., "011"
in the new field                                     $P_{CMAX,C1} = (\alpha_1 = 0.7) \cdot P_{CMAX,C}$

Time

# FIG. 11B

CORESETPoolIndex#0   CORESETPoolIndex#1

TRP1                 TRP2

Panel #1                              Panel #2
$P_{CMAX,C1}=\alpha_1 \cdot P_{CMAX,C}$        $P_{CMAX,C2}=\alpha_2 \cdot P_{CMAX,C}$

UE
STxMP

# FIG. 12A

DCI#1 activating a CG Type 2
PUSCH associated with e.g.,
CORESETPoolIndex#0

CG Type 2 PUSCH activated
by DCI#1 toward TRP1 with

CG Type 2 PUSCH activated
by DCI#1 toward TRP1 with

Codepoint e.g., "011"
in the new field

$P_{CMAX,C1}=(\alpha_1=0.7)\cdot P_{CMAX,C}$

$P_{CMAX,C1}=(\alpha_1=0.7)\cdot P_{CMAX,C}$ ...

Time

## FIG. 12B

Higher SINR for PUSCH modulation at TRP

E.g., High priority UL transmission
Power boosting according to open-loop
power control field in UL grant DCI

UE

# FIG. 13A

Power [dBm]

For power boosting $\begin{cases} \text{OLPC} = \text{"10"} \\ \text{OLPC} = \text{"01"} \end{cases}$

OLPC ="10"  $P_{0\_UE}$= 2nd value of P0-PUSCH e.g., associated with the lowest p0-PUSCH-SetID

OLPC ="01"  $P_{0\_UE}$= 1st value of P0-PUSCH e.g., associated with the lowest p0-PUSCH-SetID

OLPC ="00"  $P_{0\_UE}$= p0 configured by e.g., associated with p0-AlphaSets

FIG. 13B

Power [dBm]

If UL transmission is e.g., high priority for e.g., URLLC
- OLPC ="10"  $P_{0\_UE}$= 2nd value of P0-PUSCH  $\rightarrow \alpha_n$ =e.g., 1 (n=1, or 2)
- OLPC ="01"  $P_{0\_UE}$= 1st value of P0-PUSCH  $\rightarrow \alpha_n$ =e.g., 1 (n=1, or 2)

If UL transmission is e.g., low priority for e.g., eMBB
- OLPC ="11"  $P_{0\_UE}$= 2nd p0  $\rightarrow \alpha_n$ =e.g., 0.7 (n=1, or 2)
- OLPC ="00"  $P_{0\_UE}$= 1st p0  $\rightarrow P_{CMAX,Cn}$ (n=1, or 2)

FIG. 14

Panel #1

$P_{CMAX,C1}$
$=(\alpha_1=0.5) \cdot P_{CMAX,C}$

$P_{CMAX,C2}$
$=(\alpha_2=0.5) \cdot P_{CMAX,C}$

Panel #2

# FIG. 15A

DCI#1 (UL grant) associated with
e.g., CORESETPoolIndex#0

PUSCH scheduled by DCI#1
toward TRP1 with

Codepoint "00"
in the OLPC field

$P_{CMAX,C1}=(\alpha_1=0.5) \cdot P_{CMAX,C}$

Time

# FIG. 15B

Panel #1

$$P_{CMAX,C1} = P_{CMAX,C}$$

FIG. 16A

DCI#1 (UL grant) associated with
e.g., CORESETPoolIndex#0

PUSCH scheduled by DCI#1
toward TRP1 with

Codepoint e.g., "01" or "10"
in the OLPC field

$P_{CMAX,C1} = P_{CMAX,C}$

Time

FIG. 16B

Panel #1

$$P_{CMAX,C1} = (\alpha_1 = 0.5) \cdot P_{CMAX,C}$$

$$P_{CMAX,C2} = (\alpha_2 = 0.5) \cdot P_{CMAX,C}$$

Panel #2

# FIG. 17A

DCI#1 (UL grant) associated with e.g., CORESETPoolIndex#0

PUSCH scheduled by DCI#1 toward TRP1 with

Codepoint "00" in the OLPC field

$$P_{CMAX,C1} = (\alpha_1 = 0.5) \cdot P_{CMAX,C}$$

Time

# FIG. 17B

Panel #1

$P_{CMAX,C1}$
$=(\alpha_1=0.7)\cdot P_{CMAX,C}$

$P_{CMAX,C2}$
$=(\alpha_2=0.5)\cdot P_{CMAX,C}$

Panel #2

# FIG. 18A

DCI#1 (UL grant) associated with
e.g., CORESETPoolIndex#0

PUSCH scheduled by DCI#1
toward TRP1 with

Codepoint e.g., "11"
in the OLPC field

$P_{CMAX,C1}=(\alpha_1=0.7)\cdot P_{CMAX,C}$

Time

# FIG. 18B

TRP on → M-TRP operation

TRP1

TRP2

Panel #1

Panel #1

Panel #2

UE
STxMP

$P_{CMAX,C1}=(\alpha_1=\text{e.g.}, 0.5){\cdot}P_{CMAX,C}$

$P_{CMAX,C2}=(\alpha_2=\text{e.g.}, 0.5){\cdot}P_{CMAX,C}$

Panel #2

# FIG. 19A

TRP off → S-TRP operation due to e.g., TRP#2 off

TRP1

TRP2

Panel #1

Panel #1

UE
STxMP

$P_{CMAX,C1}=(\alpha_1=\text{e.g.}, 0.5){\cdot}P_{CMAX,C}$

$?$  $P_{CMAX,C2}=(\alpha_2=\text{e.g.}, 0.5){\cdot}P_{CMAX,C}$

Panel #2

# FIG. 19B

FIG. 20A

FIG. 20B

Panel #1

SS set group #0
E.g., for M-TRP operation

$P_{CMAX,C1}=(\alpha_1=\text{e.g., } 0.5){\cdot}P_{CMAX,C}$

$P_{CMAX,C2}=(\alpha_2=\text{e.g., } 0.5){\cdot}P_{CMAX,C}$

Panel #2

# FIG. 21A

Panel #1

SS set group #1
E.g., for S-TRP operation

$P_{CMAX,C1}=(\alpha_1=\text{e.g., } 1){\cdot}P_{CMAX,C}$

# FIG. 21B

| PDCCH monitoring adaptation indication | |
|---|---|
| 00 | No skipping in PDCCH monitoring |
| 01 | Skipping PDCCH monitoring for a $1^{st}$ duration |
| 10 | Skipping PDCCH monitoring for a $2^{nd}$ duration |
| 11 | Skipping PDCCH monitoring for a $3^{rd}$ duration |

PDCCHSkippingDurationList

FIG. 22A

DCI#1

Codepoint e.g., other than "0" or "00"
in PDCCH monitoring adaptation indication field

$T_0$ $T_1$ Time

Indicated duration for
stopping PDCCH monitoring

# FIG. 22B

The indicated DCI associated with CORESETPoolIndex#0

PDCCHSkippingDurationList#1 $P_{CMAX,C2}=(\alpha_2=e.g., 1)\cdot P_{CMAX,C}$

Panel #2

# FIG. 23A

The indicated DCI associated with CORESETPoolIndex#1

Panel #1

PDCCHSkippingDurationList#2 $P_{CMAX,C1}=(\alpha_1=e.g., 1)\cdot P_{CMAX,C}$

# FIG. 23B

CORESETPoolIndex#0    CORESETPoolIndex#1

TRP1    TRP2

PDCCH skipping

UE
STxMP

**FIG. 24A**

DCI#1 associated with e.g.,
CORESETPoolIndex#1

Codepoint indicates PDCCH skipping for a duration e.g., $N$
slots/symbols/ns in PDCCH monitoring adaptation indication field

$T_0$    $T_1$    Time

Indicated duration for stopping PDCCH
monitoring associated with e.g.,
CORESETPoolIndex#1

Panel #1

$P_{CMAX,C1} = (\alpha_1 = e.g., 1) \cdot P_{CMAX,C}$

**FIG. 24B**

FIG. 24C

## FIG. 25A

| P | V | PH X<br>{PH 1 (a lower SRS resource set ID) or<br>PH 2 (a higher SRS resource set ID)} |
|---|---|---|
| S | V or D | PH 2 (a higher SRS resource set ID) or R |
| MPE or R | | $P_{CMAX,C}$ |

## FIG. 25B

CORESETPoolIndex#0 $\otimes$

TRP1 TRP2

Triggering M-TRP
power headroom report
☐ ☐ ☐ ☐

PDCCH skipping

UE
STxMP

# FIG. 26A

| P | V | PH X = PH 1 (a lower SRS resource set ID) |
|---|---|---|
| S = "1" | D = "0" | R |
| MPE or R | | $P_{CMAX,C}$ |

# FIG. 26B

TRP1           TRP2

Panel #1
Lower SRS resource set ID          Panel#2
Higher SRS resource set ID

UE
STxMP

# FIG. 27A

| S | | R |
|---|---|---|
| P | V1 or R | PH 1 (a lower SRS resource set ID) or R |
| D | V2 or R | PH 2 (a higher SRS resource set ID) or R |
| MPE or R | | $P_{CMAX,C}$ |

# FIG. 27B

# FIG. 28A

| S = "1" | | R |
|---------|----|----|
| P | V1 | PH 1 (a lower SRS resource set ID) |
| D = "0" | R | R |
| MPE or R | | $P_{CMAX,C}$ |

# FIG. 28B

TRP1

TRP2

Panel #1 with $P_{CMAX,C1} = \alpha_1 \cdot P_{CMAX,C}$

Panel #2 with $P_{CMAX,C2} = \alpha_2 \cdot P_{CMAX,C}$

UE
STxMP

$1^{st}$ Pair of $\{\alpha_1 = $ e.g., 0.5, $\alpha_2 = $ e.g., 0.5$\}$
$2^{nd}$ Pair of $\{\alpha'_1 = $ e.g., 1, $\alpha'_2 = $ e.g., 0$\}$
$3^{rd}$ Pair of $\{\alpha''_1 = $ e.g., 0, $\alpha''_2 = $ e.g., 1$\}$

# FIG. 29A

| Slot 0 | Slot 1 | Slot 2 | Slot 3 | Slot 4 | Slot 5 | Slot 6 | Slot 7 | Slot 8 | Slot 9 |
|--------|--------|--------|--------|--------|--------|--------|--------|--------|--------|
| $1^{st}$ Pair | $1^{st}$ Pair | $1^{st}$ Pair | $1^{st}$ Pair | $1^{st}$ Pair | $1^{st}$ Pair | $2^{nd}$ Pair | $2^{nd}$ Pair | $3^{rd}$ Pair | $3^{rd}$ Pair |

# FIG. 29B

| Slot 0 | Slot 1 | Slot 2 | Slot 3 | Slot 4 | Slot 5 | Slot 6 | Slot 7 | Slot 8 | Slot 9 |
|---|---|---|---|---|---|---|---|---|---|
| 1st candidate $\{\alpha_1, \alpha_2\}$ pair list | | | | | 2nd candidate $\{\alpha'_1, \alpha'_2\}$ pair list | | | | |

# FIG. 30A

1st candidate pair list
1st pair $\{\alpha_1 = e.g., 0.7, \alpha_2 = e.g., 0.3\}$
2nd pair $\{\alpha_1 = e.g., 0.3, \alpha_2 = e.g., 0.7\}$
...
8th pair $\{\alpha_1 = e.g., 1, \alpha_2 = e.g., 0\}$

2nd candidate pair list
1st pair $\{\alpha'_1 = e.g., 0.7, \alpha'_2 = e.g., 0.3\}$
2nd pair $\{\alpha'_1 = e.g., 0.3, \alpha'_2 = e.g., 0.7\}$
...
8th pair $\{\alpha'_1 = e.g., 0, \alpha'_2 = e.g., 1\}$

# FIG. 30B

MAC CE: $\{\alpha_1, \alpha_2\}$ pair activation

| | | | | | | | |
|---|---|---|---|---|---|---|---|
| $S_{0,0}$ | $S_{0,1}$ | $S_{0,2}$ | $S_{0,3}$ | $S_{0,4}$ | $S_{0,5}$ | $S_{0,6}$ | $S_{0,7}$ |
| $S_{1,0}$ | $S_{1,1}$ | $S_{1,2}$ | $S_{1,3}$ | $S_{1,4}$ | $S_{1,5}$ | $S_{1,6}$ | $S_{1,7}$ |

associated with 1st candidate pair list

associated with 2nd candidate pair list

# FIG. 30C

| Periodic-time Pattern | Slot 0 | Slot 1 | Slot 2 | Slot 3 | Slot 4 | Slot 5 | Slot 6 | Slot 7 | Slot 8 | Slot 9 |
|---|---|---|---|---|---|---|---|---|---|---|
| 1st Pattern | 1st candidate $\{\alpha_1, \alpha_2\}$ pair list | | | | | | | | | |
| 2nd Pattern | 1st candidate $\{\alpha_1, \alpha_2\}$ pair list | | | | | 2nd candidate $\{\alpha'_1, \alpha'_2\}$ pair list | | | | |
| ... | ... | | | | | | | | | |
| 8th Pattern | 1st candidate $\{\alpha_1, \alpha_2\}$ pair list | | | | 2nd candidate $\{\alpha'_1, \alpha'_2\}$ pair list | | | 3rd candidate $\{\alpha''_1, \alpha''_2\}$ pair list | | |

FIG. 31A

EP 4 422 109 A1

1st candidate pair list

> 1st pair $\{\alpha_1 = \text{e.g.}, 0.7, \alpha_2 = \text{e.g.}, 0.3\}$
> 2nd pair $\{\alpha_1 = \text{e.g.}, 0.3, \alpha_2 = \text{e.g.}, 0.7\}$
> ...
> 8th pair $\{\alpha_1 = \text{e.g.}, 1, \alpha_2 = \text{e.g.}, 0\}$

2nd candidate pair list

> 1st pair $\{\alpha'_1 = \text{e.g.}, 0.7, \alpha'_2 = \text{e.g.}, 0.3\}$
> 2nd pair $\{\alpha'_1 = \text{e.g.}, 0.3, \alpha'_2 = \text{e.g.}, 0.7\}$
> ...
> 8th pair $\{\alpha'_1 = \text{e.g.}, 0, \alpha'_2 = \text{e.g.}, 1\}$

3rd candidate pair list

> 1st pair $\{\alpha''_1 = \text{e.g.}, 0.7, \alpha''_2 = \text{e.g.}, 0.3\}$
> 2nd pair $\{\alpha''_1 = \text{e.g.}, 0.3, \alpha''_2 = \text{e.g.}, 0.7\}$
> ...
> 8th pair $\{\alpha''_1 = \text{e.g.}, 0, \alpha''_2 = \text{e.g.}, 1\}$

FIG. 31B

MAC CE: periodic pattern activation

FIG. 32A

MAC CE: $\{\alpha_1, \alpha_2\}$ pair activation

| $S_{0,0}$ | $S_{0,1}$ | $S_{0,2}$ | $S_{0,3}$ | $S_{0,4}$ | $S_{0,5}$ | $S_{0,6}$ | $S_{0,7}$ | associated with 1st candidate pair list |
|---|---|---|---|---|---|---|---|---|
| $S_{1,0}$ | $S_{1,1}$ | $S_{1,2}$ | $S_{1,3}$ | $S_{1,4}$ | $S_{1,5}$ | $S_{1,6}$ | $S_{1,7}$ | associated with 2nd candidate pair list |

⋮

# FIG. 32B

| Codepoint activated by MAC CE | $\beta$ | Slot 0 | Slot 1 | Slot 2 | Slot 3 | Slot 4 | Slot 5 | Slot 6 | Slot 7 | Slot 8 | Slot 9 |
|---|---|---|---|---|---|---|---|---|---|---|---|
| 00 | 0 | 1st Pair | 1st Pair | 1st Pair | 1st Pair | 1st Pair | 2nd Pair | 2nd Pair | 2nd Pair | 2nd Pair | 2nd Pair |
| 01 | 0.5 | 1st Pair | 1st Pair | 1st Pair | 1st Pair | 1st Pair | 2nd Pair | 2nd Pair | 2nd Pair | 2nd Pair | 2nd Pair |
| 10 | 0.7 | 1st Pair | 1st Pair | 1st Pair | 1st Pair | 1st Pair | 1st Pair | 2nd Pair | 2nd Pair | 2nd Pair | 2nd Pair |
| 11 | 1 | 1st Pair | 1st Pair | 1st Pair | 1st Pair | 1st Pair | 1st Pair | 1st Pair | 1st Pair | 1st Pair | 1st Pair |

1st Pair of $\{\alpha_1 = $ e.g., $0.5, \alpha_2 = $ e.g., $0.5\}$
2nd Pair of $\{\alpha_1 = $ e.g., $1, \alpha_2 = $ e.g., $0\}$

FIG. 33

## FIG. 34A

$$P_1 + P_2 > P_{CMAX,C}$$

Panel #1                                    Panel #1

$P_{CMAX,C1}$
$=(\alpha_1=0.7)\cdot P_{CMAX,C}$

UL transmission#1
with $P_1$ for panel#1

$P_{CMAX,C2}=(\alpha_2=0.5)\cdot P_{CMAX,C}$

UL transmission#2
with $P_2$ for panel#2

Panel #2                                    Panel #2

## FIG. 34B

$$P_1 + P_2 > P_{CMAX,C} \qquad\qquad (P'_1 = wP_1) + P_2 \leq P_{CMAX,C}$$

Panel #1                     Panel #1

$P_1$ (Low channel priority)              $P'_1 = wP_1$

$P_2$ (High channel priority)              $P_2$

Panel #2                     Panel #2

# FIG. 35

CORESETPoolIndex#0   CORESETPoolIndex#1

TRP1                         TRP2

System
info.

Panel #1                      Panel #2

UE
STxMP

# FIG. 36A

$P_1 + P_2 > P_{CMAX,C}$            $(P_1) + (P'_2 = wP_2) \leq P_{CMAX,C}$

Panel #1                              Panel #1

$P_1$ (E.g., primary TRP)                                      $P_1$

$P_2$ (E.g., secondary TRP)

$P'_2 = wP_2$

Panel #2                              Panel #2

# FIG. 36B

FIG. 37A

FIG. 37B

Panel #1                                        Panel #1

$P_{CMAX,C1}=0.7 \cdot P_{CMAX,C}$

Indicated $P_{CMAX,C1}$
$=P_{CMAX,C}$

$P_{CMAX,C2}=0.5 \cdot P_{CMAX,C}$

Panel #2

# FIG. 38A

$P_1 + P_2 > P_{CMAX,C}$     $(P'_1 = wP_1) + P_2 \leq P_{CMAX,C}$     $w'(P_{CMAX,C1} + P_2) \leq P_{CMAX,C}$

Panel #1       Panel #1       Panel #1

$P_1$       $P'_1 = wP_1$       $P'_1 = w'(P_{CMAX,C1})$
$P'_1 < P_{CMAX,C1}$

$P_2$       $P_2$       $P'_2 = w'P_2$

Panel #2       Panel #2       Panel #2

# FIG. 38B

Panel #1                Panel #1

$P_{CMAX,C1}$
$=(\alpha_1 = 0.5) \cdot P_{CMAX,C}$

Indicated $P_{CMAX,C1}$
$=(\alpha_1 = 0.7) \cdot P_{CMAX,C}$

$P_{CMAX,C2}$
$=(\alpha_2 = 0.5) \cdot P_{CMAX,C}$

Indicated $P_{CMAX,C2}$
$=(\alpha_2 = 0.7) \cdot P_{CMAX,C}$

## FIG. 39A

$P_1 + P_2 > P_{CMAX,C}$          $w(P_1 + P_2) \le P_{CMAX,C}$

Panel #1                Panel #1

$P_1$               $P'_1 = wP_1$

$P_2$               $P'_2 = wP_2$

Panel #2                Panel #2

## FIG. 39B

UE is indicated to transmit a first PUSCH (with a first transmission power $P_1$ larger than a power $P_{CMAX,C1}$) and, the first PUSCH and a second PUSCH (with a second transmission power $P_2$) are fully/partially overlapping in time domain in the same BWP/CC. — S4001

S4003 — Transmits the first PUSCH with $P_1$ and the second PUSCH with $P_2$, respectively. ← No — S4002 $P_1 + P_2 > P_{CMAX,C}$ ? — Yes

No — S4004 $P_2 > P_{CMAX,C2}$ ? — Yes

Case 3

S4005 — Adjusts $P_1$ as $P_1'$, so that $(P_1'+P_2) \leq P_{CMAX,C}$

Adjusts $P_1$ and $P_2$, so that $w_1(P_1+P_2) \leq P_{CMAX,C}$ — S4010

S4006 No — $P_1' < P_{CMAX,C1}$ ? — Yes

Case 1

Case 2

Transmits the first PUSCH with $w_1 P_1$ and the second PUSCH with $w_1 P_2$, respectively. — S4011

S4007 — Transmits the first PUSCH with $P_1'$ and the second PUSCH with $P_2$, respectively.

Adjusts $P_1$ as $w_2 P_{CMAX,C1}$, and $P_2$ as $w_2 P_2$, so that $w_2(P_{CMAX,C1} +P_2) \leq P_{CMAX,C}$ — S4008

Transmits the first PUSCH with $w_2 P_{CMAX,C1}$ and the second PUSCH with $w_2 P_2$, respectively. — S4009

FIG. 40

$$P_1 + P_2 > P_{CMAX,C} \qquad (P'_1 = wP_1) + (P'_2 = wP_2) \leq P_{CMAX,C}$$

Panel #1                      Panel #1

$P_1$                $P'_1 = wP_1$

$P_2$                $P'_2 = wP_2$

Panel #2                      Panel #2

# FIG. 41

S4201

$P_1 + P_2 > P_{CMAX,C}$ ──No──▶ May perform simultaneous UL transmissions ─ S4202

Yes

S4203

Same channel priority order ? ──No──▶ Power allocation by channel priority order ─ S4204

Yes

S4205 ─ Power allocation by TRP/Panel priority order

S4206 ─ Power allocation by partition priority order

S4207 ─ Power allocation by equal power reduction

FIG. 42

Transmitting a sound reference signal configuration — S4310

Transmitting a configuration for UL — S4320

Transmitting downlink control information — S4330

Receiving UL transmission according to the DCI — S4340

# FIG. 43

Communication device

4400

Memory

4420

Processor

4410

Transceiver

4430

FIG. 44

Europäisches
Patentamt

European
Patent Office

Office européen
des brevets

# EUROPEAN SEARCH REPORT

Application Number

EP 24 15 5867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2022/178074 A1 (OFINNO LLC [US])<br>25 August 2022 (2022-08-25)<br>* paragraphs [0334], [0383], [0381], [0071] * | 1-14,<br>26-36<br>15-23,<br>37-39 | INV.<br>H04L5/00<br>H04W52/36 |
| X | WO 2022/238937 A1 (ERICSSON TELEFON AB L M [SE]) 17 November 2022 (2022-11-17)<br>* paragraphs [0037], [0111], [0113] * | 1-14,<br>26-36 | |
| A | PATRICK MERIAS ET AL: "Summary #2 on Rel-18 STxMP",<br>3GPP DRAFT; R1-2212580; TYPE DISCUSSION; NR_MIMO_EVO_DL_UL-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE<br>,<br>vol. 3GPP RAN 1, no. Toulouse, FR;<br>20221114 - 20221118<br>17 November 2022 (2022-11-17),<br>XP052223132,<br>Retrieved from the Internet:<br>URL:https://www.3gpp.org/ftp/TSG_RAN/WG1_RL1/TSGR1_111/Docs/R1-2212580.zip<br>R1-2212580.docx<br>[retrieved on 2022-11-17]<br>* section 1 *<br>* subsection 3.2.2 * | 1-39 | TECHNICAL FIELDS SEARCHED (IPC)<br><br>H04L<br>H04W |

The present search report has been drawn up for all claims

| Place of search | Date of completion of the search | Examiner |
|---|---|---|
| The Hague | 22 July 2024 | Anghel, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 5867

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2024

| Patent document cited in search report | Publication date | Patent family member(s) | Publication date |
|---|---|---|---|
| WO 2022178074 A1 | 25-08-2022 | CN 117083829 A | 17-11-2023 |
| | | EP 4252383 A1 | 04-10-2023 |
| | | US 2023308237 A1 | 28-09-2023 |
| | | US 2024089050 A1 | 14-03-2024 |
| | | WO 2022178074 A1 | 25-08-2022 |
| WO 2022238937 A1 | 17-11-2022 | CN 117296396 A | 26-12-2023 |
| | | EP 4338494 A1 | 20-03-2024 |
| | | JP 2024520190 A | 22-05-2024 |
| | | WO 2022238937 A1 | 17-11-2022 |

EPO FORM P0459

For more details about this annex : see Official Journal of the European Patent Office, No. 12/82